# EUROPEAN PATENT APPLICATION

(11) **EP 4 614 484 A1**
(43) Date of publication of application: **10.09.2025**
(21) Application number: 22964886.0
(22) Date of filing: 11.11.2022
(51) Int. Cl.: G09F 3/02

(54) **OPTICAL TRANSCEIVER, MICROWAVE SENSING APPARATUS COMPRISING SAME, METHOD, SYSTEM, AND STORAGE MEDIUM**

(71) Applicant: Wuhan Linptech Co., Ltd., Wuhan, Hubei 430000 (CN)
(72) Inventor: CHENG, Xiaoke, Wuhan, Hubei 430000 (CN)
(74) Representative: Chung, Hoi Kan
(86) International application number: PCT/CN2022/131529
(87) International publication number: WO 2024/098418

(57) **Abstract**

The present invention provides an optical transceiver, a microwave sensing apparatus including the same, a method, a system and a storage medium, wherein the microwave sensing apparatus includes: a communication module configured to obtain a selected instruction corresponding to different selected operations performed on at least one representation associated with sensing parameters on the display interface of the electronic device; and a sensing module directly or indirectly communicatively connected to the communication module and adapted to receive and execute the selected instructions sent by the communication module to change sensing parameters; wherein the sensing parameters are used to select at least one sub-sensing region; the sub-sensing region is associated with a target sensing region; and the communication module forms sensing results by detecting a moving human body within the target sensing region by the sensing module. The target sensing region of the microwave sensing apparatus provided by the present invention can be flexibly formed according to different selected operations received by the intelligent terminal.

## Description

### Technical Field

The present invention relates to the technical field of sensors, and more particularly to an optical transceiver and a microwave sensing apparatus comprising same, a method, a system, and a storage medium.

### Background Art

With the improvement of people's living standards, the demand for intelligent life is increasing. The sensing technology for moving objects in space in IoT technology is an important technology in the development of smart living, especially for the increasing demand for human presence detection. Only by obtaining accurate sensing results can reliable execution basis be provided for terminal devices in smart scenarios.

In existing related technologies, a microwave sensor emits a sensing beam in a set region, and then obtains a sensing result by detecting an echo fed back by a moving object. However, in the prior art, the sensing range of a microwave sensor is generally configured at the time of delivery. When the microwave sensor is installed at a station to be sensed, its sensing region will be determined accordingly, resulting in a relatively single and fixed sensing region that cannot meet diverse sensing requirements.

### Summary of the Invention

To overcome the problems in the prior art, the present invention provides an optical transceiver and a microwave sensing apparatus comprising same, a method, a system, and a storage medium.

According to a first aspect of the present invention, there is provided a microwave sensing apparatus adapted to establish a communication connection with an electronic device having a display interface by a designated network in a state in which the microwave sensing apparatus is communicatively connected to the designated network; the microwave sensing apparatus includes: a communication module configured to obtain a selected instruction corresponding to different selected operations performed on at least one representation associated with sensing parameters on the display interface of the electronic device;
a sensing module directly or indirectly communicatively connected to the communication module and adapted to receive and execute the selected instructions sent by the communication module to change sensing parameters; wherein the sensing parameters are used to select at least one sub-sensing region; the sub-sensing region is associated with a target sensing region, enabling the target sensing region to be flexibly formed based on different selected operations received by the electronic device; and the communication module forms sensing results by detecting a moving human body within the target sensing region by the sensing module.

According to a second aspect of the present invention, there is provided a microwave sensing method applied to a microwave sensing apparatus adapted to establish a communication connection with an electronic device having a display interface by a designated network in a state in which the microwave sensing apparatus is communicatively connected to the designated network; the microwave sensing method includes:
receiving and executing a selected instruction to change a sensing parameter; wherein the selected instruction is generated by the electronic device based on different selected operations performed on at least one representation associated with the sensing parameter displayed on the display interface thereof;
selecting at least one sub-sensing region based on the sensing parameters; wherein the sub-sensing region is associated with a target sensing region, enabling the target sensing region to be flexibly formed based on different selected operations received by the electronic device; and
forming sensing results by detecting a moving human body within the target sensing region.

According to a third aspect of the present invention, there is provided a microwave sensing apparatus, including:
a sensing module adapted to receive and execute a selected instruction to change a sensing parameter; wherein the sensing parameter is configured to select at least one sub-sensing region; and
a communication module adapted to generate the selected instruction in response to at least one trigger signal generated for at least one selected operation of an electronic device in a state of being communicatively connected to the electronic device, wherein the communication module is directly or indirectly electrically connected to the sensing module to send the selected instruction to the sensing module; wherein the sub-sensing region is associated with a target sensing region, so that the target sensing region can be flexibly formed according to different selected operations received by the electronic device, and a moving object in the target sensing region is detectable by the sensing module so as to form a sensing result.

According to a fourth aspect of the present invention, there is provided a microwave sensing method applied to a microwave sensing apparatus, the microwave sensing method including:
changing sensing parameters in response to at least one trigger signal produced by at least one selected operation performed on the electronic device when communicatively connected to the electronic device; wherein the sensing parameters are used to select at least one sub-sensing region; the sub-sensing region is associated with a target sensing region, enabling the target sensing region to be flexibly divided based on different selected operations received by the electronic device; and
forming sensing results by detecting a moving object within the target sensing region.

According to a fifth aspect of the present invention, there is provided an optical transceiver suitable applied to the microwave sensing apparatus according to the first aspect and its alternatives, or the microwave sensing apparatus according to the third aspect and its alternatives, the optical transceiver including:
a light-transmitting part configured to allow light to pass through, enabling light emitted by the microwave sensing apparatus in a first direction to pass from inside the microwave sensing apparatus to outside through the light-transmitting part, and light incident from outside the microwave sensing apparatus in a second direction to enter inside the microwave sensing apparatus through the light-transmitting part; and
a trigger part provided on the light-transmitting part and configured to trigger the microwave sensing apparatus in response to a first operating force.

According to a sixth aspect of the present invention, there is provided a microwave sensing apparatus including a memory and a processor;
the memory is configured to store code; and
the processor is configured to execute the code in the memory to implement the method according to the second aspect and its alternatives.

According to a seventh aspect of the present invention, there is provided a microwave sensing apparatus including a memory and a processor;
the memory is configured to store code; and
the processor is configured to execute the code in the memory to implement the method according to the fourth aspect and its alternatives.

According to an eighth aspect of the present invention, there is provided a control system based on a microwave sensing apparatus, including the microwave sensing apparatus according to the first aspect and its alternatives.

According to a ninth aspect of the present invention, there is provided a control system based on a microwave sensing apparatus, including the microwave sensing apparatus according to the third aspect and its alternatives.

According to a tenth aspect of the present invention, there is provided a storage medium having stored thereon a program which, when executed by a processor, implements the microwave sensing method according to the second aspect and its alternatives.

According to an eleventh aspect of the present invention, there is provided a storage medium having stored thereon a program, wherein the program, when executed by a processor, implements the microwave sensing method according to the fourth aspect and its alternatives.

Based on the optical transceiver and the microwave sensing apparatus, method, system, and storage medium comprising same as provided in the first to eleventh aspects above, the beneficial effects of the technical solutions provided by the embodiments of the present invention at least include the followings. The communication module establishes a communication connection with an electronic device and adjusts the sensing parameters of the sensing module based on selected operations received by the electronic device to adjust the target sensing region of the microwave sensing apparatus, thereby flexibly adjusting the target sensing region of the microwave sensing apparatus based on the electronic device, enabling the target sensing region to be flexibly changed according to different sensing range requirements, and improving the applicability of the microwave sensing apparatus.

It should be understood that the foregoing general description and the following detailed description are exemplary and explanatory only and are not restrictive of the present invention.

### Brief Description of the Drawings

To more clearly illustrate the technical solutions in the embodiments of the present invention or the prior art, the accompanying drawings required for describing the embodiments or the prior art will be briefly introduced below. The accompanying drawings incorporated in and constituting a part of this description illustrate embodiments consistent with the present application and, together with the description, serve to explain the principles of the present application. Obviously, the drawings in the following description are merely some embodiments of the present invention. For those of ordinary skill in the art, other drawings can be obtained based on these drawings without creative effort.
Fig. 1 is a schematic circuit structure diagram of a microwave sensing apparatus according to an embodiment of the present invention;
Fig. 2 is a schematic diagram of a communication connection between a communication module and an electronic device according to an embodiment of the present invention;
Fig. 3 is a schematic diagram illustrating an electronic device displaying a representation of maximum sensing distance adjustment on the display interface thereof according to an embodiment of the present invention;
Fig. 4 is a schematic diagram illustrating an electronic device displaying a representation of minimum sensing distance adjustment on the display interface thereof according to an embodiment of the present invention;
Fig. 5 is a schematic diagram illustrating an electronic device displaying representations of maximum and minimum sensing distance adjustments on the display interface thereof according to an embodiment of the present invention.
Fig. 6 is a schematic diagram illustrating an electronic device displaying a representation of target sensing region segment division adjustment on the display interface thereof according to an embodiment of the present invention;
Fig. 7 is a first schematic diagram of an interface after selection based on Fig. 6;
Fig. 8 is a schematic diagram of a target sensing region formed by sub-sensing regions corresponding to the selected segment range of Fig. 7 according to an embodiment of the present invention;
Fig. 9 is a second schematic diagram of an interface after selection based on Fig. 6 according to an embodiment of the present invention;
Fig. 10 is a further connection schematic diagram of the communication connection between the communication module and the electronic device based on Fig. 2;
Fig. 11 is a schematic diagram illustrating the first result displayed on the display interface of the electronic device according to an embodiment of the present invention;
Fig. 12 is a schematic diagram illustrating a representation of the second result formed on the display interface of the electronic device according to an embodiment of the present invention;
Fig. 13 is a further first schematic diagram of the circuit structure based on the microwave sensing apparatus of Fig. 1;
Fig. 14 is a schematic diagram illustrating the third result displayed on the display interface of the electronic device according to an embodiment of the present invention;
Fig. 15 is a further second schematic diagram of the circuit structure based on the microwave sensing apparatus of Fig. 1;
Fig. 16 is a further third schematic diagram of the circuit structure based on the microwave sensing apparatus of Fig. 1;
Fig. 17 is a schematic diagram illustrating the representation of illumination intensity formed on the display interface of the electronic device according to an embodiment of the present invention.
Fig. 18 is a schematic diagram of another communication connection between the communication module and the electronic device according to the present invention;
Fig. 19 is a schematic circuit structure diagram of a microwave sensing apparatus according to another embodiment of the present invention;
Fig. 20 is a schematic circuit structure diagram of a microwave sensing apparatus including a power management module according to an embodiment of the present invention;
Fig. 21 is a specific implementation circuit diagram of Fig. 20;
Fig. 22 is an exploded structural diagram of an embodiment of the microwave sensing apparatus provided by the present invention;
Fig. 23 is a structurally schematic diagram of the microwave sensing apparatus of Fig. 22;
Fig. 24 is a structurally schematic diagram of the housing and the optical transceiver (fully assembled) from another perspective of Fig. 22;
Fig. 25 is a structurally schematic diagram of the housing, communication module, and PCB board (fully assembled) from another perspective of Fig. 22;
Fig. 26 is a structurally schematic diagram of the sensing module of Fig. 22;
Fig. 27 is a structurally schematic diagram of the first movable member of Fig. 22;
Fig. 28 is a structurally schematic diagram of the second movable member of Fig. 22;
Fig. 29 is a structurally schematic diagram of the first movable member and the base (fully assembled) from another perspective of Fig. 22;
Fig. 30 is a schematic diagram of the microwave sensing apparatus of Fig. 22 in a first state (the angle between the first contact surface and the second contact surface is 0 degree);
Fig. 31 is a schematic diagram of the microwave sensing apparatus in Fig. 22 in a second state (the included angle between the first contact surface and the second contact surface is 90 degrees);
Fig. 32 is a schematic diagram of the microwave sensing apparatus in Fig. 22 in a second state (the included angle between the first contact surface and the second contact surface is 180 degrees);
Fig. 33 is a structurally exploded schematic diagram of another embodiment of the microwave sensing apparatus according to the present invention;
Fig. 34 is a structurally schematic diagram of the microwave sensing apparatus in Fig. 33;
Fig. 35 is a structurally exploded schematic diagram of yet another embodiment of the microwave sensing apparatus according to the present invention;
Fig. 36 is a structurally schematic diagram of the microwave sensing apparatus of Fig. 35;
Fig. 37 is a structurally schematic diagram of a portion of the microwave sensing apparatus in Fig. 35;
Fig. 38 is a structurally schematic diagram of the housing in Fig. 35 from another perspective;
Fig. 39 is a structurally schematic diagram of the microwave sensing apparatus in Fig. 35 in a mounted state (the included angle between the housing and the mounting bracket is 0 degree);
Fig. 40 is a structurally schematic diagram of the microwave sensing apparatus in Fig. 35 in another mounted state (the included angle between the housing and the mounting bracket is 30 degrees);
Fig. 41 is a structurally exploded schematic diagram of yet another embodiment of the microwave sensing apparatus according to the present invention;
Fig. 42 is a structurally schematic diagram of the housing and mounting bracket in Fig. 41 in the mounted state;
Fig. 43 is a structurally schematic diagram of the microwave sensing apparatus in Fig. 41 from another perspective;
Fig. 44 is a structurally exploded schematic diagram of yet another embodiment of the microwave sensing apparatus according to the present invention;
Fig. 45 is a structurally schematic diagram of an embodiment of the optical transceiver according to the present invention from one perspective;
Fig. 46 is a structurally schematic diagram of the optical transceiver in Fig. 44 from another perspective;
Fig. 47 is a schematic flow chart of a microwave sensing method according to an embodiment of the present invention;
Fig. 48 is a first schematic diagram showing a first result displayed on the display interface of the electronic device according to an embodiment of the present invention;
Fig. 49 is a first schematic diagram showing a second result displayed on the display interface of the electronic device according to an embodiment of the present invention;
Fig. 50 is a first schematic diagram showing a third result displayed on the display interface of the electronic device according to an embodiment of the present invention;
Fig. 51 is a schematic flow chart of a microwave sensing method according to another embodiment of the present invention;
Fig. 52 is a structurally schematic diagram of a microwave sensing apparatus according to another embodiment of the present invention; and
Fig. 53 is a structurally schematic diagram of a control system according to an embodiment of the present invention.

### Reference numerals:

100, microwave sensing apparatus; 1, housing; 11, first wall; 111, mounting hole; 112, fixing seat; 1121, pivot hole; 113, limiting rib; 114, heat-melting post; 12, USB socket; 13, limiting post; 14, first threaded post; 15, second wall; 16, third wall; 161, second through hole; 17, buckle; 18, pressing post; 2, optical transceiver; 21, light-transmitting portion; 211, indication region; 212, light sensing region; 213, light guide member; 2131, first end surface; 2132, second end surface; 2133, first light guide portion; 2134, second light guide part; 214, pressing portion; 215, bearing portion; 2151, first side surface; 21511, first bearing surface; 21512, second bearing surface; 22, trigger part; 221, trigger post; 23, elastic connection structure; 231, elastic connection arm; 24, rotating shaft; 25, decorative member; 251, shielding region; 252, light-transmitting region; 31, sensing module; 311, radar module; 3111, dielectric plate; 3112, radar chip; 3113, transmitting antenna; 3114, receiving antenna; 32, light sensing module; 33, light-emitting module; 34, switch module; 35, power management module; 4, detection switch; 5, communication module; 6, PCB plate; 61, limiting hole; 62, first screw; 63, gripping groove; 64, avoidance hole; 7, power supply unit; 71, power board; 72, wiring port; 73, USB module; 8, installation mark; 9, mounting bracket; 91, base; 911, resistance rib; 912, first magnetic member; 92, first movable member; 921, first contact surface; 923, bottom cover; 9231, accommodation hole; 924, surface cover; 925, silicone pad; 9251, avoidance through hole; 93, second movable member; 931, second contact surface; 94, first rotation shaft; 941, bolt; 942, limiting member; 943, nut; 95, first connecting portion; 951, mounting groove; 96, second connecting portion; 97, avoidance portion; 98, movable sleeve; 981, third rotation shaft; 982, spring clip; 99, mounting box; 991, engaging annular wall; 200, electronic device; 300, cloud server; 400, intelligent terminal; 500, gateway; 600, speaker device.

### Detailed Description of the Invention

The embodiments of the present invention will be described in detail below. When the following description refers to the accompanying drawings, unless otherwise indicated, the same numerals in different drawings represent the same or similar elements. Obviously, the described embodiments are only some embodiments of the present invention, not all of them. Based on the embodiments of the present invention, all other embodiments obtained by those of ordinary skill in the art without creative efforts shall fall within the protection scope of the present invention.

It should be understood that in the description of all embodiments of the present invention, the orientation or positional relationship indicated by terms such as "upper", "lower", "left", and "right" is based on the orientation or positional relationship shown in the drawings, and is only for the convenience of describing the present invention and simplifying the description, rather than indicating or implying that the referred device or element must have a specific orientation, be constructed and operated in a specific orientation, and thus should not be construed as limiting the present invention. The terms "first" and "second" are used for descriptive purposes only and cannot be understood as indicating or implying relative importance or implicitly indicating the number of technical features. Thus, features defined by "first" and "second" may explicitly or implicitly include one or more such features. Terms such as "coupling" and "connection" should be understood broadly, for example, they may be fixed connections, detachable connections, or integrated connections; they may be mechanical connections, electrical connections, or communication connections; they may be direct connections, or indirect connections through an intermediate medium to form a linkage relationship, or they may be internal connections between two elements or interaction relationships between two elements. For those of ordinary skill in the art, the specific meanings of the above terms in the present invention can be understood according to specific circumstances.

The microwave sensing apparatus obtains a sensing result indicating the presence or absence of a moving object by actively emitting detection waves outwards and detecting based on the echo fed back by the moving object. However, the inventors of the present invention have found that if a user has sensing range requirements for multiple application scenarios simultaneously (for example, the sensing range at a doorway is required to be smaller, while the sensing range in a living room is required to be larger), or the same application scenario requires different sensing ranges under different circumstances (for example, a living room equipped with a floor-sweeping robot is required to have a smaller sensing range when the robot is working to avoid sensing the robot on the ground, and a larger sensing range when the robot is not working to achieve a full coverage), a microwave sensing apparatus with a single sensing range cannot meet the requirements of multiple sensing ranges, and the users need to configure multiple microwave sensing apparatuses matching the corresponding application scenarios, which will undoubtedly affect the user experience of the product. Based on this, the inventors provide a microwave sensing apparatus, a method, a system, and a storage medium to solve the problem that existing microwave sensing apparatuses have single and fixed sensing regions and cannot meet diverse sensing requirements.

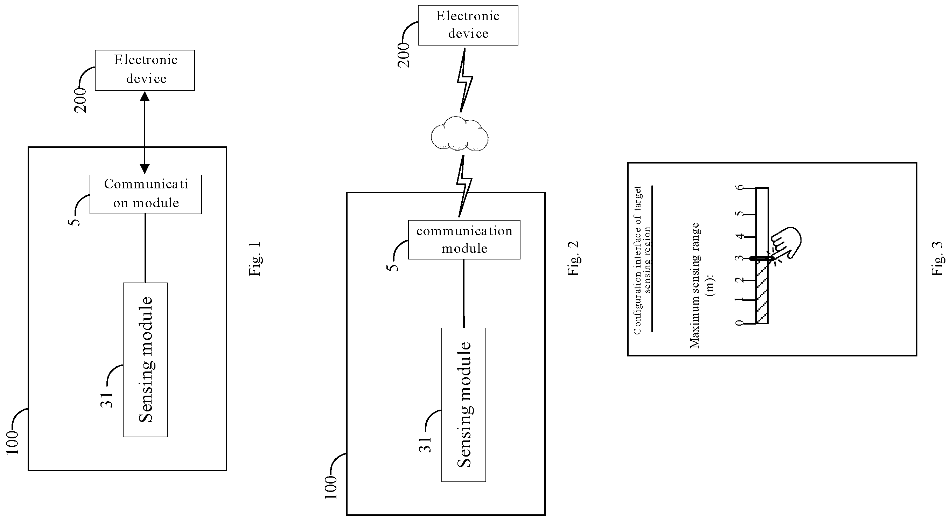

Referring to Fig. 1, a microwave sensing apparatus 100 proposed by the present invention is specifically illustrated. As shown in Fig. 1, a schematic circuit structure diagram of the microwave sensing apparatus 100 according to an embodiment of the present invention is shown. It can be seen that the microwave sensing apparatus 100 at least includes a sensing module 31, adapted to receive and execute a selected instruction to change sensing parameters; wherein the sensing parameters are used to select at least one sub-sensing region;
a communication module 5 adapted to generate the selected instruction in response to at least one trigger signal generated for at least one selected operation of an electronic device 200 in a state of being communicatively connected to the electronic device 200, wherein the communication module 5 is directly or indirectly electrically connected to the sensing module 31 to send the selected instruction to the sensing module 31; wherein the sub-sensing region is associated with a target sensing region, so that the target sensing region can be flexibly formed according to different selected operations received by the electronic device 200, and a moving object in the target sensing region is detectable by the sensing module 31 so as to form a sensing result.

Here, the trigger signal should be understood as any electrical signal that can trigger the communication module 5 to generate the selected instruction, such as a wirelessly transmitted control message or a wired level signal. The selected operation should be understood as a physical operation or a virtual operation, which can be a single operation or a series of related operations. Therefore, the trigger signal can be generated by a single selected operation or jointly output by multiple related selected operations. It should be noted that regardless of the form of the selected operation and the trigger signal, it does not affect the implementation of this embodiment and thus should not be used to limit the protection scope of the present invention.

Based on the above technical solution, it can be seen that in the embodiment of the present invention, the communication module 5 establishes a communication connection with an electronic device 200 and adjusts the sensing parameters of the sensing module 31 based on the selected operation received by the electronic device 200 to adjust the target sensing region of the microwave sensing apparatus 100, thereby flexibly adjusting the target sensing region of the microwave sensing apparatus 100 based on the electronic device 200, enabling the target sensing region to be flexibly changed based on different sensing range requirements, and improving the applicability of the microwave sensing apparatus 100.

It should be further noted that the sub-sensing region is a sensing region defined by the sensing parameters within the actual sensing region of the sensing module 31, and the actual sensing region is the actual region effectively covered by the detection waves (such as radar electromagnetic waves) of the sensing module 31. In one method of forming the sub-sensing regions, the sensing module 31 divides its detectable actual sensing region into multiple sequentially connected sub-sensing regions and forms sensing parameters characterizing each sub-sensing region, so that the communication module 5 can select different sub-sensing regions by configuring the sensing module 31 with different sensing parameters. The sensing parameters may specifically characterize the position values (such as boundary values, i.e., maximum sensing distance values and/or minimum sensing distance values) of each sub-sensing region.

In one example, the sensing parameters include a maximum sensing distance value to define the maximum sensing distance of a sub-sensing region. The sensing module 31 is further configured to change the maximum sensing distance value based on a selected instruction, so that the maximum sensing distance of a target sensing region including the sub-sensing region can be flexibly set. In this example, the communication module 5 can control the sensing module 31 to adjust the maximum sensing distance in the sensing parameters based on the selected operation of the electronic device 200, so that the maximum sensing distance of the target sensing region of the microwave sensing apparatus 100 can be flexibly set, facilitating the modification of the coverage of the target sensing region starting from the microwave sensing apparatus by changing the maximum sensing distance, thereby adapting to different sensing distance requirements.

In another example, the sensing parameters include a minimum sensing distance value to define the minimum sensing distance of a sub-sensing region. The sensing module 31 is further configured to change the minimum sensing distance value based on a selected instruction, so that the minimum sensing distance of a target sensing region including the sub-sensing region can be flexibly set. In this example, the communication module 5 can control the sensing module 31 to adjust the minimum sensing distance in the sensing parameters based on the selected operation of the electronic device 200, so that the minimum sensing distance of the target sensing region of the microwave sensing apparatus 100 can be flexibly set.

In yet another example, the sensing parameters include at least one segment range starting from a first distance value and ending at a second distance value, for instructing the sensing module 31 to divide a sub-sensing region having the first distance value as a minimum sensing distance boundary value and the second distance value as a maximum sensing distance boundary value; where the first distance value is less than the second distance value and greater than zero; the communication module 5 is further configured to enable the sensing module 31 to vary the first distance value and/or the second distance value based on a selected instruction, thereby changing the minimum sensing distance and/or maximum sensing distance of a target sensing region including the sub-sensing region. In this example, the communication module 5 can control the sensing module 31 to adjust the starting point and/or ending point of the segment range in the sensing parameters based on the selected operation of the electronic device 200, so that the minimum sensing distance and/or maximum sensing distance of the target sensing region of the microwave sensing apparatus 100 can be flexibly set. For example, in some use scenarios, the mounting position of the microwave sensing apparatus 100 is not the region to be sensed, and the region to be sensed is not convenient for mounting the microwave sensing apparatus 100. In this case, it is desirable to set the region adjacent to the mounting position of the microwave sensing apparatus 100 as a non-sensing region, while the actual sensing region of the microwave sensing apparatus 100 can cover the region to be sensed. Then, in the actual sensing region of the microwave sensing apparatus 100, the sub-sensing region corresponding to the region to be sensed is selected as the target sensing region. At this time, it is necessary to exclude the region adjacent to the mounting position of the microwave sensing apparatus 100 by setting the minimum sensing distance, thereby forming the target sensing region capable of covering the region to be sensed by defining a sub-sensing region by the minimum sensing distance and the maximum sensing distance.

In a further example based on the above example, the sensing parameters include a plurality of sets of designated segment ranges, wherein each of the segment ranges is configured to instruct the sensing module 31 to divide a sub-sensing region having a minimum sensing distance value at a starting point of the segment range and a maximum sensing distance value at an ending point of the segment range; the communication module 5 is further configured to enable the sensing module 31 to select, based on a selected instruction, one or more sets of sub-sensing regions corresponding to the segment range to which the selected instruction is directed, so that the target sensing region can be precisely set according to the different sub-sensing regions selected.

It can be understood that, based on the technical solution provided in the above embodiment, users can form a plurality of sub-sensing regions with their respective segment ranges (for example, dividing the entire region of [0 m, 6 m] into three sub-sensing regions corresponding to segment ranges of [0 m, 2 m], [2 m, 4 m], and [4 m, 6 m]) by segmenting an entire region (which can be the actual sensing region or a region divided from the actual sensing region). This allows users to select the sub-sensing regions corresponding to the segment ranges based on the position of the region to be sensed, thereby forming a precise target sensing region. Defining each sub-sensing region by the segment range only requires setting the minimum and maximum distance boundaries of each sub-sensing region. Compared to dividing sub-sensing regions using coordinate values, angle values, etc., the boundary values of each sub-sensing region in the solution provided in this embodiment can be easily divided based on the distance values detected by the sensing module 31. The division of each sub-sensing region in this embodiment can be achieved by the sensing module 31 with the basic distance detection function, without requiring a powerful sensing module 31 (e.g., with the angle detection function), thereby reducing the overall manufacturing cost of the microwave sensing apparatus 100. In addition, for a sensing module, the distance detection is easier and more accurate than detecting angles or coordinates. Therefore, the division of each sub-region based on different distance values in this embodiment is more accurate than other methods such as coordinate values or angle values.

Furthermore, the inventors of the present invention have found that in daily use scenarios, the region to be sensed is often not a continuous range but may consist of a plurality of discrete ranges. If a large sensing region is used to cover the plurality of discrete regions to be sensed, the non-sensing regions between two adjacent regions to be sensed will also be detected, making it impossible to accurately cover the regions to be sensed. This also increases the overall power consumption of the product due to unnecessary coverage of non-detection regions. Based on this, a specific implementation of the above example provides a related solution to this technical problem. Specifically, in this embodiment, the plurality of sets of designated segment ranges can be combined to form a complete range, and the plurality of sets of segment ranges do not completely overlap. Thus, the sensing module 31 can select a plurality of non-overlapping segment ranges according to a selected instruction, allowing the target sensing region to be combined in a discontinuous manner by a plurality of discontinuous sub-sensing regions. Therefore, based on the technical solution provided in this embodiment, a discontinuous target sensing region can be formed by the users by discontinuous selection of different sub-sensing regions corresponding to a plurality of discontinuous regions to be sensed, thereby improving the accuracy of the target sensing region's coverage of each region to be sensed. For example, in some application scenarios such as an office setting, the regions where workstations are located are the regions to be sensed. After detecting moving objects at each workstation, some electrical devices (e.g., turning on lights) can be activated. The corridors between workstations are non-sensing regions. If an existing microwave sensing apparatus with only overall region sensing function is used to cover multiple workstations, the corridor regions between adjacent workstations will inevitably be covered, resulting in inaccurate coverage of the regions to be sensed. However, based on the technical solution disclosed in this embodiment, the target sensing region can be formed by discontinuous selection of the segment ranges corresponding to the sub-sensing regions where each workstation is located, thereby excluding non-sensing regions such as corridors and achieving precise coverage of each workstation region by the target sensing region.

Referring to Fig. 2, a specific example of a communication connection between the communication module 5 and the electronic device 200 is illustrated. In the embodiment shown in Fig. 2, the communication module 5 is adapted to establish a communication connection with an electronic device 200 having a display interface by a designated network in a state of being communicatively connected to the designated network, thereby acquiring a selected instruction corresponding to the selected operation according to at least one different selected operation associated with a representation of the sensing parameter with respect to a display interface of the electronic device 200. It should be noted that the term "representation" in this embodiment and the following refers to any user-interactive graphical display interface object optionally displayed on the display interface of the electronic device 200. For example, images (e.g., curves, icons), sliders, and text (e.g., words, hyperlinks) in Figs. 3-7, 9, 11, 12, and 14 of the drawings optionally each constitute corresponding representations. The designated network can be a local area network established based on a gateway device. The communication module 5 can access the designated network via a gateway and/or router using one or more wireless methods such as Zigbee, WiFi, or BLE Mesh, or via wired methods such as PLC (Power Line Communication). In one example, the communication module 5 is connected to a local area network constructed by a Bluetooth gateway via the BLE Mesh protocol. All electronic devices 200 accessing this local area network are stored in the device list of the Bluetooth gateway. The communication module 5 can establish a communication interaction relationship with an electronic device 200 connected to this local area network by the Bluetooth gateway. The electronic device 200 can be, for example, a smart device with a display interface and human-computer interaction functions, such as a mobile phone, a tablet computer, a smartwatch, or smart glasses. In a specific example where the electronic device 200 is a mobile phone, the mobile phone runs an application program corresponding to the microwave sensing apparatus. The mobile phone binds the microwave sensing apparatus under the account of the application program via Bluetooth or WiFi, enabling operation of the microwave sensing apparatus by the app. Additionally, the mobile phone can instruct the communication module of the microwave sensing apparatus to join a designated network. After joining the network, the microwave sensing apparatus can receive trigger signals sent by the mobile phone. The mobile phone sends corresponding trigger signals to the communication module of the microwave sensing apparatus based on selected operations on the app interface displayed on the display interface thereof.

Thus, based on the technical solution provided in this embodiment, the electronic device 200 has a display interface. Users can connect the electronic device 200 (e.g., a smartphone) and the microwave sensing apparatus 100 to the same designated network, and then conveniently set the target sensing region of the microwave sensing apparatus 100 by the display interface on the electronic device 200. The visual selected operation method is user-friendly, allowing the users to make more accurate divisions of the target sensing region for specific application scenarios.

As shown in Fig. 3, a specific application example of the above embodiment is illustrated. Fig. 3 shows a display interface of an electronic device 200 connected to the communication module 5, with a representation for adjusting the maximum sensing distance. The electronic device 200 can generate a corresponding trigger signal based on the user's selected operation on the representation of the maximum sensing distance, and then send the trigger signal to the communication module 5 via the designated network to trigger the communication module 5 to generate a selected instruction for controlling the sensing module 31 to adjust the maximum sensing distance.

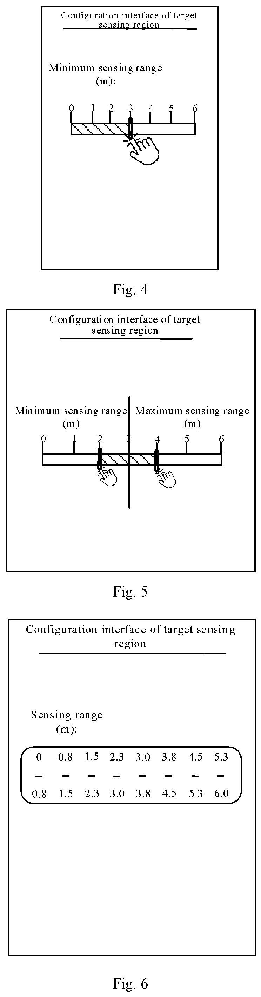

As shown in Fig. 4, another specific application example of the above embodiment is illustrated. Fig. 4 shows a display interface of an electronic device 200 connected to the communication module 5, with a representation for adjusting the minimum sensing distance. The electronic device 200 can generate a corresponding trigger signal based on the user's selected operation on the representation of the minimum sensing distance, and then send the trigger signal to the communication module 5 via the designated network to trigger the communication module 5 to generate a selected instruction for controlling the sensing module 31 to adjust the minimum sensing distance.

As shown in Fig. 5, yet another specific application example of the above embodiment is illustrated. Fig. 5 shows a display interface of an electronic device 200 connected to the communication module 5, with representations for adjusting both the minimum and maximum sensing distances. The electronic device 200 can generate a corresponding trigger signal based on the user's selected operation on the representations of the minimum and/or maximum sensing distances, and then send the trigger signal to the communication module 5 via the designated network to trigger the communication module 5 to generate a selected instruction for controlling the sensing module 31 to adjust the minimum and/or maximum sensing distances.

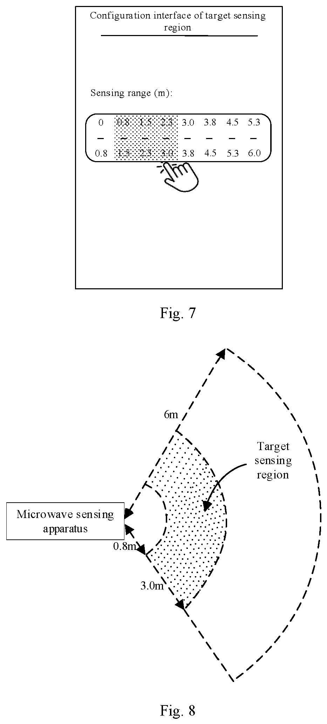

As shown in Fig. 6, a further specific application example of the above embodiment is illustrated. Fig. 6 shows a display interface of an electronic device 200 communicatively connected to the communication module 5 of the microwave sensing apparatus 100, with representations of eight groups of designated segment ranges: [0, 0.8], [0.8, 1.5], [1.5, 2.3], [2.3, 3.0], [3.0, 3.8], [3.8, 4.5], [4.5, 5.3], [5.3, 6.0]. Each segment range is used to instruct the sensing module 31 to divide a sub-sensing region with the starting point of the segment range as the minimum sensing distance value and the ending point as the maximum sensing distance value. For example, the sub-sensing region divided by the segment range [1.5, 2.3] has a minimum sensing distance value of 1.5 m and a maximum sensing distance value of 2.3 m. Other segment ranges can be understood similarly. The electronic device 200 generates a trigger signal based on the user's selected operation on the representation of at least one of the eight groups of segment ranges on the display interface thereof. The trigger signal is used to trigger the communication module 5 to generate a corresponding selected instruction, thereby configuring the target sensing region of the sensing module 31 to match the sensing regions corresponding to the selected segment ranges based on the selected instruction. For example, as shown in Fig. 7, when segment ranges [0.8, 1.5], [1.5, 2.3], and [2.3, 3.0] are selected on the basis of Fig. 6, a precise target sensing region can be formed correspondingly as shown in Fig. 8. It should be noted that the target sensing region shown in Fig. 8 is a schematic region for ease of understanding and does not represent the actual sensing region of the microwave sensing apparatus.

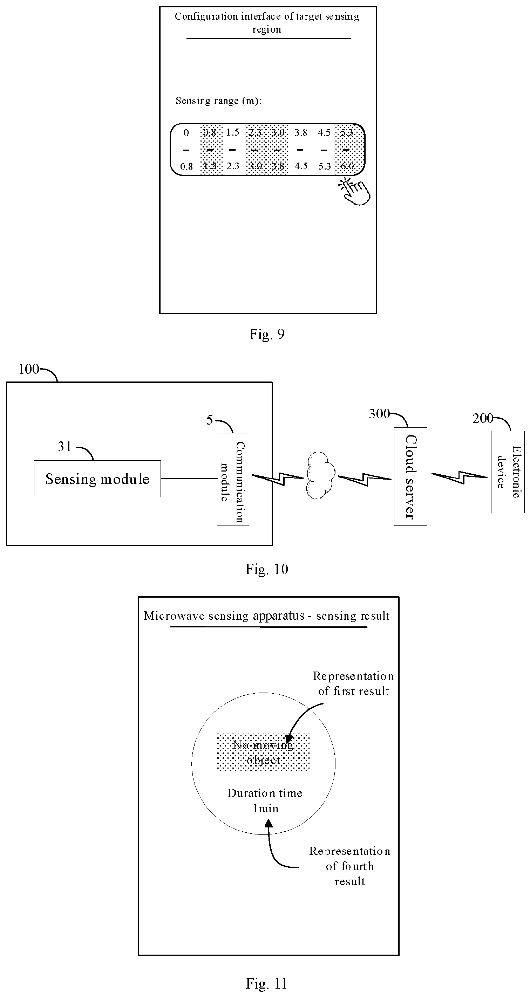

Further, the display interface of the electronic device 200 as shown in Fig. 7 has eight groups of specified segment ranges which in turn combine to form a complete range [0, 6] which characterizes a complete region with 0 m as the minimum sensing boundary and 6 m as the maximum sensing boundary, which is included in the actual sensing region of the sensing module 31. Furthermore, since the sub-sensing regions corresponding to the sensing ranges of each group do not completely coincide, the user can set a discontinuous target sensing region based on the discontinuous selected operation for the segment ranges of the plurality of groups. For example, Fig. 9 shows four segment ranges [0.8, 1.5], [2.3, 3.0], [3.0, 3.8] and [5.3, 6.0] selected on the basis of Fig. 6, where the segment ranges [0.8, 1.5] and [2.3, 3.0] are skipped, and the segment ranges [3.0, 3.8] and [5.3, 6.0] are also skipped, so that three sub-sensing regions with sensing ranges of 0.8 m-1.5 m, 2.3 m-3.8 m and 5.3 m-6.0 m can be formed, respectively. In turn, the three sub-sensing regions combine together to form a discontinuous target sensing region. It should be understood that the segment skipping arrangement as shown in Fig. 9 is an illustrative example. In practical use, a user can freely select various segment ranges based on specific application requirements so as to form various combinations of sub-sensing regions, thereby forming a target sensing region for satisfying various sensing requirements.

Based on the above description, it can be understood that, based on the technical solution provided by this embodiment, a user can precisely select a desired target sensing region based on a selected operation for a series of segment ranges visually displayed on the electronic device 200, so that the target sensing region of the microwave sensing apparatus 100 can be precisely defined based on a user's setting.

As shown in Fig. 10, in some embodiments, the communication module 5 is further adapted to, in a state of being communicatively connected to a designated network, be communicatively connected to a cloud server 300 by the designated network, so as to be able to generate a corresponding selected instruction according to a control message issued by the cloud server 300; and the control messages are generated and uploaded by the electronic device 200 based on different selected operations for which the display interface has at least one representation associated with the sensing parameter. Furthermore, according to this embodiment, the electronic device 200 can remotely set a target sensing region of the microwave sensing apparatus 100 by the cloud server 300.

Furthermore, it should be noted that the sensing result should be understood as one or more of a plurality of sensing results, i.e., the communication module 5 can output one or more of a plurality of sensing results at a time based on the processing of the detection result by the sensing module 31. Furthermore, one or more of a plurality of sensing results may also be in the sensing results sent out, and the plurality of sensing results may be sent out via one control message, or may be sent out via multiple control messages respectively. With regard to various sensing results, the embodiment described later provides a specific technical solution of some of the sensing results.

In some embodiments of the present invention, the communication module 5 is further configured to send a first result out, in a case that the sensing result within a specified time is the first result of a plurality of sensing results, to enable the electronic device 200 to form a representation characterizing the first result on the display interface thereof in response to the first result; the specified time is set by the electronic device 200 according to a setting operation received by the display interface thereof; and the first result characterizes that no moving object is detected within the target sensing region. As shown in Fig. 11, it shows a representation of the first result being formed on a display interface of the electronic device 200. In one specific example, when the microwave sensing apparatus 100 is used to detect the presence of a person in an environment, the display interface of the electronic device 200 will display "No person" when the sensing result is the first result, for easy viewing by a user. Further, in the present embodiment, the communication module 5 will not upload it immediately when detecting that the sensing result is the first result, but will not upload it until a specified time is delayed and the first result is continuously detected for a specified time, so as to reduce the amount of data to be uploaded. It should be understood that the first result is indicative of "no person". In some application scenarios, the no-person time will be much greater than the person time. Thus, if the "no person" sensing result is reported frequently, the data uploading pressure of the microwave sensing apparatus 100 will be high, and the electronic device 200 will also receive data too frequently, so that the delayed reporting (or conditional reporting) of the "no person" sensing result provided in the present embodiment can effectively solve this problem.

Further, in an embodiment, the communication module 5 is further configured and adapted to calculate a duration time of a first result to form a fourth result sent out when the sensing result is a first result of the plurality of sensing results, such that the electronic device 200 can form a representation characterizing the fourth result on the display interface thereof in response to the fourth result. As shown in Fig. 11, the display interface of the electronic device 200 shows a representation of the fourth result formed on the display interface of the electronic device 200. When the sensing result is the first result, the display interface of the electronic device 200 displays the first result for a duration time to form a representation of the fourth result that is convenient for a user to view. Furthermore, in some embodiments, when the fourth result accumulates to a certain length of time, the update will be stopped. For example, when the current fourth result is "no person, duration time of 4 hours", the update of the representation of the fourth result on the display interface is stopped, so as to prevent unnecessary data reporting caused by a long-time non-triggering state in the region to be detected.

In addition, in this embodiment, the communication module 5 is further configured to execute a command from an application to change the specified time. The application may be an application program (app) running on an intelligent terminal (such as the electronic device 200). In other words, a user can adjust the specified time by any intelligent terminal running a related application and establishing a communication connection with the communication module 5, so as to change the delayed reporting time of the first result, making the update rule of the first result on the display interface of the electronic device 200 applicable to specific application scenarios.

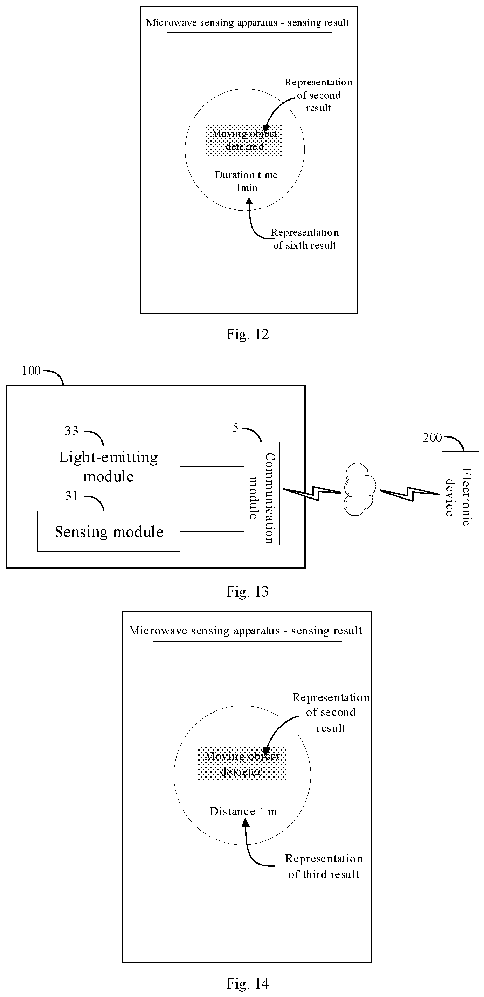

In some embodiments of the present invention, the communication module 5 is further configured to immediately send a second result out when the sensing result is a second result of a plurality of sensing results, to enable the electronic device 200 to form a representation characterizing the second result on the display interface thereof in response to the second result. The second result characterizes that the moving object is detected within the target sensing region. Fig. 12 shows a representation of the second result being formed on the display interface of the electronic device 200. In one specific example, when the microwave sensing apparatus 100 is configured to detect the presence of a person in an environment, and the sensing result is the second result, the display interface of the electronic device 200 will display "Occupied" for easy viewing by the user. Furthermore, in the present embodiment, the communication module 5 will upload the sensing result immediately when detecting that the sensing result is the second result, so as to facilitate the user to immediately master the triggering result of the moving object in the target sensing region, or upload the sensing result immediately when the sensing result is linked with other devices, so as to enable the linked devices to respond quickly and reduce the delay.

In a particular embodiment, the communication module 5 is further configured and adapted to calculate a duration time of a second result to form a sixth result to be sent out when the sensing result is a second result of the plurality of sensing results, such that the electronic device 200 can form, in response to the sixth result, a representation characterizing the sixth result via the display interface thereof. As shown in Fig. 12, a representation of the sixth result being formed on a display interface of the electronic device 200. When the sensing result is a second result, the display interface of the electronic device 200 displays the second result for a duration time to form a representation of the sixth result which is convenient for a user to view. Furthermore, in some embodiments, when the sixth result accumulates to a certain length of time, the update will be stopped. For example, when the current sixth result is "occupied, duration time of 4 hours", the update of the representation of the sixth result on the display interface is stopped, so as to prevent unnecessary data reporting caused by the triggering state for a long time in the region to be detected. Further, referring to Fig. 13, in some embodiments, in order to visually display the triggering state of the second result, the microwave sensing apparatus 100 further includes a light-emitting module 33 electrically connected to the communication module 5. The communication module 5 is further configured to control the light-emitting module 33 to emit an indication signal of a specified rule when the sensing result is the second result, thereby visually informing the user that the second result is triggered by the indication signal of the specified rule. In one example, the indication signal of the specified rule includes a light signal of a specified color flashed at a frequency of a certain period (for example, a blue light is flashed at an interval of 5 s), and a user can know that the second result is triggered when he or she sees that the flashing light signal is emitted from the microwave sensing apparatus 100.

In some embodiments of the present invention, the sensing module 31 is further configured to detect a position parameter of a moving object within the target sensing region, and the communication module 5 obtains the position parameter and performs corresponding processing to form a third result of a plurality of sensing results. Further, based on this embodiment, the communication module 5 can acquire the distance value of the moving object within the target sensing region. Further, in some embodiments, the communication module 5 is further configured to be adapted to periodically send a third result of the plurality of sensing results out when the sensing result is the second result, to enable the electronic device 200 to form a representation characterizing the third result on the display interface thereof in response to the third result. The third result characterizes the distance between the moving object within the target sensing region and the sensing module 31. Fig. 14 shows a representation of the third result being formed on the display interface of the electronic device 200. In one specific example, when the microwave sensing apparatus 100 is used to detect the presence of a person in an environment, and the sensing result is the second result, the display interface of the electronic device 200 will display a "distance value" for easy viewing by the user.

Further, in some embodiments, the communication module 5 is further configured to determine a movement direction of a moving object within a target sensing region based on a trend of change of the third result over a specified period of time. The movement direction includes both moving away and closer. In a specific example, the communication module 5 determines the movement direction of the moving object by analyzing the distance value (third result) of the moving object within 1 second, and determines that the moving object approaches in the direction towards the microwave sensing apparatus 100 if the distance value obtained within 1 second is gradually decreased, and otherwise determines that the moving object is moved away from the microwave sensing apparatus 100.

Further, in some embodiments, the communication module 5 is also configured to set a specified boundary, and can determine whether the moving object crosses the specified boundary according to the third result. For example, if the specified boundary is a boundary with a distance value of 5 meters, the third result determines that the moving object has crossed the specified boundary if the distance value characterized in the specified period covers the 5-meter boundary. Furthermore, based on the determination of whether the moving object crosses the specified boundary and the determination of the movement direction of the moving object, the communication module 5 can form a fifth result of a plurality of sensing results, the fifth result characterizing that the moving object within the target sensing region crosses the specified boundary in a manner of moving closer and away within the target sensing region. Specifically, the communication module 5 is further configured to send out the fifth result when the sensing result is the fifth result of a plurality of sensing results, so that the electronic device 200 can form a representation characterizing the fifth result on the display interface thereof in response to the fifth result. In a specific example, when the microwave sensing apparatus 100 is used to detect the presence of a person in an environment, and the sensing result is the fifth result, the "someone approaching" displayed on the display interface of the electronic device 200 indicates that the moving object crosses the specified boundary in an approaching manner within the target sensing region. The "someone departing" displayed on the display interface of the electronic device 200 indicates that the moving object crosses the specified boundary in a departing manner within the target sensing region, facilitating user viewing and performing various intelligent linkages based on the fifth result.

In addition, to maximize the accuracy of the fifth result and eliminate interference, an embodiment of the present invention provides a corresponding technical solution. In this embodiment, a left boundary and a right boundary of a preset interval are set based on the specified boundary, where the left boundary equals the specified boundary minus the preset interval, and the right boundary equals the specified boundary plus the preset interval. Thus, "someone approaching" is determined when the moving object crosses the left boundary in an approaching manner, and "someone departing" is determined when the moving object approaches the right boundary in a departing manner. Based on this solution, interference caused by the specified boundary being uniquely determined can be prevented.

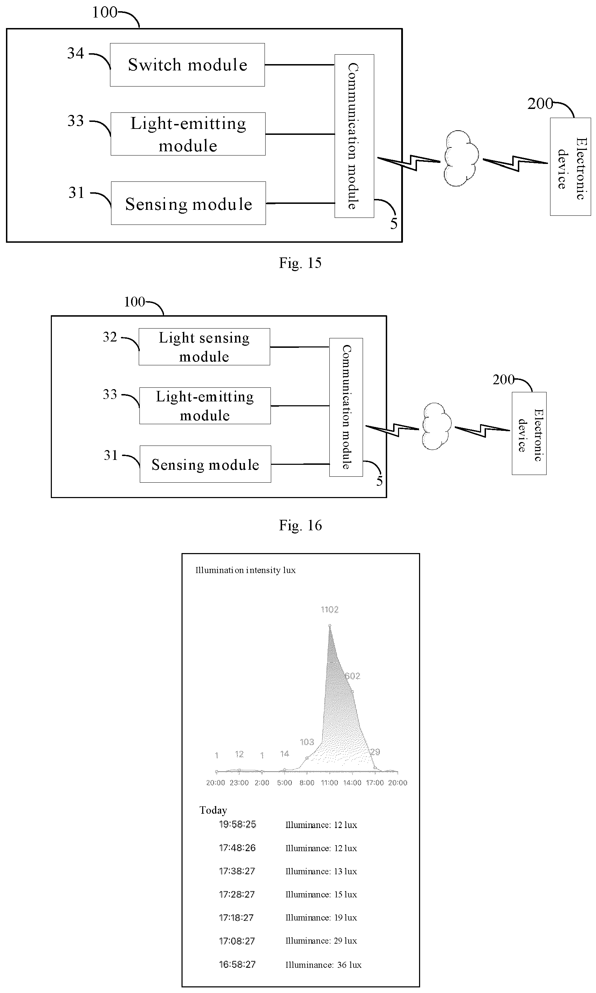

Similarly, the communication module 5 is further configured to execute a command from an application program to change the specified boundary. The application may be an application program (app) running on an intelligent terminal (such as the electronic device 200). In other words, the user can adjust the specified boundary via any intelligent terminal running the relevant application and establishing a communication connection with the communication module 5, thereby changing the triggering condition of the fifth result to suit different application scenarios. In the embodiment shown in Fig. 15, the microwave sensing apparatus 100 further includes at least one switch module 34 for switching on/off a power supply circuit of an external electrical device. It is electrically connected to the communication module 5 to be switched on or off under the control of the communication module 5. The communication module 5 is further configured to control the switch module 34 to switch on or off based on the sensing result according to a preset control logic, thereby controlling the power supply of the electrical device. In a specific example, the switch module 34 includes a relay electrically connected to the power supply circuit of an external electrical device to control the power supply of the electrical device to be turned on or off under the control of the communication module 5. Of course, the switch module 34 can also be implemented in other ways, not limited to this.

Additionally, to meet increasingly complex intelligent scene linkage requirements, an embodiment of the present invention provides a technical solution for diversified intelligent scene settings based on the communication module 5 of the microwave sensing apparatus 100 being connected to the designated network. Specifically, the communication module 5 is further configured to report the sensing result via the designated network in a state of being connected to the designated network, so that a gateway device and/or a cloud server 300 connected to the designated network can receive the sensing result and control a defined control result to be executed according to a target control relationship matching the sensing result in at least one pre-set control relationship; the control relationship defines a mapping relationship between at least one of a plurality of sensing results and at least one control result; and the control result is an executable function of one controlled device connected to the designated network. The controlled device may be, for example, any or a combination of a smart light, a smart speaker, a smart air conditioner, etc. Thus, based on the technical solution provided by this embodiment, the present invention can achieve diverse and complex intelligent linkage requirements by freely defining control relationships between various sensing results and executable functions of controlled devices connected to the designated network. The control result may be an executable function of any one or more controlled devices connected to the designated network, including, for example, turning an electrical device on or off. In a specific example, the electronic device 200 is a mobile phone. After connecting to the designated network where the microwave sensing apparatus is located, any smart device bound to the mobile phone's app account can be selected to form the control relationship. The user can freely select relevant mapping relationships between each sensing result of the microwave sensing apparatus and executable functions of each smart device via the display interface of the electronic device 200 to determine the control relationship.

In some embodiments, the control result may also include changing the indication lamp signal of the microwave sensing apparatus 100. Thus, the microwave sensing apparatus 100 can link its own indication lamp signal while linking external electrical devices. For example, when the microwave sensing apparatus 100 detects a moving object, it turns on the corresponding light and turns off its own indication lamp. When no moving object is detected, it turns off the corresponding light and turns on its own indication lamp, minimizing unnecessary illumination of the indication lamp of the microwave sensing apparatus 100.

Additionally, the inventors found that in daily intelligent scenarios, the illuminance parameter is also an important basis for linkage conditions. For example, in a smart light-on scenario, setting the microwave sensing apparatus 100 to turn on the light when detecting a person in the target sensing region would cause the light to turn on even during bright daylight, wasting electricity. Based on this, this embodiment further proposes a technical solution to address related issues. Referring to Fig. 16, the microwave sensing apparatus 100 further includes a light sensing module 32 electrically connected to the communication module 5 for detecting illumination intensity. Thus, the communication module 5 can detect the current illumination intensity via the light sensing module 32 and send the detected illumination intensity to form a trigger condition for the control result in the control relationship.

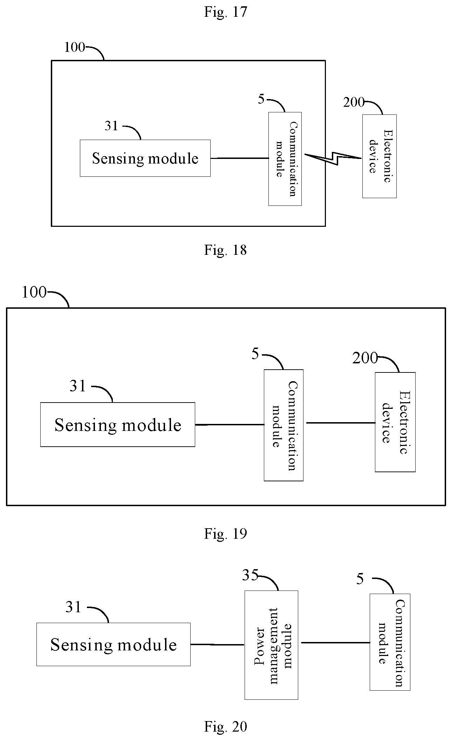

Further, based on the technical solution provided by the above embodiments, in some embodiments, the communication module 5 is further configured to periodically acquire illumination intensity data via the light sensing module 32 and upload it, enabling the electronic device 200 to respond to the illumination intensity data and form a representation associated with the illumination intensity data on the display interface thereof Fig. 17 shows a representation of the illumination intensity on the display interface of the electronic device 200 in a specific example. As seen, the illumination intensity data for each time period is fitted to form a fitting curve, allowing users to intuitively view historical illumination intensity data and find reference points for setting control relationships in intelligent scenarios based on illumination intensity. Specifically, the communication module 5 is further configured to report the illumination intensity via the designated network when connected to it, enabling a gateway device and/or cloud server 300 connected to the designated network to receive the illumination intensity data and execute a defined control result according to a target control relationship matching the illumination intensity among at least one preset control relationship. The control relationship defines a mapping relationship between illumination intensity of at least one specified condition and at least one control result. The control result is an executable function of a controlled device connected to the designated network. The control relationship and control result in this embodiment can be understood with reference to the above embodiment and are not detailed here. The difference is that the trigger condition for intelligent scenarios in this embodiment is illumination intensity. Users can set reasonable mapping relationships based on illumination intensity values from each time period in the fitting curve, ensuring that the control results are executed more appropriately. For example, in a smart light-on scenario, if the microwave sensing apparatus 100 is set to turn on the light when detecting a person in the target sensing region and the illumination intensity is below 100 lux, it ensures that the light won't turn on during bright daylight even if a person is detected, but only when ambient light falls below 100 lux and becomes darker, avoiding energy waste.

Additionally, in some embodiments, to optimize the amount of illumination intensity data reported, the communication module 5 is further configured to upload acquired illumination intensity data at predetermined intervals, or upload the acquired illumination intensity data when the change between two consecutive acquisitions exceeds a specified threshold, enabling the electronic device 200 to respond to the illumination intensity data and form a representation associated with the illumination intensity data on the display interface thereof. Thus, based on this solution, the illumination intensity data is only reported when changes exceed a specified threshold or at predetermined intervals, not in real-time, significantly reducing data reporting when illumination intensity changes are minimal. As shown in Fig. 13, the light-emitting module 33 is electrically connected to the communication module 5 to emit an indication signal indicating the working state of the microwave sensing apparatus 100 under its control. The communication module 5 is further adapted to turn off the indication lamp in the light-emitting module 33 when acquiring illumination intensity via the light sensing module 32. In other words, in this embodiment, the light sensing module 32 collects illumination intensity data and the light-emitting module 33 illuminates the indication lamp at intervals to prevent the indication lamp from affecting the accuracy of illumination intensity data during collection.

Further, the light-emitting module 33 includes an indication lamp. Similar to the above embodiment, the control result also includes changing the signal emitted by the indication lamp, allowing the microwave sensing apparatus 100 to link its own indication lamp signal while linking external electrical devices.

Similarly, as shown in Fig. 15, the microwave sensing apparatus 100 further includes at least one switch module 34 for switching on/off a power supply circuit of an external electrical device. It is electrically connected to the communication module 5 to be turned on or off under the control of the communication module 5. The communication module 5 is further configured to control the switch-on or switch-off of the switch module 34 with preset control logic based on the illumination intensity to control the power supply of the electrical device. The preset control logic may, for example, be turning on the electrical device when the illumination intensity is sensed to be lower than a preset value (e.g., turning on a lamp for illumination when the illumination intensity is lower than 500 lux), and turning off the electrical device otherwise.

Further, in a specific example, the switch module 34 includes a relay electrically connected to the power supply circuit of an external electrical device to control the power supply of the electrical device to be turned on or off under the control of the communication module 5.

The light sensing module 32 in the above-mentioned embodiment specifically includes a visible light photoelectric probe and an infrared light photoelectric probe. The light sensing module 32 is configured to obtain the illumination intensity by processing the illumination data of the visible light photoelectric probe and the illumination data acquired by the infrared light photoelectric probe with a preset algorithm. In a specific example, the preset algorithm may be any one or more logical operations. In this embodiment, more accurate illumination intensity data is obtained by subtracting the illumination data acquired by the visible light photoelectric probe and the infrared light photoelectric probe, but is not limited thereto.

Furthermore, it should be noted that the communication module 5 can access the designated network in multiple ways to establish a communication connection with the electronic device 200. An embodiment of the present invention provides a preferred implementation. Specifically, in this embodiment, the communication module 5 is further adapted to enter a network configuration mode in response to a designated network configuration operation to send out a designated network configuration signal such that a networked device receiving the designated network configuration signal instructs the communication module 5 to connect to the designated network in response to the designated network configuration signal, so as to establish a communication connection with at least one electronic device 200 having a display interface by the designated network in a state in which the communication module is connected to the designated network. The networked device may be the electronic device 200, or may be a gateway device (such as a Bluetooth gateway or router) connected to a designated network. The specified network configuration operation may be a local operation, such as long-pressing a button to enter the network configuration mode, or performing a power-off restart to enter the network configuration mode. It should be understood that the network configuration signal can be sent out in multiple ways, such as through peer-to-peer communication (e.g., Bluetooth direct connection, Wi-Fi direct connection, NFC) to the electronic device 200, or through non-peer-to-peer communication (e.g., broadcast) to the electronic device 200. Moreover, the network configuration signal should at least include the source identifier (e.g., a unique MAC address set at the factory) of the microwave sensing apparatus 100.

The network configuration mode may be entered in an unconfigured state or may be entered by resetting in a configured state. In one example, the communication module 5 of the microwave sensing apparatus 100 is specifically adapted to determine that the communication module 5 enters the network configuration mode in response to at least one trigger signal caused by the specified network configuration operation in the unconfigured state. In another example, the communication module 5 of the microwave sensing apparatus 100 is specifically adapted to determine that the communication module 5 is reset and enters the network configuration mode in response to at least one trigger signal caused by the specified network configuration operation in the configured state. In the network configuration mode, a network configuration message is generated and sent out, so that after receiving the network configuration message, the designated device instructs the microwave sensing apparatus 100 to join the designated network to complete the network configuration. The designated device includes an intelligent terminal device and/or a gateway device. After completing the network configuration, the microwave sensing apparatus 100 can communicate with the gateway device by the designated network, and further communicate with the electronic device 200 connected to the designated network by the gateway. In one example, the designated device is a mobile phone. After receiving the network configuration message, it sends the security information of the designated network (e.g., the name and password of the local area network) to the communication module 5 of the microwave sensing apparatus, and then the communication module 5 connects to the designated network based on the security information. Based on the above description, it should be understood that completing the network configuration mode should be understood as a mode in which the microwave sensing apparatus 100 can perform data transmission with the gateway device after successfully joining the designated network. Furthermore, this embodiment provides a preferred implementation for the network configuration of the microwave sensing apparatus 100. Based on this implementation, the microwave sensing apparatus 100 can be quickly discovered by intelligent terminal devices and/or gateway devices based on the network configuration message sent after entering the network configuration mode, and then instructed to join the designated network, thereby improving the network access efficiency of the microwave sensing apparatus 100. The instruction should include sending the name and password of an available network to the communication module 5, so that the communication module 5 connects to the available network based on the name and password, thereby completing the relevant network configuration operations.

Correspondingly, in some embodiments, the communication module 5 is also configured to control a light-emitting module 33 connected to the communication module 5 to emit a first prompt signal before sending the network configuration message, so as to prompt the user that the microwave sensing apparatus 100 is about to enter the network configuration mode.

Further, to improve the success rate of network configuration, in some embodiments, when sending the network configuration message out, the communication module 5 is specifically configured to send the network configuration message once every specified network configuration interval.

Further, in some embodiments, during the network configuration, the communication module 5 is also configured to control a light-emitting module 33 connected to the communication module 5 to emit a second prompt signal. At least one of the following is different in the first prompt signal and the second prompt signal:
flashing frequency; and
color.

In a specific example, the first prompt signal is alternating red and blue LED flashing, and the second prompt signal is blue LED flashing at 500 ms intervals.

Based on the technical solution provided in this embodiment, the user can easily distinguish the current state of the microwave sensing apparatus 100 and confirm whether it has entered the network configuration mode based on the differences between the first prompt signal and the second prompt signal.

In some embodiments, to facilitate the user in knowing whether the network configuration of the microwave sensing apparatus 100 is successful, the communication module 5 is further configured to stop sending the network configuration message out and stop emitting the second prompt signal after successful network configuration. Thus, when the user observes the presence of the second prompt signal, it can be determined that the microwave sensing apparatus 100 is currently in the network configuration mode. When the second prompt signal disappears, it can be determined that the microwave sensing apparatus 100 has been successfully configured. In one example, the indication lamp signal of the communication module 5 in the microwave sensing apparatus 100 during the network configuration process is specifically manifested as follows. Before entering the network configuration mode and sending the network configuration message, the red and blue LEDs alternately flash for 300 ms (configurable as needed), then the network configuration message is broadcast and transmitted for 30 minutes, during which the blue LED flashs at 500 ms intervals. If the network configuration is successful within 30 minutes, the broadcast transmission and the blue LED flashing are terminated.

In some embodiments, to prevent the microwave sensing apparatus 100 from failing to report sensing results to the designated network for an extended period due to prolonged absence of trigger events, the communication module 5 is further configured to, when operating in the network configuration mode after completing network setup, periodically send reminder messages at predetermined intervals, thereby enabling the electronic device 200 and the gateway to verify the online status of the microwave sensing apparatus 100 upon receiving the reminder messages. The reminder message may only indicate that the microwave sensing apparatus 100 is online, or may include other functions, such as indicating the triggering state of a certain sensing result of the microwave sensing apparatus 100 to indirectly indicate that the microwave sensing apparatus 100 is online. In other words, the reminder message can be any trigger signal that allows the user to know that the microwave sensing apparatus 100 is currently online. In a specific example, the reminder message is embodied as a report message of the fourth result. For example, the unattended duration (fourth result) is uploaded every 30 seconds to indicate that the microwave sensing apparatus 100 is currently online.

Referring to Fig. 18, another communication connection method between the communication module 5 and the electronic device 200 is specifically illustrated. In the embodiment shown in Fig. 18, the communication module 5 is adapted to establish a communication connection with the electronic device 200 by peer-to-peer communication, and then generate a selected instruction corresponding to the selected operation based on different selected operations of at least one representation associated with the sensing parameter on the display interface of the electronic device 200. The peer-to-peer communication method may be, for example, Wi-Fi Direct, BLE direct connection, or 433 MHz RF connection. Based on the technical solution provided in this embodiment, the user can establish peer-to-peer communication between the electronic device 200 (e.g., a smartphone) and the microwave sensing apparatus 100, and then directly configure the sensing parameters of the sensing module 31 by the electronic device 200. Specifically, the user can conveniently set the target sensing region of the microwave sensing apparatus 100 by the display interface shown on the electronic device 200. The visual selected operation method allows the user to more accurately divide the target sensing region for specific application scenarios. Additionally, since the peer-to-peer communication is distance-limited, the configuration electronic device 200 and the microwave sensing apparatus 100 must be within a certain range (generally tens of meters). The configuration signal does not travel long distances, thereby preventing the configuration signal from being intercepted illegally and affecting the security of the microwave control device. Different from the above embodiment where the electronic device 200 is separate from the microwave sensing apparatus 100, as shown in Fig. 19, in another embodiment, the electronic device 200 is integrated into the microwave sensing apparatus 100, and the communication module 5 is directly or indirectly electrically connected to the electronic device 200. Furthermore, based on the technical solution provided by this embodiment, the user can conveniently select the sensing parameters of the sensing module 31 without relying on other devices, only by the electronic device 200 integrated with the microwave sensing apparatus 100, thereby enabling easy selection of the target sensing region.

Further, in a specific implementation of the embodiment shown in Fig. 19, the electronic device 200 includes a screen for displaying an interface, whereby the communication module 5 can generate selected instructions corresponding to different selected operations associated with at least one representation of the sensing parameter on the display interface of the screen. Thus, the users can conveniently set the target sensing region of the microwave sensing apparatus 100 by the display interface shown on the screen, and the visual selected operation facilitates more accurate division of the target sensing region for specific application scenarios.

Further, in another specific implementation of the embodiment shown in Fig. 19, the electronic device 200 includes at least one actuator integrated into the microwave sensing apparatus 100, the actuator being electrically connected to the communication module 5 to enable the communication module 5 to generate the selected instruction based on at least one trigger signal produced by the actuator in response to a selected operation. The actuator should be understood as a component or a collection of components capable of being manipulated to produce an action, such as buttons, knobs, etc. In one specific example, the actuator is implemented as a knob control. Accordingly, the following detailed descriptions are provided for several setting methods of the sensing parameters in the above embodiments. When the sensing parameter includes a maximum sensing distance, rotating the knob can output a trigger signal, which triggers the communication module 5 to generate a selected instruction for controlling the sensing module 31, with clockwise rotation of the knob increasing the sensing distance and counterclockwise rotation of the knob decreasing the sensing distance. When the sensing parameter includes a minimum sensing distance, rotating the knob can output a trigger signal, which triggers the communication module 5 to generate a selected instruction for controlling the sensing module 31, with the clockwise rotation of the knob increasing the minimum sensing distance and the counterclockwise rotation of the knob decreasing the minimum sensing distance. When the sensing parameter includes both maximum and minimum sensing distances, rotating the knob can output a trigger signal, which triggers the communication module 5 to generate a selected instruction for controlling the sensing module 31, with the clockwise rotation of the knob increasing the maximum sensing distance, the counterclockwise rotation of the knob decreasing the maximum sensing distance clockwise rotation. When the knob is pressed, the clockwise rotation is used to increase the minimum sensing distance, and the counterclockwise rotation is used to reduce the minimum sensing distance. It should be noted that the implementation of the actuator is not limited to the knob and can include any other component capable of producing a selection action through physical manipulation, regardless of its specific configuration, without affecting the implementation of this solution.

Additionally, the inventors of the present invention have found that the sensing module 31 of conventional microwave sensing apparatuses 100 is prone to abnormal conditions such as crashes during operation, especially when initializing some parameters (distance resolution, sensitivity, the specified boundary, the specified time, segment range data, etc.) of the sensing module 31, which can cause crashes. Once the sensing module 31 malfunctions, the entire microwave sensing apparatus 100 becomes non-functional. To address this technical issue in the prior art where the sensing module 31 crash leads to the microwave sensing apparatus 100 being unusable, an embodiment of the present invention provides related technical solutions. Specifically, as shown in Fig. 20, in this embodiment, the communication module 5 controls the power-on/power-off of the sensing module 31 by a power management module 35 and is further configured to perform a power-off restart on the sensing module 31 via the power management module 35 when a specified condition indicating an abnormal working state of the sensing module 31 is triggered. The specified condition indicates an abnormal working state of the sensing module 31. In a specific example, the power-off restart involves power down for 2.5 seconds, and then restoring power and waiting 1.5 seconds before reinitializing the configuration of the sensing module 31. Thus, the technical solution provided in this embodiment allows the sensing module 31 to be power-cycled via the software when it malfunctions, enabling quick reconfiguration to restore normal operation, thereby solving hardware crash issues through software means.

Further, the specified condition includes not receiving a sensing result from the sensing module 31 within a specified time. That is, when the communication module 5 does not receive the sensing result sent by the sensing module 31 within a specified time, the sensing module 31 is powered off and powered on successively by the power management module 35 and the sensing module 31 is restarted. In one specific example, the condition to trigger the abnormal working state may manifest as not receiving detection data from the sensing module 31 within 10 seconds (set based on actual needs).

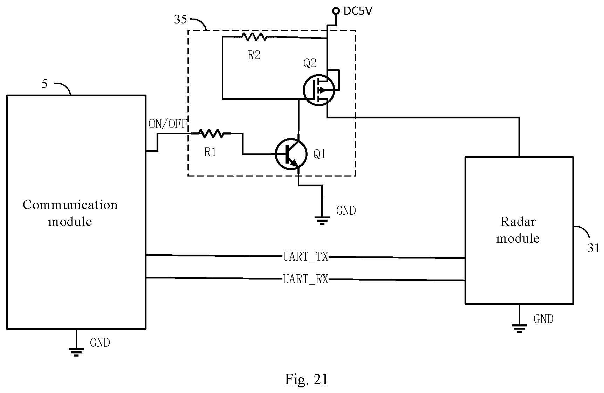

Specifically, the power management module 35 described in the above embodiments includes a switching device connected between a power supply and the power terminal of the sensing module 31, with a control terminal linked to the communication module 5, enabling the communication module 5 to control the switching device to turn the power supply circuit of the sensing module 31 on or off. As shown in Fig. 21, a specific circuit implementation of this embodiment includes a switching device including interconnected transistor Q1 and MOSFET Q2. Q1's electrode b is connected to the ON/OFF pin of the communication module, electrode c to ground, and electrode c to Q2's electrode G for controlling Q2's on/off state based on the ON/OFF of Q1. Q2's electrode s is electrically connected to a 5V supply, and electrode D to the power terminal of the sensing module 31. Then based on the specific circuit, the control principle is as follows. When the ON/OFF pin of the communication module 5 is at a high level, the triode Q1 base has mA level current, the triode is conductive, and the collector voltage of Q1 is close to 0V. That is, the electrode G of Q2 is 0 V, the VGS is about -5 V, and the source drain of Q2 is conductive, so that the power is supplied to the sensing module 31. When the MCU ON/OFF pin is at a low level, the triode Q1 base has no current, and the triode is cutoff. Q1 collector voltage is close to DC5V. That is, Q2's electrode G has a voltage of DC5V, VGS is about 0V, and the Q2 source drain is cutoff, so that the power cannot be supplied to the sensing module 31, and then the sensing module 31 is powered off.

Additionally, the inventors found that merely powering off the sensing module 31's supply terminal often leaves its communication ports partially powered, causing restart failures. Thus, in an embodiment, the sensing module 31 communicates with the communication module 5 via a serial port, and the communication module 5 is further configured to pull the level of related pins low during power-off of the sensing module 31 to ensure complete shutdown of the sensing module 31. Specifically, as shown in Fig. 21, If only 5V power supply is turned off when the sensing module 31 is powered off, and UART_TX and UART_RX remain at a high level, the communication module's pins may backfeed voltage to the sensing module 31, leaving its supply terminal at a half-high level. This prevents proper shutdown and subsequent restart. Thus, when turning off the 5V power supply to the module, the UART_TX and UART_RX pins is pulled to the low level. Therefore, in this embodiment, during a power-off restart of the sensing module 31, not only is the power supply end turned off, but the serial transmit-receive ports (TX, RX) are also set at the low level at the software level to ensure complete power-off, improving restart success rates.

Further, in all the above embodiments, the sensing module 31 specifically includes a radar module that emits detection waves to form an actual sensing region (as shown by the outermost dotted line in Fig. 8) which the detection waves can cover. The target sensing region (shaded region in Fig. 8) is contained within this actual sensing region. The distance between the moving object and the sensing module 31 is calculated based on the delay time of the echo feedback of the detection wave by the moving object, and the actual sensing region is divided based on a number of specified paragraph ranges, thus forming various sensing parameters that can be selected by the user, and then associating these sensing parameters with the app application of the electronic device. Thus, a representation of an interface capable of receiving the user's selected operations is formed by the display interface of an app.

Further, in this embodiment, the communication module 5 specifically includes a Bluetooth module. The Bluetooth module establishes communication with the radar module via a serial port, establishes communication with the light sensing module 32 via IIC communication, controls each indication lamp in the light-emitting module 33 via input/output ports, and establishes a communication connection with the electronic device 200 by joining a designated network composed of a gateway. Thus, the Bluetooth module performs networking and data transmission via Bluetooth protocol to reduce product power consumption.

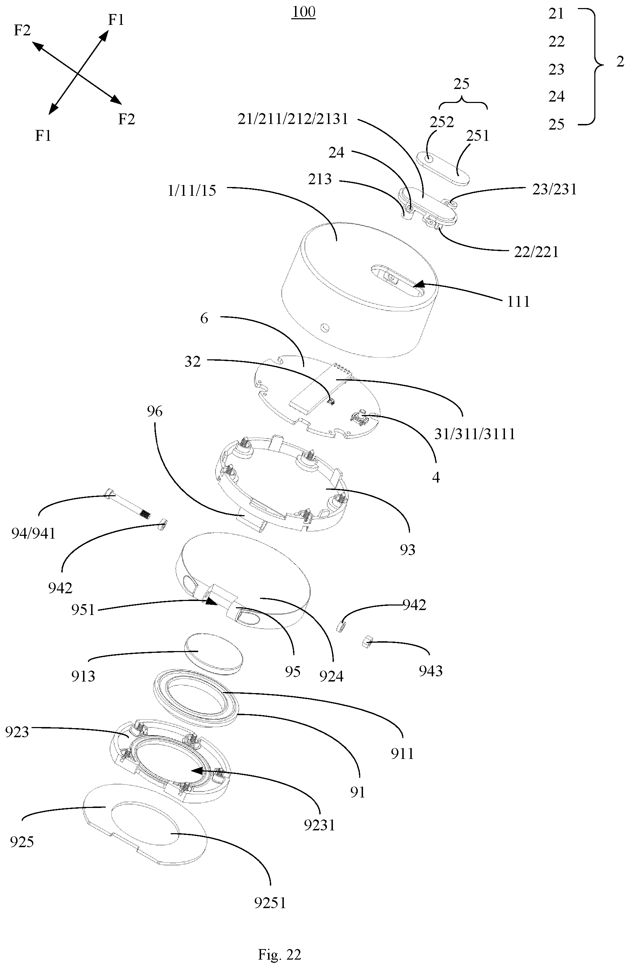

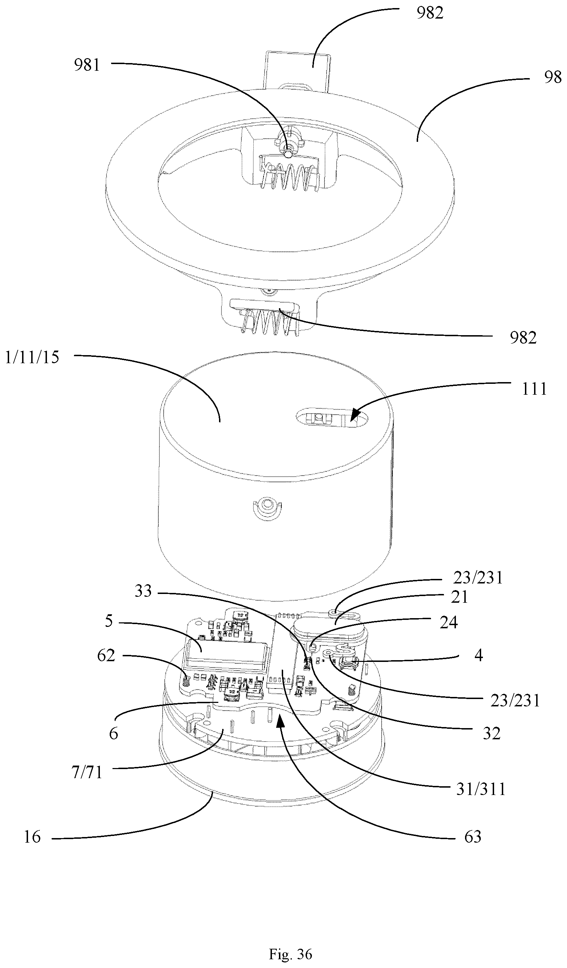

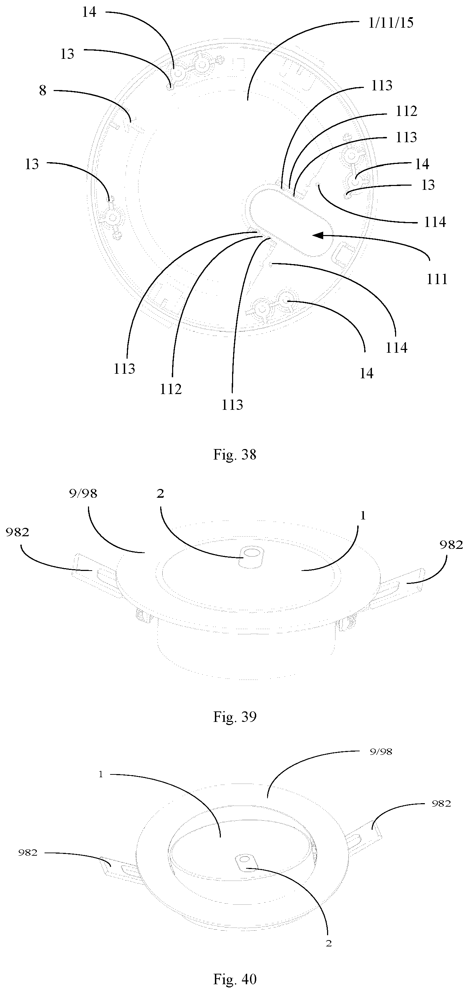

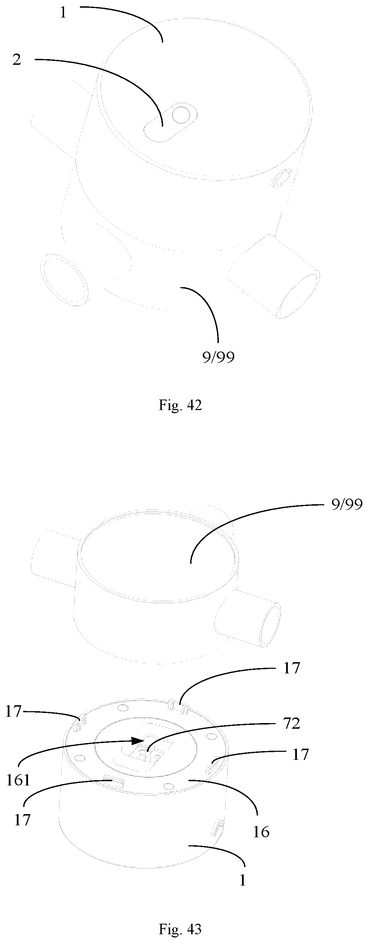

Moreover, the inventors of the present invention found that during the use of the microwave sensing apparatus, the users can control the power switch of the microwave sensing apparatus or its linkage with controlled devices such as lighting equipment by pressing the switch button of the microwave sensing apparatus. After linkage, the external light environment is detected by the configured light sensing region, and the sensing result is uploaded to the gateway device and/or cloud server to control the lighting equipment. Meanwhile, the users can also obtain the working state of the microwave sensing apparatus by the indication lamp on the microwave sensing apparatus. In existing microwave sensing apparatuses, the switch button setting region, the indication lamp setting region and the light sensing region are arranged separately, sometimes even on different side walls of the device, making it inconvenient for users. For example, when controlling the switch or network configuration of the microwave sensing apparatus, the users need to first locate the indication lamp position and then observe its illumination status to obtain the real-time working state of the device. Moreover, the housing of microwave sensing apparatuses typically has openings corresponding to the switch button, the indication lamp and the light sensing region, resulting in uneven housing thickness which significantly affects the performance of the sensing module and reduces practicality. Based on this, an embodiment of the present invention provides a related technical solution capable of solving this technical problem. Specifically, with reference to Figs. 22 to 46, in this embodiment, the microwave sensing apparatus 100 further includes a housing 1, an optical transceiver 2, a light sensing module 32 and a light-emitting module 33. The housing 1 has a first wall 11, and a detection switch 4, the sensing module 31 and the communication module 5 are provided inside the housing 1. The optical transceiver 2 is provided on the first wall 11, enabling the microwave sensing apparatus 100 to emit light in a first direction and receive light in a second direction through the optical transceiver 2. The optical transceiver 2 is configured to match the detection switch 4, so as to trigger the detection switch 4 when displaced in response to a first operating force. The light sensing module 32 corresponds to the optical transceiver 2 and electrically connected to the communication module 5 for receiving light in the second direction to perform illumination intensity detection. The light-emitting module 33 corresponds to the optical transceiver 2 and electrically connected to the communication module 5 to emit light in the first direction under control of the communication module 5, thereby forming an indication signal for indicating the working state of the microwave sensing apparatus 100. The light sensing module 32 can detect external illumination intensity by receiving light in the second direction. The microwave sensing apparatus 100 can be interconnected with controlled devices such as external lighting equipment to transmit sensing results from both the sensing module 31 and the light sensing module 32, enabling real-time control of the working state of controlled devices and providing users with an intelligent working and living environment. Additionally, the light-emitting module 33 can display the working state of the microwave sensing apparatus 100 (including its switch state, network configuration state, lighting state, etc.) by emitting light in the first direction through the optical transceiver 2, thereby reminding users and facilitating operation. Both the light sensing module 32 and the light-emitting module 33 correspond to the optical transceiver 2, meaning that their light sensing and indication functions are achieved by the light-transmitting performance of the optical transceiver 2. Furthermore, the optical transceiver 2 can be displaced in response to a first operating force to trigger the detection switch 4. In other words, the optical transceiver 2 also has a trigger function on the basis of the sensitive and indicating functions. This allows the detection switch 4 to generate a trigger signal, based on which the microwave sensing apparatus 100 switches its working state. In this way, the optical transceiver 2 integrates three functions: light sensing, indication, and triggering. The structural design of the microwave sensing apparatus 100 is compact and straightforward, eliminating the need for users to locate separate structures for each function, thereby enhancing usability. Compared to existing products, this invention integrates the functions of a switch button, indication lamp, and light sensing region into a single structure - the optical transceiver 2. This not only simplifies the structure and improves the overall aesthetic appearance of the microwave sensing apparatus 100 but also reduces the number of openings in the housing 1 from three to one, improving the thickness uniformity of the first wall 11. If the sensing module 31 corresponds to the first wall 11, this arrangement can enhance sensing accuracy of the sensing module 31 while minimizing the adverse effects of housing openings on the sensing performance of the microwave sensing apparatus 100. Moreover, in dark environments when the sensing module 31 detects human presence, the optical transceiver 2 is illuminated by light emitted in the first direction, allowing the users to clearly identify the position of the optical transceiver 2 and accurately operate the optical transceiver 2 to trigger the detection switch 4, thereby enabling quick real-time control of the microwave sensing apparatus 100.

It should be noted that the detection switch 4 may be a microswitch, a tact switch, a membrane switch, or a piezoelectric switch, etc. Specifically, in some embodiments of the present invention, the detection switch 4 is a microswitch, which offers high responsiveness and low power consumption.

It should also be noted that the first direction and the second direction are opposite directions. The first direction is from the interior to the exterior of the housing 1 (inside-to-outside direction), while the second direction is from the exterior to the interior of the housing 1 (outside-to-inside direction). Additionally, the shape of the housing 1 is not limited. It may be cylindrical or rectangular. Correspondingly, the first wall 11 may be planar or curved. Specifically, referring to Figs. 22-24 and 33-42, in some embodiments of the present invention, the housing 1 is cylindrical with the first wall 11 being its planar top wall.

Meanwhile, the installation position of the microwave sensing apparatus 100 is not limited. The device can be fixed to a mounting surface on various installable objects including walls, ceilings, bookshelves, or beds, making it suitable for different application scenarios.

Specifically, the optical transceiver 2 includes an optical path channel that serves both to emit light in the first direction and receive light in the second direction. Referring to Figs. 22-24, 33-35, 45 and 46, the optical transceiver 2 includes a light-transmitting part 21 and a trigger part 22. The optical path channel is formed within the light-transmitting part 21, which includes an indication region 211 and a light sensing region 212. The indication region 211 corresponds to the light-emitting module 33, allowing light in the first direction emitted by the light-emitting module 33 to pass through the light-transmitting part 21 to the exterior of the housing 1. The light sensing region 212 corresponds to the light sensing module 32, enabling light in the second direction from outside the housing to enter through the light-transmitting part 21 for reception by the light-emitting module 33. The trigger part 22 is provided on the light-transmitting part 21 and can be displaced relative to the first wall 11 under a first operating force, corresponding to the detection switch 4 to trigger the detection switch 4 upon displacement. Thus, while the light-transmitting part 21 serves both light sensing and indication functions, the addition of the trigger part 22 provides triggering capability. More specifically, the trigger part 22, the light sensing region 212 and the indication region 211 are sequentially arranged along the length of the optical transceiver 2.

It should be noted that the relative positions of the indication region 211 and light sensing region 212 are not limited. They may be separate or overlapping.

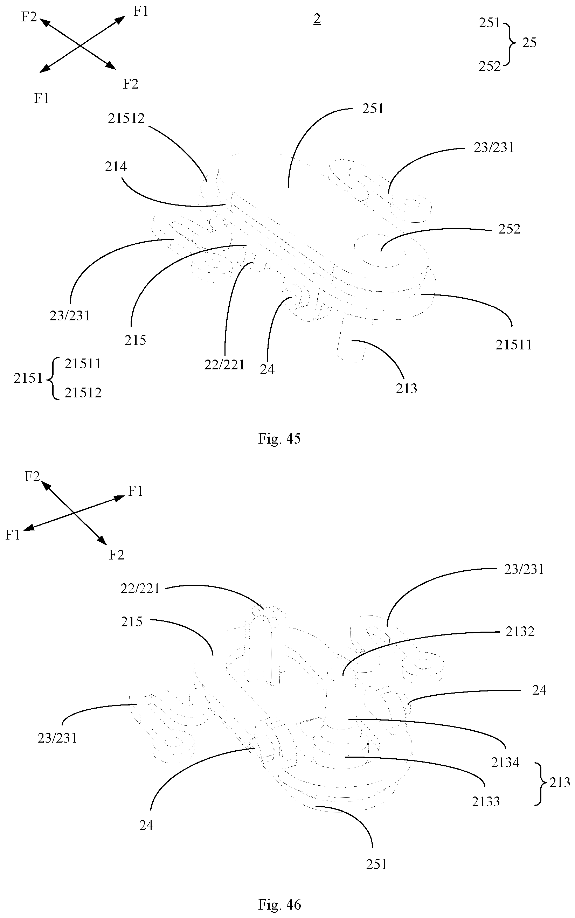

Further, referring to Figs. 45 and 46, in some embodiments, the indication region 211 and light sensing region 212 overlap, meaning the combined region of the indication region 211 and light sensing region 212 serves for both light incidence and emission. This reduces the required region of the light-transmitting part 21, simplifies the structure, further decreases the housing opening size, and enhances the overall aesthetic of the microwave sensing apparatus 100.

Additionally, the proximity of the light-emitting module 33 to the light sensing module 32 further reduces the area needed for the light-transmitting part 21 on the basis of realizing the transmittance and photosensitivity of the light-transmitting part 21.

Specifically, in this invention, the light sensing module 32 is a light sensor, more particularly, a low-cost I2C digital light sensor, which converts light intensity into digital output signals compatible with I2C interfaces. It provides linear response across a wide dynamic range from 0.01 lux to 64k lux, making it particularly suitable for high-ambient-light applications.

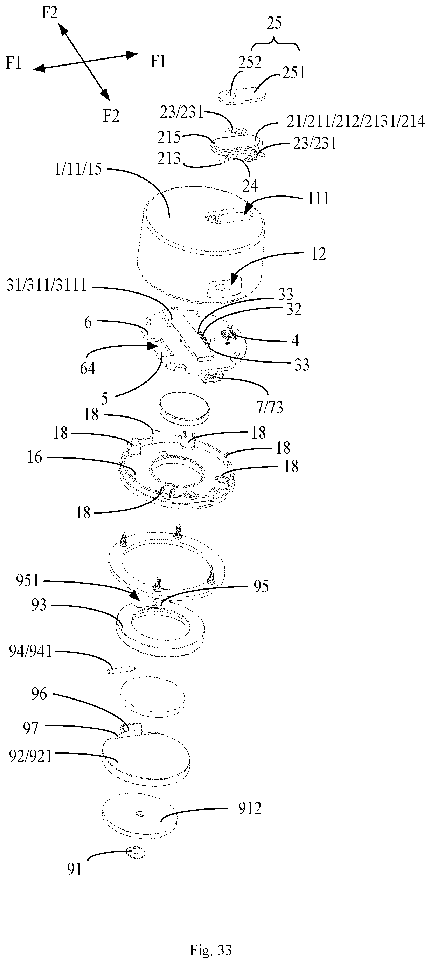

Specifically, in this invention, the light-emitting module 33 includes at least one indication lamp. More specifically, referring to Fig. 33, in some embodiments of the present invention, two indication lamps are provided, the two being LED lights with different colors to distinguish different working states of the microwave sensing apparatus 100. Furthermore, by setting different illumination durations and lighting patterns of the two indication lamps, more working states of the microwave sensing apparatus 100 can be matched to form different indication signals. For example, the indication lamp may flash for a long time or a short time, one of the two indication lamps may flash, or the two may flash alternately. For instance, alternating flashes of the two indication lamps once may be defined as power-on of the microwave sensing apparatus 100. Rapid flashing (500 ms on, 500 ms off) of one indication lamp may be defined as network configuration of the microwave sensing apparatus 100. Brief flashing of one indication lamp every 5 seconds for 300 ms may be defined as occupied from detection by the microwave sensing apparatus 100. More specifically, one of the two indicator lights displays red light and the other displays blue light, allowing users to quickly distinguish between them.

In embodiments where the light-emitting module 33 is positioned adjacent to the light sensing module 32, the two indication lamps are positioned adjacent to the light sensing module 32 on both sides of the light sensing module 32, with distances typically ≤ 3 mm between the two indication lamp and the light sensing module 32 to achieve "adjacent" placement.

Specifically, referring to Figs. 22-24, 33, 34, 45 and 46, the light-transmitting part 21 includes a light guide member 213 with first and second end surfaces 2131, 2132 provided on both ends of the light guide member 213. The outward-facing first end surface forms either the indication region 211 (the second end surface 2132 is provided inwards and close to the light-emitting module 33) or the light sensing region 212 (the second end surface 2132 is provided inwards and close to light sensing module 32). The light guide member 213 collects and directs light, reducing transmission loss and improving display brightness. Specifically, when the first end surface 2131 of the light guide member 213 is provided outwards to form the light sensing region 212, and the second end surface 2132 is provided inwards and close to the light sensing module 32, the light sensing region 212 has a light diffusion effect, facilitating the light sensing module 32 to receive light from the second direction. When the first end surface 2131 is provided outwards to form the indication region 211, and the second end surface 2132 is provided inwards and close to the light-emitting module 33, the indication region 211 has a light reflection effect, and light from the first direction is uniformly emitted through the indication region 211 with enhanced brightness, making the indication region 211 clearly visible with excellent prompting effect.

Note that the light guide member 213 may take various forms such as a light guide column or film, without limitation. Specifically, referring to Figs. 22-24, 33, 34, 45, and 46, in some embodiments of the present invention, the light guide member 213 is a light guide column to further reduce light loss during propagation. It should also be noted that the number of light guide members 213 is not limited. Two light guide members 213 may be provided, where a first end surface 2131 of one light guide member 213 forms the indication region 211 with its second end surface 2132 adjacent to the light-emitting module 33, while a first end surface 2131 of the other forms the light sensing region 212 with its second end surface 2132 adjacent to the light sensing module 32. Alternatively, referring to Figs. 22-24, 33, 34, 45, and 46, based on the embodiment where "the indication region 211 and light sensing region 212 overlap, and the light-emitting module 33 is provided adjacent to the light sensing module 32", one single light guide member 213 may be used, where its first end surface 2131 forms both the indication region 211 and the light sensing region 212, and its second end surface 2132 is adjacent to both the light-emitting module 33 and the light sensing module 32. This simplifies the structure of the microwave sensing apparatus 100 and reduces costs.

Furthermore, based on the above embodiment where "the indication region 211 and light sensing region 212 are overlapping, the light-emitting module 33 is provided adjacent to the light sensing module 32, the first end surface 2131 of the light guide member 213 forms both the indication region 211 and light sensing region 212, and the second end surface 2132 of the light guide member 213 is adjacent to both the light-emitting module 33 and light sensing module 32", if the second end surface 2132 corresponds to both the light-emitting module 33 and light sensing module 32, the setting area of the second end surface 2132 would be larger. If the first end surface 2131 has the same area as that of the second end surface 2132, the first end surface would also be larger, potentially exposing internal electronic components (including the light sensing module 32, the light-emitting module 33, etc.) inside the housing 1, so that the user can clearly see the structure of the internal electronic components from the outside of the housing 1, affecting the overall aesthetic appearance of the microwave sensing apparatus 100. Therefore, in some embodiments, the second end surface 2132 has a smaller area than that of the first end surface 2131 and corresponds to the light sensing module 32, ensuring both light sensing performance of the light sensing module 32 and indication effects of the indication region 211 while minimizing component exposure inside the housing 1. Specifically, depending on the size of the light sensing module 32 and the distance between the light sensing module 32 and the light-emitting module 33, the first end surface 2131 may have a diameter of 4 mm and the second end surface 2132 have a diameter of 2 mm.

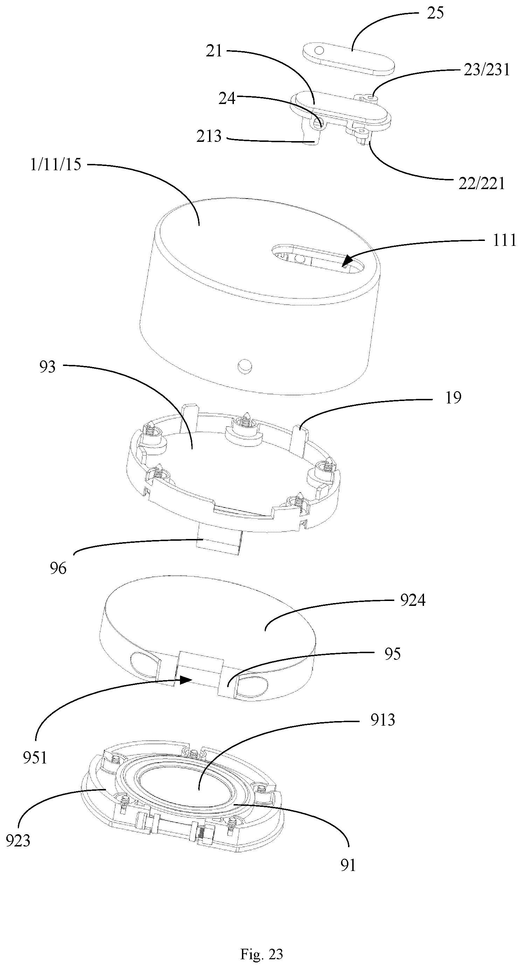

It should be noted that the configuration form for making the area of the second end surface 2132 smaller than that of the first end surface 2131 is not limited. For example, the light guide member 213 may be tapered from its first end surface 2131 to its second end surface 2132, so that the area of the second end surface 2132 is smaller than that of the first end surface 2131. However, with such configuration, the overall volume of the light guide member 213 tends to be thicker in terms of production process, which may introduce bubbles during injection molding, affecting the light-guiding effect of the light guide member 213 and causing off-center and uneven illumination from the light-emitting module 33. To address this, referring to Figs. 23, 34, and 45, in some embodiments of the present invention, the light guide member 213 is sequentially provided with a first light guide part 2133 and a second light guide part 2134 along the inner-outer direction. The first light guide part 2133 is provided as a frustum, with the first end surface 2131 formed on a side of the first light guide part 2133 away from the second light guide part 2134 and a generatrix of the first light guide part 2133 provided as a concave arc. The second light guide part 2134 is provided as a cylinder, with the second end surface 2132 formed on a side of the second light guide part 2134 away from the first light guide part 2133, and an area of the second end surface 2132 is equal to an area of a side of the first light guide part 2133 adjacent to the second light guide part 2134. This configuration not only prevents exposure of electronic components inside the housing 1, but also reduces bubble generation rate during production due to the slender design of the second light guide part 2134, thereby enhancing light guiding effect of the light guide member 213 and enabling centered and uniform display of light from the light-emitting module 33 in the indication region 211 of the optical transceiver 2.

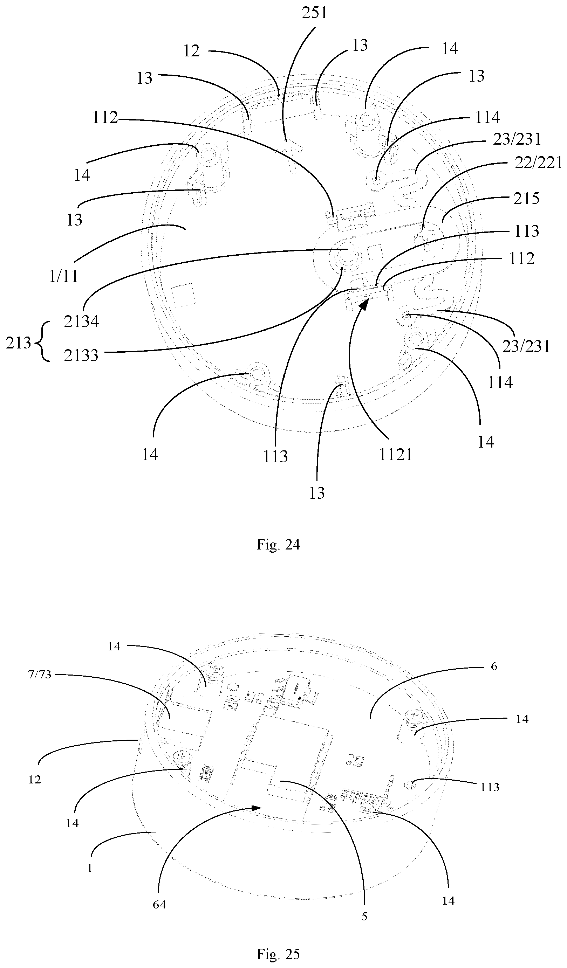

Specifically, referring to Fig. 24, in some embodiments, the trigger part 22 is implemented as a trigger post 221 that abuts or is close to the detection switch 4. When displaced by the first operating force, it triggers the detection switch 4, enabling operations like power-on or network configuration for the microwave sensing apparatus 100 by the user pressing the trigger part 22. More specifically, based on the arrangement where "the trigger part 22, the light sensing region 212, and indication region 211 are sequentially distributed along the length of the optical transceiver 2; the indication region 211 and the light sensing region 212 overlap; the light-emitting module 33 is provided adjacent to the light sensing module 32; and the first end surface 2131 of the light guide member 213 face outwards to form the indication region 211 and the light sensing region 212, and the second end surface 2132 face inwards and is close to the light-emitting module 33 and the light sensing module 32", the trigger post 221 and light guide member 213 are sequentially distributed along the length direction of the optical transceiver.

Specifically, in the present invention, the trigger part 22 can not only be displaced from an initial position to a trigger position under the first operating force to trigger the detection switch 4, but also return from the trigger position to the initial position under a reset force after triggering the detection switch 4. However, if the reset force is excessive, it may cause the trigger part 22 to have overdisplacement. Thus, after the trigger part 22 is reset to the initial position, it continues to move to a protruding position away from the housing 1, which affects the user's subsequent feeling of use and also affects the aesthetic appearance of the microwave sensing apparatus 100. It should be noted that the reset force can be understood as either another operating force applied by the user to the trigger part 22 after removal of the first operating force, or the elastic reset force exerted by the detection switch 4 on the trigger part 22 due to its elasticity after removal of the first operating force.

To address this, the present invention provides a limiting portion for restricting the movement range of the trigger part 22. More specifically, referring to Figs. 22, 23, and 33-38, in some embodiments of the present invention, the first wall 11 is provided with a mounting hole 111. The light-transmitting part 21 includes a pressing portion 214 and a bearing portion 215 stacked along its thickness direction, where the surface area of the pressing portion 214 is smaller than that of the bearing portion 215. The pressing portion 214 is adaptively provided in the mounting hole 111, while the bearing portion 215 is provided inside the housing 1. This means the surface area of the bearing portion 215 is larger than the hole area of the mounting hole 111. Therefore, when the trigger part 22 resets, the movement of the bearing portion 215 towards the mounting hole 111 is restricted by contact with the first wall 11 of the housing 1, preventing it from moving into the mounting hole 111 or protruding outside the housing 1 through the mounting hole 111, thereby indirectly limiting the movement range of the light-transmitting part 21. More specifically, when the trigger part 22 is in the initial position, the bearing portion 215 abuts against the first wall 11, further reducing the movement range of the light-transmitting part 21 to ensure precise reset of the trigger part 22 and improve user experience.

Specifically, in the present invention, since the trigger part 22 is provided on the light-transmitting part 21, the trigger part 22 activates the detection switch 4 by moving relative to the housing 1 in response to the first operating force. This can be understood as either the light-transmitting part 21 rotating relative to the housing 1 to drive the trigger part 22 to activate the detection switch 4, or the light-transmitting part 21 moving linearly relative to the housing 1 to drive the trigger part 22 to activate the detection switch 4. Accordingly, the connection between the light-transmitting part 21 and the housing 1 varies.

Specifically, in some embodiments of the present invention, the light-transmitting part 21 is pivotally connected to the housing 1, enabling the light-transmitting part 21 to rotate relative to the housing 1 about an axis extending along the third direction. The third direction is parallel to the horizontal direction of the light-transmitting part 21. When the light-transmitting part 21 is subjected to the first operating force and undergoes pivotal movement, it drives the trigger part 22 to perform pivotal movement and activates the detection switch 4 by moving towards it.

Referring to Figs. 1, 33, 35, 45, and 46, the third direction is F1.

Further, a rotating shaft 24 and a pivot hole 1121 are provided between the light-transmitting part 21 and the housing 1, with one of the rotating shaft 24 and the pivot hole 1121 provided on the light-transmitting part 21 and the other on the housing 1, so that the light-transmitting part 21 is pivotally connected to the housing 1, facilitating the assembly or disassembly of the optical transceiver 2 and the housing 1.

According to the present invention, the rotating shaft 24 may be provided in the light-transmitting part 21, and the pivot hole 1121 may be provided in the housing 1. Of course, the rotating shaft 24 may be provided in the housing 1, and the pivot hole 1121 may be provided in the light-transmitting part 21. Specifically, referring to Fig. 24, in some embodiments of the present invention, the light-transmitting part 21 is provided with the rotating shafts 24 on opposite sides in the third direction, and the first wall 11 is provided with two fixing bases 112 spaced apart in the third direction, each of the fixing bases 112 being provided with the pivot hole 1121. The rotating shafts 24 are provided on the light-transmitting part 21, and the pivot holes 1121 are provided on the first wall 11, facilitating the quick assembly and disassembly of the light-transmitting part 21 and the first wall 11, while the setting of the fixing bases 112 enhances the rotational stability of the light-transmitting part 21.

Further, referring to Fig. 24, in some embodiments of the present invention, each of the fixing bases 112 is provided with two limiting ribs 113 protruding towards the other fixing base 112, the two limiting ribs 113 being provided on opposite sides of the pivot hole 1121 in the fourth direction. The fourth direction is perpendicular to the third direction in the horizontal plane. The setting of the limiting ribs 113 improves the rotational stability of the light-transmitting part 21, preventing the rotating shaft 24 from disengaging from the pivot hole 1121 during pivotal movement relative to the fixing base 112.

Referring to Figs. 1, 33, 35, 45, and 46, the fourth direction is F2.

Specifically, according to the above, when the trigger part 22 is in the initial position, at least part of the light-transmitting part 21 is accommodated in the mounting hole 111. In this case, when the light-transmitting part 21 is pivotally connected to the housing 1, during the rotation of the light-transmitting part 21, the part of the light-transmitting part 21 accommodated in the mounting hole 111 may interfere with the inner side wall of the mounting hole 111 during rotation, affecting the rotation of the light-transmitting part 21, causing jamming during user operation and inconvenience to the user. Therefore, in some embodiments of the present invention, the mounting hole 111 is tapered from its end surface near the interior of the housing 1 to its end surface away from the interior of the housing 1. That is, corresponding to the rotation stroke of the light-transmitting part 21, the housing 1 is provided with an avoidance region for the part of the light-transmitting part 21 accommodated in the mounting hole 111, thereby avoiding interference between the inner side wall of the mounting hole 111 and the light-transmitting part 21 during rotation, ensuring smooth rotation of the light-transmitting part 21 and improving the user experience.

Specifically, the light-transmitting part 21 rotates relative to the housing 1, and the movement directions of the opposite ends of the light-transmitting part 21 in the fourth direction are opposite. One end is subjected to a force moving towards the interior of the housing 1, i.e., pressed downwards, while the other end is subjected to a force moving towards the exterior of the housing 1, i.e., lifted upwards. More specifically, referring to Fig. 45, in some embodiments of the present invention, the trigger part 22 is provided at one end of the light-transmitting part 21 in the fourth direction, and the indication region 211 and the light sensing region 212 are provided at the other end of the light-transmitting part 21 in the fourth direction. Based on the above embodiment where "the light-transmitting part 21 includes a pressing portion 214 and a bearing portion 215 stacked along its thickness direction, the surface area of the pressing portion 214 is smaller than that of the bearing portion 215, and the pressing portion 214 is adapted to be provided in the mounting hole 111, while the bearing portion 215 is provided inside the housing 1," the bearing portion 215 has a first side surface 2151 connected to the pressing portion 214, the first side surface 2151 has a first bearing surface 21511 corresponding to the indication region 211 and the light sensing region 212 of the light-transmitting part 21, and a second bearing surface 21512 corresponding to the trigger part 22. That is, when the light-transmitting part 21 rotates relative to the housing 1 and the trigger part 22 triggers the detection switch 4, the trigger part 22, i.e., the second bearing surface 21512, is pressed downwards, while the indication region 211 and the light sensing region 212, i.e., the first bearing surface 21511, are lifted upwards. Further, the trigger part 22 moves between an initial position and a trigger position. When the trigger part 22 is in the initial position, the bearing portion 215 may be provided to abut against the first wall 11 or to have a gap with the first wall 11. However, when the trigger part 22 is in the initial position and the bearing portion 215 is provided to abut against the first wall 11, during the process of the trigger part 22 being pressed to trigger the detection switch 4, the first bearing surface 21511 may interfere with the first wall 11, preventing the light-transmitting part 21 from rotating and thus affecting the movement of the trigger part 22. Therefore, in some embodiments of the present invention, when the trigger part 22 is in the initial position, there is a movement gap between the first bearing surface 21511 and the inner side surface of the first wall 11. In this way, during the process of the trigger part 22 triggering the detection switch 4, the first bearing surface 21511 can rotate relative to the housing 1 by means of the movement gap, ensuring smooth user operation.

Further, to achieve the miniaturization design of the microwave sensing apparatus 100, when the trigger part 22 is in the initial position, the first bearing surface 21511 is provided closer to the interior of the housing 1 compared to the second bearing surface 21512, and the second bearing surface 21512 abuts against the first wall 11. This reduces the space occupied by the bearing portion 215 inside the housing 1 while ensuring that the first bearing surface 21511 can rotate relative to the housing 1 for smooth user operation, thereby reducing the volume of the housing 1. More specifically, in an embodiment of the present invention, the maximum trigger stroke of the detection switch 4 is 0.2 mm. When the trigger part 22 is in the initial position, the trigger part 22 abuts against the detection switch 4. Accordingly, the movement gap between the first bearing surface 21511 and the inner side surface of the first wall 11 is set to 0.25 mm.

Specifically, the rotating shaft 24 and the pivot hole 1121 correspond to the junction of the first bearing surface 21511 and the second bearing surface 21512 or corresponding to the first bearing surface 21511. This ensures that during the rotation of the light-transmitting part 21, the trigger part 22 can be fully pressed downwards, i.e., the trigger part 22 rotates to the correct position to fully trigger the detection switch 4, avoiding failure of the detection switch 4. At the same time, during the rotation of the light-transmitting part 21, the part corresponding to the light sensing module 32 and/or the light-emitting module 33 is prevented from being pressed downwards and acting on the light sensing module 32 and/or the light-emitting module 33, thereby avoiding damage to the light sensing module 32 and/or the light-emitting module 33 due to excessive pressing or repeated use, which would affect their service life.

Of course, in other embodiments of the present invention, the light-transmitting part 21 moves relative to the housing 1 to drive the trigger part 22 to trigger the detection switch 4. Specifically, the light-transmitting part 21 is provided with an elastic connection structure 23, which is connected to the housing 1. The elastic connection structure 23 can elastically stretch and compress due to its elasticity. That is, when the trigger part 22 is pressed downwards by the first operating force, the elastic connection structure 23 is elastically compressed, allowing the trigger part 22 to move towards the interior of the housing 1 to trigger the detection switch 4. When the first operating force is removed, the elastic connection structure 23 generates an elastic reset force to elastically stretch and act on the trigger part 22, causing it to move towards the exterior of the housing 1 to return to the initial position.

It should be noted that the connection method between the elastic connection structure 23 and the housing 1 is not limited and may include snap connection, adhesive connection, etc.

Further, referring to Figs. 22-24, 33, 45, and 46, in some embodiments of the present invention, the elastic connection structure 23 includes at least two elastic connection arms 231. The two elastic connection arms 231 are provided on opposite sides of the light-transmitting part 21. The inner surface of the first wall 11 is provided with two heat-melting posts 114, which are thermally fused to their corresponding elastic connection arms 231 respectively. That is, the elastic connection structure 23 is fixedly connected to the housing 1 by thermal fusion connection, ensuring a stable connection.

It should be noted that when the elastic connection arms 231 are thermally fused to the heat-melting posts 114, the high fusion temperature may damage other side walls of the housing 1 if the heat-melting posts 114 are close to any side wall other than the first wall 11, affecting the quality and aesthetic appearance of the housing 1. Therefore, in some embodiments of the present invention, each heat-melting post 114 is provided close to the middle of the first wall 11, i.e., away from other side walls of the housing 1, to prevent damage to other side walls and improve the aesthetic appearance of the housing 1.

It should also be noted that the form of the elastic connection arms 231 is not limited. They may be straight or curved. Specifically, in some embodiments of the present invention, the elastic connection arms 231 are curved, making them more prone to elastic deformation under force and easier for users to operate.

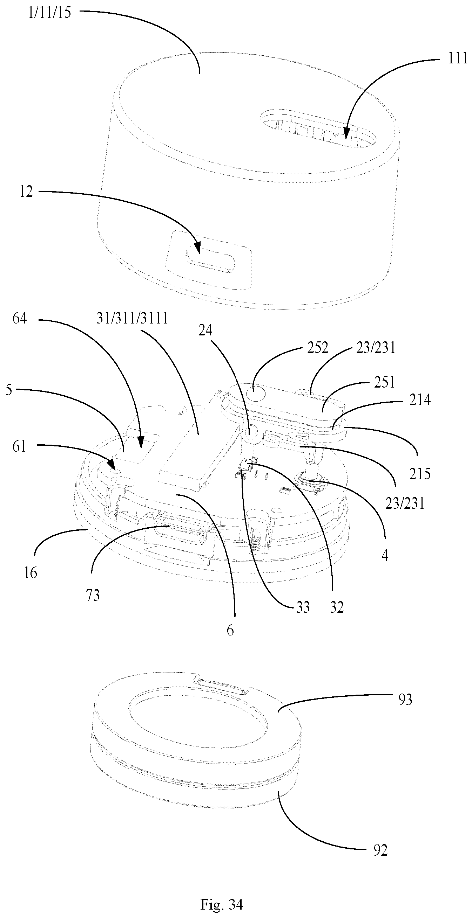

Of course, in the present invention, the above two technical features may be set separately or simultaneously. Specifically, referring to Figs. 24 and 34, in some embodiments of the present invention, the above two technical features are set simultaneously, i.e., each heat-melting post 114 is provided close to the middle portion of the first wall 11, and the elastic connection arm 231 is provided in a curved shape. This not only ensures thermal fusion connection effect between the elastic connection arm 231 and the heat-melting post 114, improving the quality and aesthetic appearance of the microwave sensing apparatus 100, but also facilitates user operation.

It should be noted that in the present invention, the two technical features of "the light-transmitting part 21 is pivotally connected to the housing 1, so that the light-transmitting part 21 can rotate relative to the housing 1 about an axis extending in the third direction, the third direction being parallel to the horizontal direction of the light-transmitting part 21" and "an elastic connection structure 23 is provided between the light-transmitting part 21 and the housing 1, and the elastic connection structure 23 is connected to the housing 1" may be set separately or simultaneously. Specifically, in some embodiments of the present invention, the above two technical features are set simultaneously. Further, the elastic connection structure 23 corresponds to the trigger part 22, and the rotating shaft 24 and the pivot hole 1121 correspond to the junction of the first bearing surface 21511 and the second bearing surface 21512. That is, when the trigger part 22 is subjected to the first operating force, the light-transmitting part 21 can pivot relative to the housing 1, and by the compression of the elastic connection structure 23, the trigger part 22 can be pressed inwards to trigger the detection switch 4, while the indication region 211 and the light sensing region 212 are lifted outwards. When the first operating force is removed, the trigger part 22 is subjected to the elastic force of the elastic connection structure 23 to return to the initial position, and the indication region 211 and the light sensing region 212 also return to their original positions, completing the operation. This improves the rotational stability of the light-transmitting part 21, while the trigger part 22 can automatically reset by the elastic connection structure 23, making the user operation very effortless.

Specifically, in the present invention, the material of the light-transmitting part 21 is a transparent material, which has good light transmittance, allowing the light-transmitting part 21 to not only transmit light in the second direction to be received by the light sensing module 32 but also to display the light in the first direction clearly and brightly in the indication region 211. Further, the transparent material may be transparent glass or transparent PC plastic. Specifically, in some embodiments of the present invention, the material of the light-transmitting part 21 is transparent PC plastic, which has low production cost and elasticity. Compared to the transparent glass, it is less prone to damage upon collision or falling, offering high practicality.

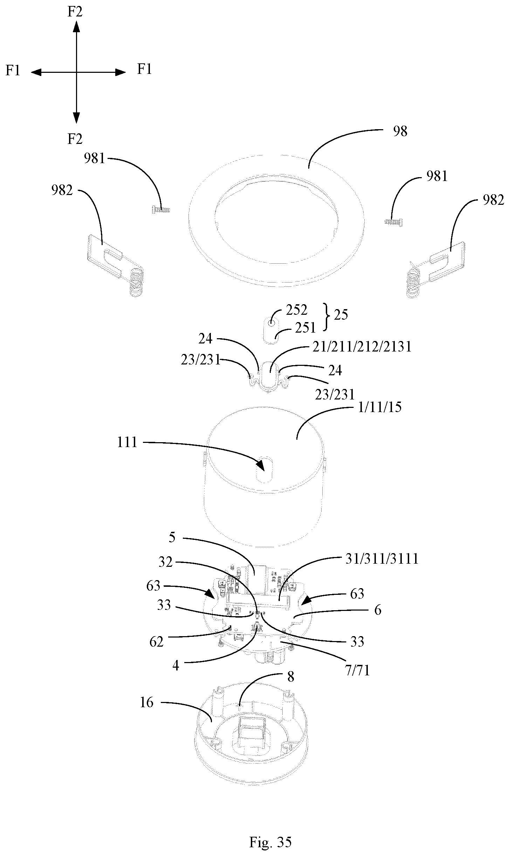

Further, referring to Figs. 22, 23, 33, and 35, the optical transceiver 2 further includes a decorative member 25, which is provided on a side of the light-transmitting part 21 away from the interior of the housing 1 and includes a shielding region 251 and a light-transmitting region 252. The shielding region 251 corresponds to the trigger part 22, and the light-transmitting region 252 corresponds to the light sensing region 212 and the indication region 211. The setting of the shielding region 251 prevents excessive exposure of the internal electronic components of the housing 1 and facilitates user identification of the positions of the trigger part 22, the light sensing region 212, and the indication region 211. More specifically, in some embodiments of the present invention, the decorative member 25 is adhesively bonded to the light-transmitting part 21, simplifying assembly. Further, during the assembly of the decorative member 25 and the light-transmitting part 21, the misassembly may occur due to positioning accuracy issues, leaving part of the light-transmitting part 21 uncovered by the decorative member 25, exposing some internal electronic components of the housing 1 and affecting the appearance. To address this, referring to Figs. 33 and 35, the first wall 11 is provided with a mounting hole 111. The light-transmitting part 21 includes a pressing portion 214 and a bearing portion 215 stacked along its thickness direction. The surface area of the pressing portion 214 is smaller than that of the bearing portion 215, and the pressing portion 214 is adapted to be provided in the mounting hole 111, while the bearing portion 215 is provided inside the housing 1. The decorative member 25 corresponds to the pressing portion 214 and is adapted to the mounting hole 111. Thus, the surface area of the decorative member 25 is larger than that of the pressing portion 214, offsetting the impact of positioning errors during the assembly of the decorative member 25 and the light-transmitting part 21 and ensuring that the light-transmitting part 21 is completely covered by the decorative member 25, preventing exposure of the internal electronic components of the housing 1.

Specifically, in some embodiments of the present invention, the decorative member 25 is an acrylic sheet, and the shielding region 251 of the acrylic sheet is formed by screen printing. The acrylic sheet has low cost but good transparency and light transmission properties. Therefore, by screen printing part of the acrylic sheet to form the shielding region 251, it cannot only avoid exposing the structure of electronic components inside the housing 1, but also improve the aesthetic appearance of the optical transceiver 2.

Specifically, referring to Figs. 22, 25, 33-36 and 41, the microwave sensing apparatus 100 further includes a PCB board 6, where the communication module 5, the detection switch 4, the sensing module 31, the light-emitting module and the light sensing module 32 are provided on the PCB board 6 to transmit the acquired sensing results out. In the present invention, the external transmission can be to a remote server, a user terminal (e.g., a mobile phone, a computer, etc.), or to a gateway for forwarding by the gateway. Those skilled in the art can set specific transmission targets according to requirements, and the present disclosure is not specifically limited. That is, the microwave sensing apparatus 100 achieves network configuration based on the triggering state of the detection switch 4, and after the network configuration is completed, transmits the sensing results of the sensing module 31 and the light sensing module 32 to an external remote server, user terminal or external gateway to correspondingly control the working state of a controlled device. Additionally, it can also control the working state of the light-emitting module 33 according to its different working states, providing users with an intelligent working and living environment.

It should be noted that the communication module 5 can be a Bluetooth module, a Wi-Fi module, etc. In some embodiments of the present invention, the communication module 5 is a Bluetooth module, which has both control and Bluetooth communication functions. It also can connect to the cloud, and control other electronic devices by the automated scenarios configured by the Mi Home APP.

More specifically, the PCB board 6 includes a first PCB board 6, which is provided opposite to the first wall 11. The detection switch 4, the light sensing module 32 and the light-emitting module 33 are provided on the first PCB board 6 to correspond with the optical transceiver 2. If the life presence sensor corresponds to the first wall 11, it is provided on the first PCB board 6. If it corresponds to the second wall 15, when the second wall 15 is opposite to the first wall 11, the life presence sensor is also provided on the first PCB board 6. When the second wall 15 is adjacently connected to the first wall 11, the PCB board 6 further includes a second PCB board 6, with a certain angle between the first PCB board 6 and the second PCB board 6. In this case, the life presence sensor is provided on the second PCB board 6. More specifically, referring to Fig. 22, in some embodiments of the present invention, the life presence sensor corresponds to the first wall 11, thereby simplifying the internal structure of the microwave sensing apparatus 100 and reducing production costs.

Further, the microwave sensing apparatus 100 also includes a power supply unit 7, which is electrically connected to the PCB board 6 to supply power to the communication module 5, the detection switch 4, the sensing module 31, the light-emitting module and the light sensing module 32, achieving electrical connection among the communication module 5 and the detection switch 4, the sensing module 31, the light-emitting module and the light sensing module 32.

It should be noted that in the present invention, the power supply method of the microwave sensing apparatus 100 is not limited.

Specifically, in some embodiments of the present invention, the power supply unit 7 includes a power cord, with one end electrically connected to the PCB board 6 and the other end extending out of the housing 1 via a first through hole opened in the housing 1 to connect to an external power source. Moreover, when the power cord is subjected to a large pulling force, it may easily have poor contact or even disconnect from the PCB board 6, affecting the power supply effect. Therefore, further, in some embodiments of the present invention, an anti-drop post is provided inside the housing 1 for winding part of the power cord, thereby transferring part of the pulling force to the anti-drop post, reducing the force on the connection part between the power cord and the PCB board 6, and extending the service life.

It should be noted that in the present invention, the arrangement of the anti-drop post is not limited. The anti-drop post can be provided on the side wall of the housing 1 or on the PCB board 6. Specifically, in some embodiments of the present invention, the anti-drop post is provided on a side wall of the housing 1, providing high stability.

Specifically, referring to Figs. 35, 36 and 41, in some embodiments of the present invention, the power supply unit 7 includes a power board 71, which is electrically connected to the PCB board 6 via PIN pins. The power board 71 is provided with a wiring port 72, which is electrically connected to an external wire by a second through hole 161 opened in the housing 1. This power supply method is high-voltage power supply, ensuring stable power supply.

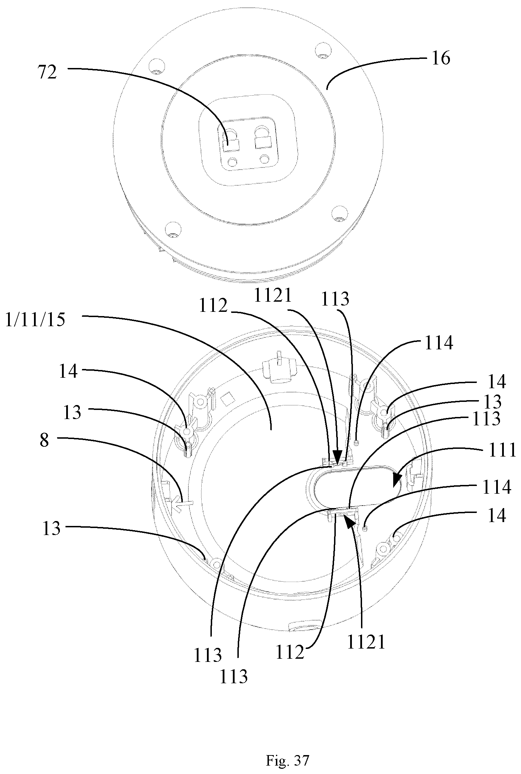

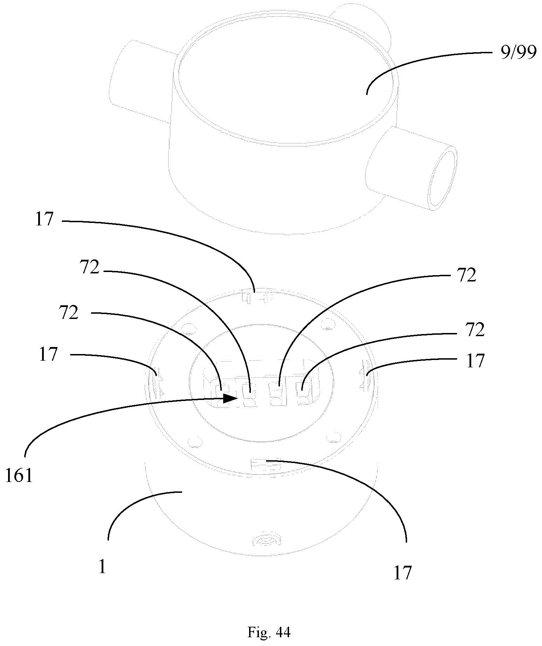

Meanwhile, in the present invention, the gateway includes a wireless communication gateway (e.g., Xiaomi speaker) and a power line carrier communication gateway. The microwave sensing apparatus 100 is wirelessly connected to the wireless communication gateway, which only has communication functions, while the microwave sensing apparatus 100 is wired to the wireless communication gateway, meaning the communication module 5 can be electrically connected to the power line carrier communication gateway via the wiring port 72. The power line carrier communication gateway also has a power load function, i.e., a power supply function. Therefore, the microwave sensing apparatus 100 can be powered by the power line carrier communication gateway, thereby reducing the number of terminals in the wiring port 72. Additionally, the linkage between the microwave sensing apparatus 100 and the controlled device can be achieved by an external gateway or by direct electrical connection with the controlled device, i.e., the wiring port 72 is electrically connected to the controlled device to realize the linkage between the microwave sensing apparatus 100 and the controlled device. More specifically, referring to Fig. 37, in some embodiments of the present invention, the wiring port 72 has two terminals, which can be connected to the live and neutral wires of the power line carrier communication gateway for power supply and communication, or connected to the live and neutral wires of an external power supply line for power supply. Referring to Fig. 44, in other embodiments of the present invention, the wiring port 72 has four terminals, which can be connected to an external power cord, or part of the terminals can be connected to an external power supply line while the other part is connected to the controlled device. In this case, the microwave sensing apparatus 100 is wirelessly connected to an external gateway. Of course, part of the terminals can also be connected to the power line carrier communication gateway while the other part is connected to the controlled device.

Specifically, to facilitate connecting external wires to the wiring port 72, the second through hole 161 is gradually expanded in the inward and outward directions, making it easier for users' fingers to reach inside the housing 1 to connect external wires.

Specifically, referring to Figs. 33 and 34, in some embodiments of the present invention, the power supply unit 7 includes a USB module 73 provided on the PCB board 6. The housing 1 is provided with a USB socket 12 corresponding to the USB module 73 for inserting a USB charging cable to electrically connect with the USB module 73, making charging convenient. When the USB charging cable fails to supply power due to breakage, short circuit, etc., it can be directly replaced with a new one, which is simple, convenient and low-cost for maintenance.

Furthermore, the interface of the USB module 73 can be of different types, and correspondingly, the USB charging cable and the USB socket 12 also have matching types. The USB module 73 interface can be Type-A, Type-B, Type-C, etc. Currently, the Type-C interface is more universal. Therefore, in some embodiments of the present invention, the USB module 73 interface is set as Type-C. Correspondingly, the USB socket 12 is adapted as a Type-C socket, and the USB charging cable is a Type-C charging cable.

Additionally, in the present invention, the installation form of the PCB board 6 is not limited. It can be plugged into the housing 1, snapped into the housing 1, or fastened to the housing 1, etc. Specifically, in some embodiments of the present invention, at least one limiting post 13 is protruded on a side wall of the housing 1 corresponding to the PCB board 6. The PCB board 6 is provided with a limiting hole 61 corresponding to the limiting post 13, and the limiting hole 61 is adapted to the limiting post 13 for inserting the limiting post 13, making the installation simple. More specifically, referring to Figs. 24 and 25, in some embodiments of the present invention, the limiting post 13 is a cross post to enhance the limiting effect.

Specifically, in some embodiments of the present invention, at least one first threaded post 14 is protruded on a side wall of the housing 1 corresponding to the PCB board 6. The PCB board 6 is provided with a first screw 62 adapted to the first threaded post 14, so that the PCB board 6 is threadedly connected to the housing 1 via the first threaded post 14 and the first screw 62, ensuring stable installation of the PCB board 6.

It should be noted that in the present invention, the above two technical features can be set alternatively or simultaneously. Specifically, referring to Figs. 24 and 25, in some embodiments of the present invention, the above two technical features are set simultaneously, i.e., at least one limiting post 13 is protruded on a side wall of the housing 1 corresponding to the PCB board 6, and the PCB board 6 is provided with a limiting hole 61 corresponding to the limiting post 13, with the limiting hole 61 adapted to the limiting post 13 for inserting the limiting post 13. Additionally, at least one first threaded post 14 is protruded on a side wall of the housing 1 corresponding to the PCB board 6, and the PCB board 6 is provided with a first screw 62 adapted to the first threaded post 14, so that the PCB board 6 is threadedly connected to the housing 1 via the first threaded post 14 and the first screw 62. The height of the first threaded post 14 is less than that of the limiting post 13, further improving the installation stability of the PCB board 6, thereby enhancing the installation stability of electronic components on the PCB board 6 and improving the sensing effect of the sensing module 31. The first threaded post 14 also has a supporting function to support the PCB board 6, thereby defining the distance between electronic components on the PCB board 6 and the corresponding side wall of the PCB board 6.

More specifically, referring to Figs. 24 and 25, in some embodiments of the present invention, the limiting post 13 is connected to the first threaded post 14, thereby increasing the strength of both the limiting post 13 and the first threaded post 14.

Of course, when the power supply unit 7 includes the power board 71, and when the high-voltage power supply method is selected, the installation form of the power board 71 can also be the same as that of the PCB board 6, and they are positioned and fixed by setting the limiting posts 13 and/or screws.

Further, based on the above embodiment where "an elastic connection structure 23 is provided between the light-transmitting part 21 and the housing 1, and the elastic connection structure 23 includes at least two elastic connection arms 231 provided on opposite sides of the light-transmitting part 21; the inner surface of the first wall 11 is provided with two heat-melting posts 114, each thermally fused to its corresponding elastic connection arm 231," since thermal fusion temperature between the elastic connection arms 231 and the heat-melting posts 114 is relatively high, the heat-melting posts 114 are positioned away from the limiting post 13 and the first threaded post 14 to prevent damage to them.

Additionally, based on the above embodiments where "the power supply unit 7 includes a USB module 73 provided on the PCB board 6; the housing 1 is provided with a USB socket 12 corresponding to the USB module 73 for inserting a USB charging cable to electrically connect with the USB module 73" and "the housing 1 is provided with at least one limiting post 13 protruding from a side wall corresponding to the PCB board 6, the PCB board 6 is provided with a limiting hole 61 corresponding to the limiting post 13, and the limiting hole 61 is adapted to the limiting post 13 for insertion of the limiting post 13," the microwave sensing apparatus 100 is powered via USB charging. When inserting or removing the USB charging cable with an operating force, this force acts on the USB module 73 and then on the PCB board 6, causing the PCB board 6 to shake and affecting the installation stability of the electronic components on the PCB board 6. Therefore, referring to Figs. 33 and 34, in some embodiments of the present invention, corresponding to the force direction on the PCB board 6, at least two limiting posts 13 are provided, and correspond to two edge portions of the PCB board 6 arranged in opposite directions, with one of the limiting posts 13 adjacent to the USB socket 12 and the other directly opposite to the USB socket 12. The force exerted by the limiting posts 13 on the PCB board 6 can counteract the operating force, making the installation of the PCB board 6 more stable, preventing shaking, and improving the installation stability of the electronic components, ensuring the performance of the microwave sensing apparatus 100.

Of course, to further improve the installation stability of the PCB board 6, positioning members may be provided. Specifically, in some embodiments of the present invention, the housing 1 is provided with multiple positioning assemblies spaced along the circumference of the PCB board 6. Each positioning assembly includes a first positioning protrusion and a second positioning protrusion spaced along the thickness direction of the PCB board 6, with a spacing greater than or equal to the thickness of the PCB board 6, so that the positioning assembly can snap onto the PCB board 6 to fix its installation position and improve its installation stability. Further, the first positioning protrusion and the second positioning protrusion are arranged sequentially along the installation direction of the PCB board 6, and the end surface of the first positioning protrusion away from the second positioning protrusion is inclined towards the second positioning protrusion, facilitating the installation and disassembly of the PCB board 6 and improving efficiency. Still further, based on the above embodiment where "the housing 1 is provided with at least one first threaded post 14 protruding from a side wall corresponding to the PCB board 6, the PCB board 6 is provided with a first screw 62 adapted to the first threaded post 14, so that the PCB board 6 is threadedly connected to the housing 1 via the first threaded post 14 and the first screw 62," the second positioning protrusion includes the first threaded post 14, simplifying the structure and reducing production costs.

Of course, to further improve the installation stability of the PCB board 6, pressing posts 18 may be provided. Specifically, at least one side wall of the housing 1 corresponding to the PCB board 6 is provided with the pressing posts 18 to act on the PCB board 6 along its thickness direction, limiting the movement of the PCB board 6 in the thickness direction.

More specifically, the above three technical features may be set separately or simultaneously. Referring to Figs. 24, 25, 33, 34, 37, and 38, in some embodiments of the present invention, the above three technical features are set simultaneously. The housing 1 is cylindrical, with a first wall 11 (top wall), a third wall 16 (bottom wall) opposite to the first wall 11, and a peripheral side wall connecting the first wall 11 and the third wall 16. The peripheral side wall and the first wall 11 together form an upper shell with a receiving cavity, and the third wall 16 is detachably covered on the open end of the receiving cavity. The life presence sensor corresponds to the first wall 11. The first threaded post 14 and the limiting post 13 are provided on the first wall 11, the pressing post 18 is provided on the third wall 16, and the positioning assembly and the USB socket 12 are provided on the peripheral side wall. Further, the first wall 11 is provided with a plurality of second threaded posts, and the third wall 16 is provided with second screws corresponding to the second threaded posts for insertion. The upper shell and the third wall 16 are threadedly connected by the second threaded posts and the second screws. Still further, the pressing post 18 is hollow and corresponds to the second screw. The end surface area of the pressing post 18 is larger than that of the second threaded post, so that when the third wall 16 is covered on the upper shell, the pressing post 18 sleeves the periphery of the second threaded post and presses against the PCB board 6. This arrangement of structures makes the housing 1 structurally concise.

Specifically, to facilitate quick and correct installation of the PCB board 6, the first wall 11 and the PCB board 6 are provided with installation marks 8, respectively. This allows quick identification of the installation direction of the PCB board 6 by the installation marks 8, ensuring that after installation, the electronic components on the PCB board 6 correspond to the optical transceiver 2. More specifically, in some embodiments of the present invention, the installation mark 8 is set as an arrow pattern, clearly indicating the installation direction for quick and correct assembly. Specifically, to facilitate the installation of the PCB board 6, referring to Fig. 35, in some embodiments of the present invention, opposite end surfaces of the PCB board 6 are partially recessed to form gripping grooves 63, allowing users to insert their fingers into the gripping grooves 63 to grip the PCB board 6 for installation or disassembly, making the operation simple, convenient, and quick.

It should be noted that in the present invention, the above two technical features may be set separately or simultaneously. Specifically, referring to Fig. 35, in some embodiments of the present invention, the above two technical features are set simultaneously, i.e., the first wall 11 and the PCB board 6 are provided with installation marks 8, and the opposite end surfaces of the PCB board 6 are partially recessed to form gripping grooves 63, enabling quick assembly of the PCB board 6 and greatly improving assembly efficiency.

Further, the third wall 16, i.e., the bottom wall of the housing 1, must be correctly installed when covering the upper shell of the housing 1. For example, in the above embodiment where "the power supply unit 7 includes a power board 71, which is electrically connected to the PCB board 6 via PIN pins. The power board 71 is provided with a wiring port 72, which is electrically connected to an external wire by a second through hole 161 opened in the housing 1", the second through hole 161 is provided on the third wall 16 and is rectangular. If the third wall 16 is installed in the wrong direction, the second through hole 161 will not match the wiring port 72, affecting the operation of the wiring port 72 with the external power cord, or even causing the third wall 16 to fail to cover the upper shell, requiring re-installation. To address this, fool-proof posts may be added to facilitate identification of the installation direction. More specifically, a first connecting plate is connected between the second threaded post and the peripheral side wall, and the end surface of the first connecting plate is lower than that of the second threaded post. At the same time, the first wall 11 is also provided with a first fool-proof post, and a second connecting plate is connected between the first fool-proof post and the peripheral side wall. The end surface of the second connecting plate is flush with that of the first fool-proof post. The third wall 16 is provided with a second fool-proof post corresponding to the first fool-proof post, and the end surface area of the second fool-proof post is larger than that of the first fool-proof post. The second fool-proof post is recessed to form an avoidance groove at the position corresponding to the second connecting plate, so that when the third wall 16 is covered on the upper shell, the second fool-proof post sleeves the periphery of the second threaded post, and the second connecting plate engages with the avoidance groove. This arrangement limits the installation direction of the third wall 16, allowing identification of the correct installation direction by the positions of the first and second fool-proof posts, facilitating the assembly of the third wall 16 and the upper shell.

Of course, the installation direction may also be indicated by installation marks 8. Since identifying the position of the installation marks 8 is simpler than identifying the positions of the first and second fool-proof posts, the assembly by the installation marks 8 is quicker than by the fool-proof posts. Specifically, in some embodiments of the present invention, the third wall 16 is also provided with installation marks 8. If the housing 1 is provided with the power board 71, the power board 71 is also provided with installation arrow marks, facilitating quick and correct installation.

Further, referring to Fig. 25, in some embodiments of the present invention, the PCB board 6 is provided with an avoidance hole 64 corresponding to the antenna of the communication module 5, reducing interference with antenna signal transmission and ensuring normal signal reception and transmission by the communication module 5.

Specifically, in the present invention, the housing 1 has a second wall 15, and the sensing module 31 corresponds to and is parallel to the second wall 15. The second wall 15 is any wall of the housing 1, improving the sensing effect of the sensing module 31. More specifically, in some embodiments of the present invention, the second wall 15 and the first wall 11 are the same wall of the housing 1. More specifically, one end of the sensing module 31 is electrically connected to the PCB board 6 by PIN pins, and the other end is provided with a support member corresponding to the PIN pins to ensure that the sensing module 31 is parallel to the second wall 15. It should be noted that in the present invention, the form of the support member is not limited, and can be columnar, or plate, etc. At the same time, the manner in which the support member is connected to the PCB board 6 and the sensing module 31 is also not limited, and can be threaded, snap-fitted, etc. More specifically, in some embodiments of the present invention, the support member is bonded to the sensing module 31 and the PCB board 6, respectively, with simple operation.

Specifically, in some embodiments of the present invention, the sensing module 31 is a radar module 311. By transmitting detection waves to the actual sensing region and receiving echoes fed back by moving objects in the target sensing region within the actual sensing region, human body targets in a set space can be detected. Combined with radar signal processing and precise human body sensing algorithms, high-sensitivity human presence detection is achieved, capable of identifying both moving and stationary human bodies, and calculating auxiliary information such as target distance. Specifically, the radar module 311 can detect and identify human bodies in motion, micro-motion, standing, sitting, or lying positions, enabling the microwave sensing apparatus 100 to sense human presence in its space. The sensing results can be sent out for automatic lighting control, and can also automatically turn off controlled devices like TVs and air conditioners when prolonged absence is detected, ensuring both energy efficiency and safety.

Specifically, since the radar module 311 is housed within the housing 1, detection waves pass through the housing 1 during transmission and reception, resulting in losses. Therefore, certain performance parameters of the housing 1 (including material, structural shape, thickness, uniformity, and distance from the radar module 311, etc.) will affect the performance of the radar module 311 (such as power loss, antenna gain, sensing range, etc.). Therefore, in the present invention, certain performance parameters of the housing 1 are specifically designed.

Specifically, different materials of the housing 1 result in varying detection wave losses for the radar module 311, thereby affecting its sensing distance. Thus, the housing 1 must exhibit good wave-transmitting properties at the operating center frequency of the radar module 311 and cannot contain metal or materials that shield detection waves. Generally, the higher the relative dielectric constant of the housing material, the greater the detection wave loss and the shorter the sensing distance. Accordingly, in some embodiments of the present invention, the relative dielectric constant of the housing 1 material is less than or equal to 3.0. More specifically, in some embodiments of the present invention, the housing 1 material is ABS plastic, which has a relative dielectric constant of 2.5, resulting in minimal detection wave loss and low production costs.

Specifically, in the present invention, based on the embodiment where "the housing has a second wall, the radar module corresponds to the second wall, and the second wall is any wall of the housing," the wavelength of the detection wave from the radar module 311 in air is set as λ₁, the distance from the radar module 311 to the second wall 15 is set as H, and H ≥ n × 0.5λ₁, where n is a positive integer. Preferably, n is 2 or 3, with an error margin of ±1.2 mm. Specifically, in the present invention, the thickness of the second wall 15 is uniformly set. The wavelength of the detection wave from the radar module 311 in the housing 1 is set as λ₂, and the thickness of the portion of the second wall 15 corresponding to the sensing region of the radar module 311 is set as D, where D ≤ λ₂. Further, 0.1 × λ₂ ≤ D ≤ 0.7 × λ₂, preferably D = 0.125 × λ₂ or D = 0.5 × λ₂. The thickness of the second wall 15 corresponding to the radar module 311 sensing region is further reduced to reduce the loss of the detection wave.

It should be noted that the portion of the second wall 15 corresponding to the sensing region of the radar module 311 may be the entire second wall 15 or only a part of it.

Furthermore, if the part of the second wall 15 corresponding to the sensing region of the radar module 311 is only a part of the part of the second wall 15 and the thickness of the part of the second wall 15 corresponding to the sensing region of the radar module 311 is too thin, the strength of the second wall 15 will be affected in a case that the thickness of all the parts of the second wall 15 is the same as the thickness of the part of the second wall 15 corresponding to the sensing region of the radar module 311. In this regard, the thickness of the part of the second wall 15 corresponding to the sensing region of the radar module 311 can be designed to increase, so that the thickness of the second wall 15 is set as D₂, D2 ≥ D, thereby ensuring the strength of the second wall 15, namely, the housing 1, and improving the practicality. Meanwhile, the overall thickness of the second wall 15 is uniform, and the aesthetics is high.

In addition, the structural design of the radar module 311 itself affects its performance, including power consumption, sensing range, sensing accuracy, and production cost.

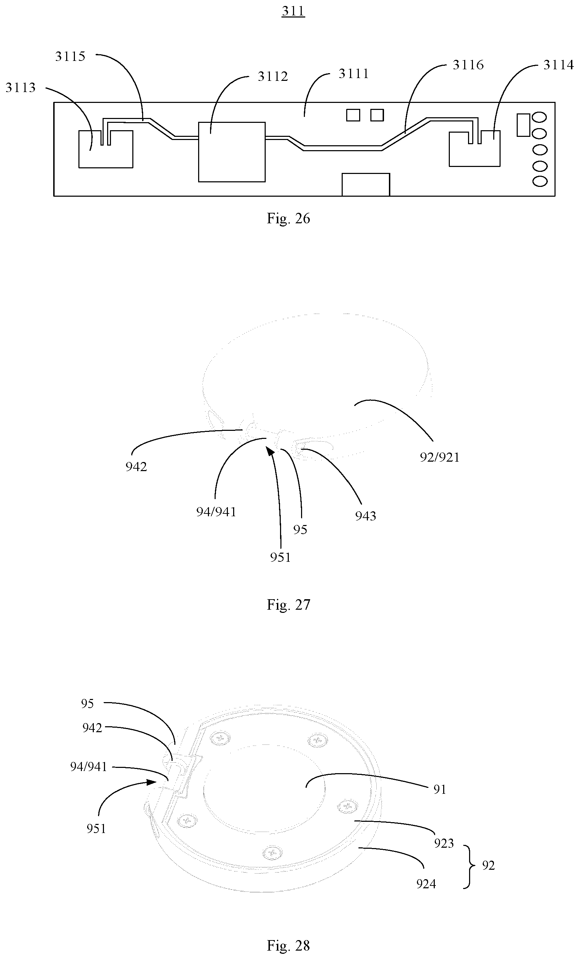

Specifically, referring to Fig. 26, the radar module 311 includes a dielectric board 3111, a radar chip 3112, a transmitting antenna 3113, and a receiving antenna 3114. The radar chip 3112, the transmitting antenna 3113, and the receiving antenna 3114 are mounted on the signal radiation surface of the dielectric board 3111. The radar chip 3112 is communicatively connected to the communication module 5. The transmitting antenna 3113 is electrically connected to the radar chip 3112 via a first feed line 3115, and the receiving antenna 3114 is electrically connected to the radar chip 3112 via a second feed line 3116. It should be noted that, to miniaturize the microwave sensing apparatus 100, the radar module 311 is also designed for compactness. Specifically, the dielectric board 3111 is measured to 7 mm × 35 mm. Based on the specific structure of the radar module 311, the principle is as follows. The radar chip 3112 emits detection waves by the transmitting antenna 3113, forming an actual sensing region covered by the detection waves. The receiving antenna 3114 receives echoes from moving objects in the target sensing region within the actual sensing region. The radar chip 3112 processes the echoes into sensing data and transmits it to the communication module 5, which then processes the sensing data according to preset procedures to generate the sensing result.

Further, referring to Fig. 26, the transmitting antenna 3113 and the receiving antenna 3114 are positioned on both sides of the radar chip 3112. Additionally, the distance from the transmitting antenna 3113 to the radar chip 3112 is less than that from the receiving antenna 3114 to the radar chip 3112. More specifically, in some embodiments, the distance from the transmitting antenna 3113 to the radar chip 3112 is 4.66 mm, and the distance from the receiving antenna 3114 to the radar chip 3112 is 12.71 mm.

Further, referring to Fig. 26, the first feed line 3115 is less than the second feed line 3116, avoiding winding structures in the first feed line 3115 to minimize radiation from bends, thereby reducing its impact on the antenna radiation pattern and enhancing detection wave transmission quality. More specifically, the lengths of the first feed line 3115 and the second feed line 3116 are determined based on their distances to the transceiving antennas and frequency parameters. Based on the above embodiment where "the distance from the transmitting antenna 3113 to the radar chip 3112 is 4.66 mm, and the distance from the receiving antenna 3114 to the radar chip 3112 is 12.71 mm.", the length of the first feed line 3115 is set to 7.81 mm, and the length of the second feed line 3116 is set to 16.38 mm.

Specifically, by selecting the first feed line 3115 and the second feed line 3116 with different waveguide wavelengths, the first feed line 3115 can avoid winding structures while ensuring synchronized transmission of the receiving antenna 3114 and the transmitting antenna. That is, the waveguide wavelength of the first feed line 3115 is less than that of the second feed line 3116, so that the detection waves transmitted by the first feed line 3115 and the second feed line 3116 can simultaneously reach their respective connected antennas.

It should also be noted that, the electrical connection methods between the transmitting antenna 3113 and the first feed line 3115, and between the receiving antenna 3114 and the second feed line 3116, are not limited.

Specifically, referring to Fig. 26, in some embodiments of the present invention, the transmitting antenna 3113 is connected to the first feed line 3115 with an embedded feed, and the receiving antenna 3114 is connected to the second feed line 3116 with an embedded feed such that the embedded feed is located near the center of the antenna and the input impedance is reduced as compared to other electrical connections (e.g., edge feeds, etc.).

The forms of the transmitting antenna 3113 and the receiving antenna 3114 are not restricted. Referring to Fig. 26, in some embodiments of the present invention, each of the transmitting antenna 3113 and the receiving antenna 3114 is a rectangular microstrip patch antenna, and the beam is narrowed, i.e., a multi-antenna integrated design is advantageous for the millimeter-wave radar sensor integrated miniaturization design. More specifically, the area of the transmitting antenna 3113 is larger than that of the receiving antenna 3114. In some embodiments, the transmitting antenna 3113 is measured to 3.63 mm × 2.89 mm, and the receiving antenna 3114 is measured to 3.33 mm × 2.81 mm.

Specifically, in the present invention, the radar module 311 has a sensing angle range of 0-120°. Its wide sensing range can at least meet the use of general working and living space, and its practicability is high.

Specifically, in the present invention, the sensing distance of the radar module 311 ranges from 0.75 m to 6.0 m, covering a wide range and meeting the needs of general living and working spaces, offering high practicality.

It should be noted that the above two technical features may be set separately or simultaneously. Specifically, in some embodiments of the present invention, the above two technical features are set simultaneously, i.e., the radar module 311 has a sensing angle range of 0-120°, and the sensing distance of the radar module 311 ranges from 0.75 m to 6.0 m. More specifically, within the sensing angle range of 0-120°, when a person is sitting still, the sensing distance of the radar module 311 is at least 4 meters; when a person is standing, the sensing distance is at least 4.5 meters; and when a person is moving, the sensing distance is at least 5 meters.

Referring to Figs. 22, 23, 27-36, and 39-44, in some embodiments, to facilitate secure mounting of the housing 1 to a mounting surface, the microwave sensing apparatus 100 further includes a mounting bracket 9 connected to the housing 1 for secure mounting of the housing 1 to a mounting surface.

The mounting bracket 9 is connected to the housing 1, and is configured to drive the housing 1 to change angles in at least one degree of freedom so as to change the actual sensing region of the sensing module 31, thereby achieving flexible mounting of the microwave sensing apparatus 100, facilitating a user to adjust the actual sensing region of the microwave sensing apparatus 100 according to the actual situation of the mounting space and usage requirements, and further enabling the target sensing region formed on the basis of a certain sub-sensing region in the actual sensing region to have a larger adjustable range on the basis of flexible adjustment of the actual sensing region. Thus, it enables the microwave sensing apparatus 100 to be applicable to different use scenarios, and improve the practicality of the microwave sensing apparatus 100.

Still further, in some embodiments of the present invention, the mounting bracket 9 is configured to change angles in at least two degrees of freedom and drive the housing 1 to move for adjusting the actual sensing region of the sensing module 31. By changing angles in two degrees of freedom, the adjustable angle range of the actual sensing region of the sensing module 31 is increased, making it suitable for more installation environments and enabling adjustment of the actual sensing region of the sensing module 31 to an optimal region.

More specifically, referring to Figs. 22, 23, 24, and 27-34, the mounting bracket 9 includes a base 91 for fixed mounting on the mounting surface, a first movable member 92, and a second movable member 93. The first movable member 92 is rotatably connected to the base 91. The second movable member 93 is rotatably connected to the first movable member 92 and is rotatably connected to the base 91 via the first movable member 92, enabling the second movable member 93 to change angles in at least two degrees of freedom relative to the base 91. Herein, the second movable member 93 is connected to the housing 1 and configured to support the housing 1, capable of driving the housing 1 to move under a second operating force, and to fixedly support the housing 1 when the second operating force is removed. That is, by rotating the second movable member 93, the position of the second movable member 93 can be changed in one degree of freedom relative to the base 91 to adjust the actual sensing region of the microwave sensing apparatus 100. By rotating the first movable member 92, the position of the second movable member 93 can be changed in another degree of freedom relative to the base 91 to adjust the actual sensing region of the microwave sensing apparatus 100. Additionally, by first rotating one of the first movable member 92 and the second movable member 93 and then rotating the other, the position-changeable range of the second movable member 93 can be increased, thereby expanding the adjustable range of the actual sensing region of the microwave sensing apparatus 100 and improving practicality.

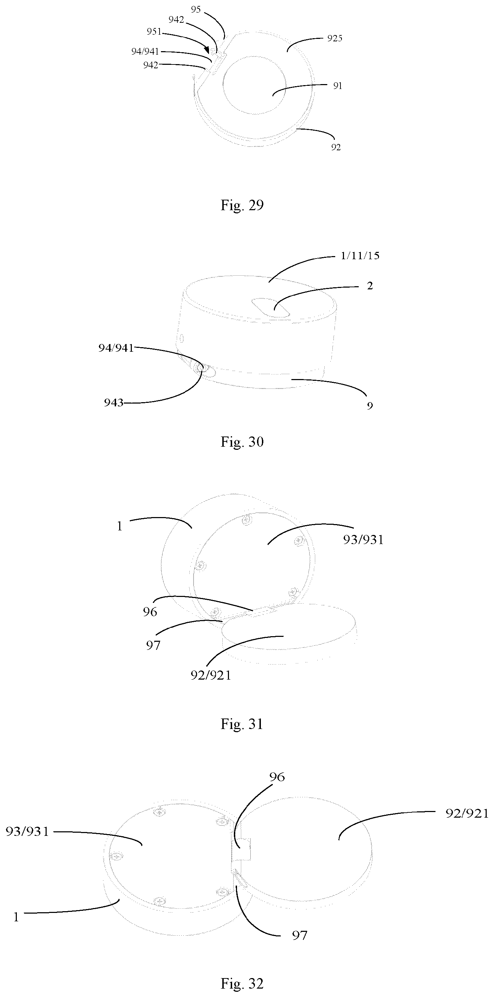

It should be noted that the rotatable connection manner between the first movable member 92 and the second movable member 93 is not limited. In some embodiments of the present invention, the first movable member 92 and the second movable member 93 are pivotally connected by a first rotating shaft 24, enabling the second movable member 93 to change angles relative to the base 91 in a first degree of freedom. The first rotation shaft 24 extends in a direction parallel to the base 91. The first movable member 92 has a first contact surface 921, and the second movable member 93 has a second contact surface 931. The mounting bracket 9 has a first state and a second state. In the first state, the first contact surface 921 and the second contact surface 931 are at least partially in contact or at least partially overlapped. In the second state, an angle is formed between the first contact surface 921 and the second contact surface 931. It can be understood that the first contact surface 921 is a side of the first movable member 92 facing towards the second movable member 93, and the second contact surface 931 is a side of the second movable member 93 facing towards the first movable member 92. That is, the first contact surface 921 and the second contact surface 931 are either fully or partially in contact. Thus, the first state can be understood as the state where the angle between the first movable member 92 and the second movable member 93 is 0°. Specifically, referring to Fig. 30, in some embodiments of the present invention, in the first state, the first contact surface 921 and the second contact surface 931 are fully in contact. The first contact surface 921 and the second contact surface 931 being at least partially overlapped means they are either fully or partially overlapped. That is, when one of the first contact surface 921 and the second contact surface 931 has a corresponding recess to accommodate the other, enabling full overlap when in the first state, or when one of the first contact surface 921 and the second contact surface 931 has partially concave regions and the other has corresponding convex regions, enabling concave-convex fit of the first contact surface 921 and the second contact surface 931, i.e., partial overlap when in the first state. This overlapping arrangement can conceal part of the structure of the mounting bracket 9, reducing its overall volume and further decreasing the volume of the microwave sensing apparatus 100, even allowing the mounting bracket 9 and the housing 1 to visually integrate, enhancing overall aesthetic appearance.

Further, referring to Fig. 30, in some embodiments of the present invention, the first rotation shaft 24 is provided at an edge of the first movable member 92, which can reduce interference between the second movable member 93 and the first movable member 92 during pivotal movement of the second movable member 93 relative to the first movable member 92, thereby facilitating the pivotal movement of the second movable member.

Further, referring to Figs. 23 and 27-32, a first connection portion 95 and a second connection portion 96 are provided between the first movable member 92 and the second movable member 93. The first connection portion 95 is formed at an edge portion of one of the first movable member 92 and the second movable member 93 and is concavely formed with a mounting groove 951. The mounting groove 951 has opposite side walls each penetratingly provided with a first rotation hole. The second connection portion 96 protrudes from the other of the first movable member 92 and the second movable member 93, is adapted to the mounting groove 951, and is penetratingly provided with a second rotation hole corresponding to the first rotation hole. The first rotation shaft 24 is inserted through the first rotation hole and the second rotation hole, so that the first connection portion 95 and the second connection portion 96 are pivotally connected, thereby enabling relative pivotal movement between the first movable member 92 and the second movable member 93, and improving rotational stability between the first movable member 92 and the second movable member 93.

It should be noted that the positions of the first connection portion 95 and the second connection portion 96 are not limited. Specifically, referring to Figs. 23 and 27-32, in some embodiments of the present invention, the first connection portion 95 is formed on the first movable member 92, meaning the mounting groove 951 is formed at an edge portion of the first movable member 92, and the second connection portion 96 protrudes from the second movable member 93. Referring to Figs. 23 and 27-32, in some embodiments of the present invention, the first connection portion 95 is formed on the second movable member 93, meaning the mounting groove 951 is formed at an edge portion of the second movable member 93, and the second connection portion 96 protrudes from the first movable member 92.

Further, the peripheral portion of the hole side wall where the first rotation hole is formed on the first connection portion 95 is curved, enabling the second movable member 93 to change angles relative to the base 91 in the first degree of freedom within a range of 0° to 90°, further reducing interference between the second movable member 93 and the first movable member 92 during pivotal movement, expanding the angle-changeable range of the second movable member 93 in the first degree of freedom, and thereby increasing the detectable range of the sensing module 31. Further, referring to Figs. 23 and 27-32, the first movable member 92 or the second movable member 93 provided with the second connection portion 96 is concavely provided with an avoidance portion 97 corresponding to the first connection portion 95 to avoid the first connection portion 95 during rotation, enabling the second movable member 93 to change angles relative to the base 91 in the first degree of freedom within a range of 0° to 180°. The avoidance portion 97 further reduces interference between the second movable member 93 and the first movable member 92 during pivotal movement, expanding the angle-changeable range of the second movable member 93 in the first degree of freedom.

Specifically, to enable the second movable member 93 to more stably support the housing 1 when the second operating force is removed, referring to Fig. 22, a limiting member 942 is provided between each end of the second connection portion 96 and the corresponding side wall of the mounting groove 951. After the second movable member 93 drives the housing 1 to move in response to the operating force, the limiting member 942 provides a limiting force between the first connection portion 95 and the second connection portion 96 to fixedly support the housing 1. With this arrangement, when the second movable member 93 and the first movable member 92 perform pivotal movement, the friction (i.e., the limiting force) is generated between the first connection portion 95, the second connection portion 96 and the limiting member 942, thereby increasing the rotation damping of the second movable member 93 to fixedly support the housing 1. More specifically, in some embodiments of the present invention, the limiting member 942 is an iron plate. Specifically, to enable the second movable member 93 to fixedly support the housing 1 when the second operating force is removed, referring to Fig. 22, the first rotation shaft 24 is a bolt 941, which is fixedly inserted into the first connection portion 95 and the second connection portion 96 via a nut 943. With this configuration, during pivotal movement of the second movable member 93 and the first movable member 92, the friction is generated between the bolt 941 and the nut 943, increasing the rotation damping of the second movable member 93 to fixedly support the housing 1. Meanwhile, the nut 943 can move relative to the bolt 941 under force, allowing adjustment of the friction between the first connection portion 95 and the second connection portion 96. This not only enables fixed support of the housing 1, but also allows the second movable member 93 to pivot under different magnitudes of the second operating force by adjusting the position of the nut 943, facilitating user operation.

It should be noted that the above two technical features can be implemented separately or together. Specifically, referring to Fig. 22, in some embodiments of the present invention, both features are implemented simultaneously: a limiting member 942 is provided between each end of the second connection portion 96 and the corresponding side wall of the mounting groove 951. After the second movable member 93 drives the housing 1 to move in response to the operating force, the limiting member 942 provides a limiting force between the first connection portion 95 and the second connection portion 96 to fixedly support the housing 1. The first rotation shaft 24 is a bolt 941 fixedly inserted into the first connection portion 95 and the second connection portion 96 via a nut 943. This means the rotation damping of the second movable member 93 is increased by both the limiting member 942 and the bolt 941, enabling the housing 1 to be more stably supported by the second movable member 93.

Specifically, in other embodiments of the present invention, referring to Figs. 33 and 34, the first rotation shaft 24 extends in a direction perpendicular to the base 91, and the first movable member 92 and the second movable member 93 are sleeved and/or magnetically connected, enabling the first movable member 92 to rotate about the first rotation shaft 24 relative to the second movable member 93, with the first contact surface 921 and the second contact surface 931 in contact or at least partially overlapped. That is, whether the second movable member 93 and the first movable member 92 are in relative motion or stationary, the angle between them is 0°. Of course, in this case, the first rotation shaft 24 may be a solid body, and the first movable member 92 and the second movable member 93 may be sleeved via the first rotation shaft 24. Additionally, the first movable member 92 and the second movable member 93 may be magnetically connected to enhance the connection stability and rotational stability between them. Alternatively, the first rotation shaft 24 may be an imaginary body, and the first movable member 92 and the second movable member 93 may be solely magnetically connected, allowing adjustment of their relative positions and thereby expanding the adjustable range of the actual sensing region of the sensing module 31.

In addition, the rotatable connection between the first movable member 92 and the base 91 is not limited. Specifically, the first movable member 92 is sleeved or magnetically connected to the base 91 and can rotate relative to the base 91 about a second rotation shaft extending in a direction perpendicular to the base 91. Of course, the second rotation shaft may be a solid body or an imaginary body.

Further, the first movable member 92 can rotate relative to the base 91 about the second rotation shaft within an angle range of 0° to 360°, enabling the first movable member 92 to perform continuous circumferential rotation or reciprocating circumferential rotation relative to the base 91, thereby expanding the adjustable range of the actual sensing region of the microwave sensing apparatus 100.

Specifically, referring to Figs. 22, 23, 27-29, and 33, in some embodiments of the present invention, the first movable member 92 includes a bottom cover 923 and a surface cover 924, with the bottom cover 923 having an accommodation hole 9231 therethrough. The surface cover 924 is detachably mounted on the bottom cover 923. The base 91 is inserted into the bottom cover 923 through the accommodation hole 9231 to be sleeved within the first movable member 92 and can rotate relative to the bottom cover 923 about the second rotation shaft, thereby achieving rotatable connection between the first movable member 92 and the base 91, allowing 360° rotation relative to the base 91 about the second rotation shaft, and facilitating disassembly and assembly.

Further, since the contact area between the base 91 and the surface cover 924 is large, when the first movable member 92 rotates relative to the base 91, the friction generated between them is also large, meaning that the rotation damping of the first movable member 92 is large, affecting the rotation effect. In this regard, referring to Fig. 22, in some embodiments of the present invention, at least one resistance rib 911 protrudes from the end face of the base 91 facing towards the first movable member 92. When the surface cover 924 is mounted on the bottom cover 923, the resistance rib 911 abuts against the surface cover 924, ensuring only the resistance rib 911 contacts the surface cover 924 with a small contact area, thereby reducing friction between them during relative rotation of the first movable member 92 and the base 91, facilitating rotation.

It should be noted that in the present invention, the connection method between the bottom cover 923 and the surface cover 924 is not limited, and may include threaded connection, snap connection, plug connection, etc. Specifically, in some embodiments of the present invention, the bottom cover 923 and the surface cover 924 are threadedly connected, making assembly and disassembly simple and convenient with low production costs.

Specifically, in some embodiments of the present invention, a silicone pad 925 is provided on a side of the bottom cover 923 away from the surface cover 924, and the silicone pad 925 is provided with an avoidance through hole 9251 corresponding to the base 91, enabling the bottom cover 923 to rotate relative to the base 91. The silicone pad 925 increases the friction between the bottom cover 923 and the mounting surface, i.e., increases the rotation damping between the first movable member 92 and the mounting surface, facilitating the mounting bracket 9 to more stably support and fix the housing 1 when the second operating force is removed. Meanwhile, based on the aforementioned embodiment where "the bottom cover 923 is threadedly connected to the surface cover 924," when the bottom cover 923 is provided with screws and the surface cover 924 is provided with screw posts, the silicone pad 925 can correspond to the screws to conceal them, thereby improving the aesthetics of the bottom cover 923 and consequently enhancing the overall aesthetic appearance of the mounting bracket 9.

It should be noted that in the present invention, the above two technical features can be implemented separately or simultaneously. Specifically, referring to Fig. 22, in some embodiments of the present invention, both technical features are implemented simultaneously: the bottom cover 923 is threadedly connected to the surface cover 924, and a silicone pad 925 with an avoidance through hole 9251 corresponding to the base 91 is provided on a side of the bottom cover 923 away from the surface cover 924. This facilitates assembly and disassembly of the first movable member 92 and the base 91, reduces production costs, increases rotation damping between the first movable member 92 and the mounting surface, ensures the mounting bracket 9 can more stably support the housing 1 when the second operating force is removed, and improves the overall aesthetic appearance of the mounting bracket 9.

It should also be noted that the connection method between the bottom cover 923 and the silicone pad 925 is not limited and may include snap-fit, adhesive bonding, threaded connection, etc. Additionally, in other embodiments of the present invention, the second rotation shaft extends in a direction parallel to the base 91, and the first movable member 92 is pivotally connected to the base 91 by the second rotation shaft.

In the present invention, the assembly method between the mounting bracket 9 and the housing 1 is not limited.

Specifically, referring to Fig. 23, in some embodiments of the present invention, the housing 1 has an opening, and the second movable member 93 covers the opening end, thereby reducing the overall thickness of the microwave sensing apparatus 100.

Further, the connection method between the housing 1 and the second movable member 93 is not limited and may include fixed connection (e.g., integral molding) or detachable connection (e.g., threaded connection, snap-fit, etc.). Specifically, referring to Figs. 22 and 23, in some embodiments of the present invention, multiple screws are included, spaced circumferentially around the housing 1 and sequentially penetrating the housing 1 and the second movable member 93, making assembly convenient and production costs low.

Further, since the screws are metal components and affect the signal strength of the antenna of the communication module 5, the distance from each screw to the antenna must be defined. The distance from each screw to the antenna of the communication module 5 is set as L₁, where L₁ ≥ 2.3 mm, ensuring normal signal transmission.

Specifically, the opening end face of the housing 1 is recessed to form a seam allowance groove, and the periphery of the side of the second movable member 93 facing towards the housing 1 has a mating protrusion, so that when the second movable member 93 covers the opening end of the housing 1, the mating protrusion fits and abuts against the bottom wall of the seam allowance groove, enabling faster assembly of the housing 1 and the second movable member 93.

Specifically, referring to Fig. 23, in other embodiments of the present invention, the housing 1 has a third wall 16, which is a side wall connected to or opposite the first wall 11. The second movable member 93 is detachably connected to the third wall 16, facilitating assembly of the mounting bracket 9 and the housing 1.

Further, the second movable member 93 fits or at least partially overlaps with the third wall 16, reducing the overall thickness of the microwave sensing apparatus 100. More specifically, the surface area of the second movable member 93 is smaller than that of the third wall 16, and the second movable member 93 is fully overlapped with the third wall 16. Thus, from certain viewing angles, the housing 1 obscures the mounting bracket 9, improving the overall aesthetic appearance of the microwave sensing apparatus 100.

Specifically, the phase position arrangement between the second movable member 93 and the housing 1 is not limited. Referring to Figs. 23, 33, and 34, in some embodiments of the present invention, the center of the second movable member 93 corresponds to the center of the third wall 16, enhancing the overall stability of the microwave sensing apparatus 100 during installation. More specifically, when both the third wall 16 and the second movable member 93 are circular, the third wall 16 and the second movable member 93 are concentrically provided.

Specifically, in other embodiments of the present invention, the area of the second movable member 93 is smaller than that of the third wall 16, and part of the edge of the second movable member 93 corresponds to the edge of the third wall 16. More specifically, when both the third wall 16 and the second movable member 93 are circular, the third wall 16 is inscribed with the second movable member 93.

Specifically, the detachable connection method between the third wall 16 and the second movable member 93 is not limited and may include threaded connection, snap-fit, etc. Specifically, referring to Figs. 33 and 34, in some embodiments of the present invention, the second movable member 93 is magnetically connected to the third wall 16, which allows for simple and quick disassembly and assembly. More specifically, when the second movable member 93 is magnetically connected to the third wall 16, their relative positions can be adjusted in real time. The center of the second movable member 93 may correspond to the center of the third wall 16, or part of the edge of the second movable member 93 may correspond to the edge of the third wall 16, as long as at least part of the magnetic member on the second movable member 93 can magnetically attract at least part of the magnetic member on the third wall 16. This makes the installation of the housing 1 more flexible, further expanding the adjustable range of the actual sensing region of the sensing module 31, making it applicable to more scenarios and improving the practicality of the microwave sensing apparatus 100.

In the present invention, the installation method of the mounting bracket 9 is not limited and may include magnetic connection, snap-fit, threaded connection, adhesive bonding, etc. More specifically, in some embodiments of the present invention, the mounting bracket 9 is magnetically connected to the mounting surface. Specifically, the base 91 is provided with a first magnetic member 912 for magnetic connection with a second magnetic member provided on the mounting surface, enabling convenient, quick and flexible installation with a wide angle adjustment range for the mounting bracket 9. More specifically, the side of the base 91 facing towards the housing 1 is provided with a mounting groove 951 containing the first magnetic member 912. In other embodiments of the present invention, the mounting bracket 9 is adhesively bonded to the mounting surface. Referring to Figs. 33 and 34, the side of the base 91 opposite to the housing 1 has an adhesive member for bonding to the mounting surface, enabling convenient and stable installation. It should be noted that the above two technical features can be implemented separately or simultaneously. Specifically, in some embodiments of the present invention, both features are implemented simultaneously: the base 91 has a first magnetic member 912 for magnetic attraction with a second magnetic member on the mounting surface, and the side of the base 91 opposite to the housing 1 has an adhesive member for bonding to the mounting surface. This allows the mounting bracket 9 to be installed on the mounting surface either magnetically or adhesively. That is, it may be attached to the mounting surface on which the magnet member is provided or to the mounting surface on which the magnet member is not provided, so as to expand its installation range. Different installation methods can be chosen for different mounting surfaces, improving practicality. Further, when the mounting bracket 9 adopts magnetic connection, the distance between the first magnetic member 912 and the antenna of the communication module 5 must be limited to reduce the impact of the first magnetic member 912 on antenna signal strength. When the first movable member 92 and the second movable member 93 are in contact or overlapped, the first magnetic member 912 is closest to the antenna. Therefore, it is sufficient to limit the distance L₂ between the first magnetic member 912 and the antenna of the communication module 5 when the first movable member 92 and the second movable member 93 are in contact or overlapped. Based on multiple tests, L₂ ≥ 3.6 mm, which can reduce the impact of the first magnetic member 912 on antenna signal strength, ensuring normal signal transmission and reception by the communication module 5. More specifically, the distance between the first magnetic member 912 and the antenna of the communication module 5 is related to factors such as the antenna's position within the housing 1 and the thickness of the second movable member 93.

Of course, in other embodiments of the present invention, referring to Figs. 35, 36, and 39-44, the housing 1 rotates relative to the mounting surface in one degree of freedom. Specifically, the mounting bracket 9 is rotatably connected to the housing 1, allowing the housing 1 to rotate relative to the mounting bracket 9 in one degree of freedom under a third operating force, thereby adjusting the actual sensing region of the sensing module 31.

More specifically, in some embodiments of the present invention, referring to Figs. 35, 36, and 39-44, the mounting bracket includes a movable sleeve 98 sleeved on the outer periphery of the housing 1 and rotatably connected to the housing 1 via a third rotation shaft 981. A movement gap exists between the inner side wall of the movable sleeve 98 and the housing 1 to allow rotation of the housing 1. That is, the housing 1 can rotate about the third rotation shaft 981 relative to the movable sleeve 98, enabling adjustment of the actual sensing region of the sensing module 31, with a simple structure. When the third operating force is removed, the friction between the third rotation shaft 981 and the housing 1 serves to support and fix the housing 1. More specifically, in some embodiments of the present invention, the third rotation shaft 981 is a screw.

It should be noted that in the present invention, one or two third rotation shafts 981 may be provided. Specifically, in some embodiments of the present invention, two third rotation shafts 981 are provided, which are inserted into opposite sides of the movable sleeve 98. The housing 1 is correspondingly provided with two rotation holes, each for receiving its corresponding third rotation shaft 981, so that the housing 1 and the movable sleeve 98 are rotatably connected, and the assembly and disassembly of the movable sleeve 98 and the housing 1 are facilitated.

Further, since the housing 1 is sleeved within the movable sleeve 98, the rotational angle range of the housing 1 depends on the size of the movement gap. A larger rotational angle range requires a larger movement gap, but this also increases the volume of the movable sleeve 98, i.e., the mounting bracket 9. A larger mounting bracket 9 may appear disproportionate to the housing 1, affecting aesthetic appearance and hindering the miniaturization design of the microwave sensing apparatus 100. In some embodiments of the present invention, based on multiple tests, the rotational angle range of the housing 1 relative to the movable sleeve 98 is set to 0°-60°. More specifically, the housing 1 can rotate from its horizontal position to one side within a range of 0°-30°, balancing the adjustable range of the actual sensing region of the sensing module 31 with the overall aesthetic appearance of the microwave sensing apparatus 100. More specifically, the movement gap is set to 1.5 mm.

Specifically, referring to Figs. 35, 36, 39, and 40, in some embodiments of the present invention, the movable sleeve 98 has at least two spring clips 982 on its outer periphery which are arranged opposite to each other along the circumference of the movable sleeve 98. The spring clips 982 can be forced closer to or farther from the movable sleeve 98 to engage with mounting holes 111 on the mounting surface. This arrangement allows the microwave sensing apparatus 100 to be installed on ceilings, specifically suspended ceilings. By applying force to the spring clips 982, they rotate towards the movable sleeve 98 until they can be inserted through the mounting holes 111 into the ceiling. When the force is removed, the spring clips 982 elastically return to their initial positions, abutting against the inner wall of the ceiling, preventing the mounting bracket 9 from disengaging from the ceiling, ensuring stable installation with simple and convenient operation.

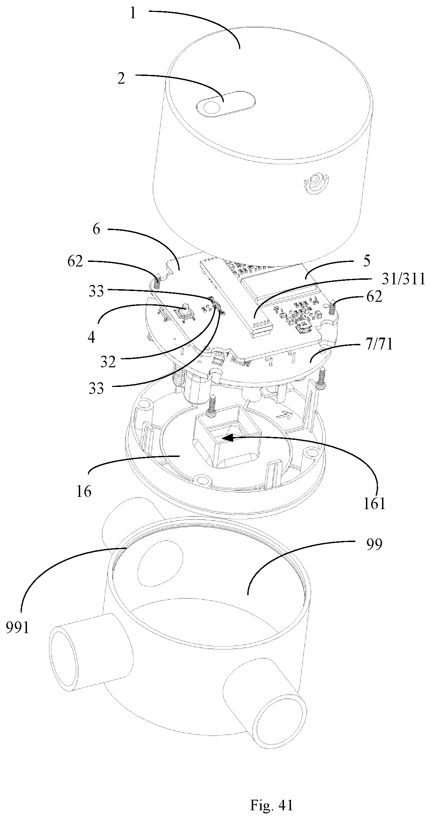

Specifically, referring to Figs. 41-44, in other embodiments of the present invention, the housing 1 has a second wall 15, and the sensing module 31 corresponds to the second wall 15. The mounting bracket includes a mounting box 99 with an opening, fixed to the mounting surface. The housing 1 is installed at the opening of the mounting box 99 via a buckle 17 and an engaging annular wall 991, with the second wall 15 spaced from the bottom wall of the mounting box 99. One of the buckle 17 and the engaging annular wall 991 is provided on the housing 1, and the other is provided on the side wall of the mounting box 99. The buckle 17 and the engaging annular wall 991 engage with each other, and the buckle 17 can slide along the engaging annular wall 991, allowing the housing 1 to rotate relative to the mounting box 99. This arrangement enables the housing 1 to be installed via the mounting box 99 while adjusting the actual sensing region of the sensing module 31 through relative rotation. Additionally, the housing 1 and the mounting box 99 are detachably connected via the buckle 17 and the engaging annular wall 991, facilitating simple and quick assembly and disassembly.

It should be noted that the connection between the mounting box 99 and the mounting surface is not limited and may include adhesive bonding, threaded connection, etc.

Further, when the microwave sensing apparatus 100 is powered by high voltage, based on the above embodiment where "the power supply unit 7 includes a power board 71, which is electrically connected to the PCB board 6 via PIN pins; the power board 71 is provided with a wiring port 72, which is electrically connected to an external power source by a second through hole 161 opened in the housing 1," the inner side wall of the mounting box 99 has at least one wiring hole for routing, allowing external power cables to connect to the wiring port 72 sequentially through the wiring hole and the second through hole 161.

The present invention also provides an optical transceiver 2, referring to Figs. 45 and 46, suitable for a sensing device. The optical transceiver 2 includes a light-transmitting part 21 and a trigger part 22 on the light-transmitting part 21. The light-transmitting part 21 allows light to pass through, enabling first-direction light emitted by the sensing device to pass through light-transmitting part 21 from inside to outside the sensing device and second-direction light incident through light-transmitting part 21 from outside to inside the sensing device. The trigger part 22 is configured to trigger the sensing device in response to a first operating force.

In the technical solution of the present invention, the optical transceiver 2 not only has light-transmitting properties but also includes the trigger part 22 for triggering, integrating light sensing, indication, and triggering functions into one component. When applied to the sensing device, it simplifies the device structure. Specifically, the sensing device includes a housing 1 and a sensing module 31, a light sensing module 32, a light-emitting module 33, and a detection switch 4 inside the housing 1. The light-transmitting part 21 corresponds to the light sensing module 32 and the light-emitting module 33, enabling the light sensing module 32 to receive second-direction light passing through the light-transmitting part 21 for external light environment detection, and the light-emitting module 33 to emit first-direction light through the light-transmitting part 21 to indicate the real-time working state of the sensing device. The trigger part 22 corresponds to the detection switch 4, enabling the detection switch 4 to be triggered and generate a trigger signal when the trigger part 22 is displaced under force, allowing the sensing device to switch its working state based on the trigger signal. Simultaneously, the optical transceiver 2 is provided on the housing 1, reducing the number of openings in the housing 1 from three to one, improving the uniformity of the housing thickness, and minimizing adverse effects of openings on the sensing performance of the sensing device. Additionally, in dark environments, when the optical transceiver 2 is illuminated by first-direction light emitted by the sensing device, the users can clearly locate the optical transceiver 2 and accurately operate it to trigger the detection switch 4, facilitating quick and real-time control of the sensing device.

It should be noted that the first direction and the second direction are opposite directions. The first direction is from the interior of the sensing device to the exterior of the sensing device, i.e., the outward direction, while the second direction is from the exterior of the sensing device to the interior of the housing 1, i.e., the inward direction.

Further, referring to Figs. 45 and 46, the light-transmitting part 21 includes an indication region 211 and a light sensing region 212. The indication region 211 allows light in the first direction to pass through, while the light sensing region 212 allows light in the second direction to enter. In other words, the light-transmitting part 21 provides an indication function by the indication region 211 and a light sensing function by the light sensing region 212.

It should be noted that the relative positions of the indication region 211 and light sensing region 212 are not limited. They may be separate or overlapping.

Further, referring to Figs. 45 and 46, in some embodiments of the present invention, the indication region 211 and the light sensing region 212 are overlapped. In other words, the overlapping region formed by the indication region 211 and the light sensing region 212 can both allow light to enter and exit, reducing the region occupied by the light-transmitting part 21 and simplifying the structure. This further reduces the opening region of the housing 1 and enhances the overall aesthetic appearance of the sensing device.

Specifically, referring to Figs. 45 and 46, the light-transmitting part 21 includes a light guide member 213, as well as a first end surface 2131 and a second end surface 2132 provided at both ends of the light guide member 213. The first end surface 2131 faces towards the exterior of the sensing device to form the indication region 211, while the second end surface 2132 faces towards the interior of the sensing device and is close to the light sensing module 32 and light-emitting module 33 of the sensing device. Alternatively, the first end surface 2131 faces towards the exterior of the sensing device to form the light sensing region 212, while the second end surface 2132 faces towards the interior of the sensing device and is close to the light sensing module 32 and light-emitting module 33 of the sensing device. The light guide member 213 has the function of collecting and guiding light, which is beneficial to reducing light loss during propagation and improving display brightness. Specifically, when the first end surface 2131 of the light guide member 213 faces outwards to form the light sensing region 212, the light sensing region 212 has a light source gathering effect, facilitating the sensing device to receive and sense light in the second direction. When the first end surface 2131 of the light guide member 213 faces outwards to form the indication region 211, and the second end surface 2132 faces inwards and is close to the light-emitting module 33. The indication region 211 has a light source reflection effect, and light in the first direction is uniformly emitted through the indication region 211 with enhanced brightness, making the indication region 211 clearly visible with excellent prompting effect.

Note that the light guide member 213 may take various forms such as a light guide column or film, without limitation. More specifically, referring to Figs. 45-46, in some embodiments of the present invention, the light guide member 213 is a light guide column to further reduce light loss during propagation. It should also be noted that the number of light guide members 213 is not limited. Two light guide members 213 may be provided, where the first end surface 2131 of one forms the indication region 211, with its second end surface 2132 close to the light-emitting module 33, while the first end surface 2131 of the other one forms the light sensing region 212, with its second end surface 2132 close to the light sensing module 32. Alternatively, referring to Figs. 45 and 46, based on the above embodiment where "the indication region 211 and the light sensing region 212 are overlapped", one light guide member 213 may be provided, where the first end surface 2131 of the light guide member 213 forms both the indication region 211 and the light sensing region 212, and its second end surface 2132 faces outwards from the sensing device and is close to the light sensing module 32 and light-emitting module 33 of the sensing device, resulting in a simple structure and low cost.

Furthermore, if the second end surface 2132 corresponds to both the light-emitting module 33 and the light sensing module 32, the area of the second end surface 2132 will be larger. Further, if the area of the first end surface 2131 is the same as that of the second end surface 2132, the first end surface 2131 will also have a larger area, easily exposing internal electronic components (including the light sensing module 32, the light-emitting module 33, etc.) of the sensing device, allowing users to clearly see the internal structure from outside and affecting the overall aesthetic appearance of the sensing device. Therefore, in some embodiments of the present invention, the area of the second end surface 2132 is smaller than that of the first end surface 2131, ensuring both the light sensing effect of the light sensing module 32 and the prompting effect of the indication region 211 while reducing exposure of internal electronic components. To enable most of the light in the first direction and the second direction to pass through the light-transmitting part 21, specifically, the light sensing module 32 and the light-emitting module 33 are provided adjacent to each other.

It should be noted that the configuration form for making the area of the second end surface 2132 smaller than that of the first end surface 2131 is not limited. For example, the light guide member 213 may be tapered from its first end surface 2131 to its second end surface 2132, so that the area of the second end surface 2132 is smaller than that of the first end surface 2131. However, with such configuration, the overall volume of the light guide member 213 tends to be thicker in terms of production process, which may introduce bubbles during injection molding, affecting the light-guiding effect of the light guide member 213 and causing off-center and uneven illumination from the light-emitting module 33. In this regard, referring to Figs. 45 and 46, in some embodiments of the present invention, the light guide member 213 is successively provided with a first light guide part 2133 and a second light guide part 2134 along the inner and outer directions of the sensing device. The first light guide part 2133 is provided as a truncated cone, with the first end surface 2131 formed on a side of the first light guide part 2133 away from the second light guide part 2134, and the generatrix of the first light guide part 2133 is set as a concave curve. The second light guide part 2134 is cylindrical, with the second end surface 2132 formed on a side of the second light guide part 2134 away from the first light guide part 2133, and the area of the second light guide part 2134 is the same as that of a side of the first light guide part 2133 close to the second light guide part 2134. This arrangement prevents exposure of internal electronic components while reducing bubble generation during production due to the thinner second light guide part 2134, enhancing the light guiding effect and ensuring centered and uniform light display of the light-emitting module 33 in the indication region 211 of the optical transceiver 2.

Specifically, referring to Figs. 45 and 46, in some embodiments of the present invention, the trigger part 22 is implemented as a trigger post 221 for abutting against or approaching the detection switch 4 inside the sensing device, acting on the detection switch 4 in response to the first operating force to trigger the sensing device. This allows users to power on or network configuration of the sensing device by pressing the trigger part 22. More specifically, based on the above embodiment where "the trigger part 22, the light sensing region 212, and the indication region 211 are sequentially distributed along the length direction of the optical transceiver 2; the indication region 211 and the light sensing region 212 overlap; the first end surface 2131 of the light guide member 213 forms both the indication region 211 and light sensing region 212, with its second end surface 2132 facing outwards from the sensing device and close to the light sensing module 32 and light-emitting module 33", the trigger post 221 and the light guide member 213 are sequentially distributed along the length direction of the optical transceiver 2.

Specifically, in the present invention, the trigger part 22 can not only be displaced from an initial position to a trigger position under the first operating force to trigger the detection switch 4, but also return from the trigger position to the initial position under a reset force after triggering the detection switch 4. However, if the reset force is excessive, it may cause the trigger part 22 to have overdisplacement. Thus, after the trigger part 22 is reset to the initial position, it continues to move to a protruding position away from the housing 1, which affects the user's subsequent feeling of use and also affects the aesthetic appearance of the microwave sensing apparatus 100. It should be noted that the reset force can be understood as either another operating force applied by the user to the trigger part 22 after removal of the first operating force, or the elastic reset force exerted by the detection switch 4 on the trigger part 22 due to its elasticity after removal of the first operating force. To address this, the present invention provides a limiting portion to restrict the movement range of the trigger part 22. More specifically, referring to Figs. 45 and 46, in some embodiments of the present invention, the light-transmitting part 21 includes a pressing portion 214 and a bearing portion 215 stacked along the thickness direction of the light-transmitting part 21. The pressing portion 214 has a smaller surface area than that of the bearing portion 215 and is adapted to fit into the mounting hole 111 on the sensing device, while the bearing portion 215 is provided inside the sensing device. That is, the surface area of the bearing portion 215 is larger than the hole area of the mounting hole 111. Thus, when the trigger part 22 resets, the part of the bearing portion 215 moving towards the mounting hole 111 is restricted by the housing 1 of the sensing device, abutting against the inner side wall of the housing 1 and preventing movement beyond the mounting hole 111 or outside the housing 1. This indirectly limits the movement range of the light-transmitting part 21. More specifically, when the trigger part 22 is in the initial position, the bearing portion 215 abuts against the inner side wall of the housing 1, further reducing the movement range of the light-transmitting part 21 to ensure precise resetting of the trigger part 22 and improve user experience. Specifically, in the present invention, since the trigger part 22 is provided on the light-transmitting part 21, the trigger part 22 triggers the detection switch 4 in response to the movement of the first operating force with respect to the sensing device. It can be understood that the rotation of the light-transmitting part 21 with respect to the sensing device drives the movement of the trigger part 22 to trigger the detection switch 4, or the movement of the light-transmitting part 21 with respect to the sensing device drives the movement of the trigger part 22 to trigger the detection switch 4. Thus, the connection between the light-transmitting part 21 and the sensing device varies accordingly. Specifically, in some embodiments of the present invention, the light-transmitting part 21 is pivotally connected to the sensing device, enabling the light-transmitting part 21 to rotate relative to the sensing device about an axis extending along the third direction. The third direction is parallel to the horizontal direction of the light-transmitting part 21. When the light-transmitting part 21 is subjected to the first operating force and undergoes pivotal movement, it drives the trigger part 22 to perform pivotal movement and activates the detection switch 4 by moving towards it.

Note that, referring to Figs. 45 and 46, the third direction is direction F1.

Further, the light-transmitting part 21 is provided with a rotating shaft 24 for pivotally connecting with the pivot hole 1121 of the sensing device; or the light-transmitting part 21 is provided with a pivot hole 1121 for pivotally connecting with the rotating shaft 24 of the sensing device. By the matching arrangement of the rotating shaft 24 and the pivot hole 1121, the light-transmitting part 21 is pivotally connected to the sensing device, enabling convenient disassembly or assembly of the optical transceiver 2 and the sensing device.

Specifically, the light-transmitting part 21 rotates with respect to the sensing device, wherein one end of the two opposite ends of the light-transmitting part 21 is forced to move towards the inside of the sensing device, namely, forced to press down and move, and the other end is forced to move towards the outside of the sensing device, namely, forced to tilt up and move. More specifically, referring to Fig. 45, in some embodiments of the present invention, the trigger part 22 is provided at one end of the light-transmitting part 21 in the fourth direction, and the indication region 211 and the light sensing region 212 are provided at the other end of the light-transmitting part 21 in the fourth direction. Based on the above embodiment where "the light-transmitting part 21 includes a pressing portion 214 and a bearing portion 215 stacked along its thickness direction, the surface area of the pressing portion 214 is smaller than that of the bearing portion 215, and the pressing portion 214 is adapted to be provided in the mounting hole 111 formed on the sensing device, while the bearing portion 215 is provided inside the sensing device," the bearing portion 215 has a first side surface 2151 connected to the pressing portion 214, the first side surface 2151 has a first bearing surface 21511 corresponding to the indication region 211 and the light sensing region 212 of the light-transmitting part 21, and a second bearing surface 21512 corresponding to the trigger part 22. That is, when the light-transmitting part 21 rotates relative to the sensing device and the trigger part 22 triggers the detection switch 4, the trigger part 22, i.e., the second bearing surface 21512, is pressed downwards, while the indication region 211 and the light sensing region 212, i.e., the first bearing surface 21511, are lifted upwards.

Further, the trigger part 22 moves between an initial position and a trigger position. When the trigger part 22 is in the initial position, the bearing portion 215 can be set to abut against the inner side wall of the housing 1 or have a gap with the inner side wall of the housing 1. However, when the trigger part 22 is in the initial position and the bearing portion 215 is provided to abut against the inner side wall of the housing 1, during the process of the trigger part 22 triggering the detection switch 4, the first bearing surface 21511 may interfere with the inner side wall of the housing 1, preventing the light-transmitting part 21 from rotating and thus affecting the movement of the trigger part 22. Therefore, referring to Figs. 45 and 46, in some embodiments of the present invention, when the trigger part 22 is in the initial position, there is a movement gap between the first bearing surface 21511 and the inner side surface of the first wall 11. In this way, during the process of the trigger part 22 triggering the detection switch 4, the first bearing surface 21511 can rotate relative to the housing 1 by means of the movement gap, ensuring smooth user operation.

Further, to achieve the miniaturization design of the microwave sensing apparatus 100, when the trigger part 22 is in the initial position, the first bearing surface 21511 is provided closer to the interior of the housing 1 compared to the second bearing surface 21512, and the second bearing surface 21512 abuts against the first wall 11. This reduces the space occupied by the bearing portion 215 inside the housing 1 while ensuring that the first bearing surface 21511 can rotate relative to the housing 1 for smooth user operation, thereby reducing the volume of the housing 1. More specifically, in an embodiment of the present invention, the maximum trigger stroke of the detection switch 4 is 0.2 mm. When the trigger part 22 is in the initial position, the trigger part 22 abuts against the detection switch 4. Accordingly, the movement gap between the first bearing surface 21511 and the inner side surface of the first wall 11 is set to 0.25 mm.

Specifically, the rotating shaft 24 or the pivot hole 1121 on the light-transmitting part 21 corresponds to the connection between the first bearing surface 21511 and the second bearing surface 21512, or the rotating shaft 24 or the pivot hole 1121 on the light-transmitting part 21 corresponds to the first bearing surface 21511. This ensures that during the rotation of the light-transmitting part 21, the trigger part 22 can be fully pressed downwards, i.e., the trigger part 22 rotates to the correct position to fully trigger the detection switch 4, avoiding failure of the detection switch 4. At the same time, during the rotation of the light-transmitting part 21, the part corresponding to the light sensing module 32 and/or the light-emitting module 33 is prevented from being pressed downwards and acting on the light sensing module 32 and/or the light-emitting module 33, thereby avoiding damage to the light sensing module 32 and/or the light-emitting module 33 due to excessive pressing or repeated use, which would affect their service life.

Of course, in other embodiments of the present invention, the light-transmitting part 21 moves relative to the housing 1 to drive the trigger part 22 to trigger the detection switch 4. Specifically, the light-transmitting part 21 is provided with an elastic connection structure 23 for thermal fusion connection with the sensing device. The elastic connection structure 23 can elastically stretch and compress due to its elasticity. That is, when the trigger part 22 is pressed downwards by the first operating force, the elastic connection structure 23 is elastically compressed, allowing the trigger part 22 to move towards the interior of the sensing device to trigger the detection switch 4. When the first operating force is removed, the elastic connection structure 23 generates an elastic reset force to elastically stretch and act on the trigger part 22, causing it to move towards the exterior of the housing 1 to return to the initial position.

It should be noted that the connection method between the elastic connection structure 23 and the housing 1 is not limited and may include snap connection, adhesive connection, etc.

Further, referring to Figs. 24, 45, and 46, in some embodiments of the present invention, the light-transmitting part 21 is provided with an elastic connection structure 23, which includes at least two elastic connection arms 231. The two elastic connection arms 231 are provided on opposite sides of the light-transmitting part 21 for thermal fusion connection with the heat-melting post 114 of the sensing device. In other words, the elastic connection structure 23 is fixedly connected to the housing 1 by thermal fusion, ensuring stable connection.

It should also be noted that the form of the elastic connection arms 231 is not limited. They may be straight or curved. Specifically, in some embodiments of the present invention, the elastic connection arms 231 are curved, making them more prone to elastic deformation under force and easier for users to operate.

It should be noted that in the present invention, the two technical features that "the light-transmitting part 21 is provided with a rotating shaft 24 for pivotally connecting with the pivot hole 1121 of the sensing device; or the light-transmitting part 21 is provided with a pivot hole 1121 for pivotally connecting with the rotating shaft 24 of the sensing device" and "the light-transmitting part 21 is provided with an elastic connection structure 23 for thermal fusion connection with the sensing device" can be arranged alternatively or simultaneously. Specifically, in some embodiments of the present invention, the above two technical features are set simultaneously. Further, the elastic connection structure 23 corresponds to the trigger part 22, and the rotating shaft 24 and the pivot hole 1121 correspond to the junction of the first bearing surface 21511 and the second bearing surface 21512. That is, when the trigger part 22 is subjected to the first operating force, the light-transmitting part 21 can pivot relative to the housing 1, and by the compression of the elastic connection structure 23, the trigger part 22 can be pressed inwards to trigger the detection switch 4, while the indication region 211 and the light sensing region 212 are lifted outwards. When the first operating force is removed, the trigger part 22 is subjected to the elastic force of the elastic connection structure 23 to return to the initial position, and the indication region 211 and the light sensing region 212 also return to their original positions, completing the operation. This improves the rotational stability of the light-transmitting part 21, while the trigger part 22 can automatically reset by the elastic connection structure 23, making the user operation very effortless. Specifically, in the present invention, the material of the light-transmitting part 21 is a transparent material. The material of the light-transmitting part 21 has good light transmittance, allowing the light-transmitting part 21 to not only transmit light in the second direction to be received by the light sensing module 32 but also to display the light in the first direction clearly and brightly in the indication region 211. Further, the transparent material may be transparent glass or transparent PC plastic. Specifically, in some embodiments of the present invention, the material of the light-transmitting part 21 is transparent PC plastic, which has low production cost and elasticity. Compared to the transparent glass, it is less prone to damage upon collision or falling, offering high practicality.

Further, referring to Figs. 45 and 46, based on the above embodiment where "the light-transmitting part 21 includes an indication region 211 and a light sensing region 212. The indication region 211 allows light in the first direction to pass through, while the light sensing region 212 allows light in the second direction to enter", the optical transceiver 2 further includes a decorative member 25. The decorative member 25 is provided on a side of the light-transmitting part 21 away from the interior of the sensing device and includes a shielding region 251 and a light-transmitting region 252. The shielding region 251 corresponds to the trigger part 22, and the light-transmitting region 252 corresponds to the indication region 211 and light sensing region 212. The shielding region 251 prevents excessive exposure of the internal electronic components of the housing 1 and helps the users distinguish the positions of the trigger part 22, the light sensing region 212, and the indication region 211. More specifically, in some embodiments of the present invention, the decorative member 25 is adhesively bonded to the light-transmitting part 21, simplifying assembly.

Further, during the assembly of the decorative member 25 and the light-transmitting part 21, the misassembly may occur due to positioning accuracy issues, leaving part of the light-transmitting part 21 uncovered by the decorative member 25, exposing some internal electronic components and affecting the appearance. To address this, referring to Figs. 45 and 46, the light-transmitting part 21 includes a pressing portion 214 and a bearing portion 215 stacked along the thickness direction of the light-transmitting part 21. The pressing portion 214 has a smaller surface area than that of the bearing portion 215 and is provided in the mounting hole 111 of the sensing device, while the bearing portion 215 is provided inside the sensing device. The decorative member 25 corresponds to the pressing portion 214 and is adapted to the mounting hole 111. Thus, the surface area of the decorative member 25 is larger than that of the pressing portion 214, offsetting the impact of positioning errors during the assembly of the decorative member 25 and the light-transmitting part 21 and ensuring that the light-transmitting part 21 is completely covered by the decorative member 25, preventing exposure of the internal electronic components of the housing 1.

Specifically, in some embodiments of the present invention, the decorative member 25 is an acrylic sheet, and the shielding region 251 is formed by screen printing. The acrylic sheet has low cost but good transparency and light transmission properties. Therefore, by screen printing part of the acrylic sheet to form the shielding region 251, it can not only avoid exposing the structure of electronic components inside the housing 1, but also improve the aesthetic appearance of the optical transceiver 2.

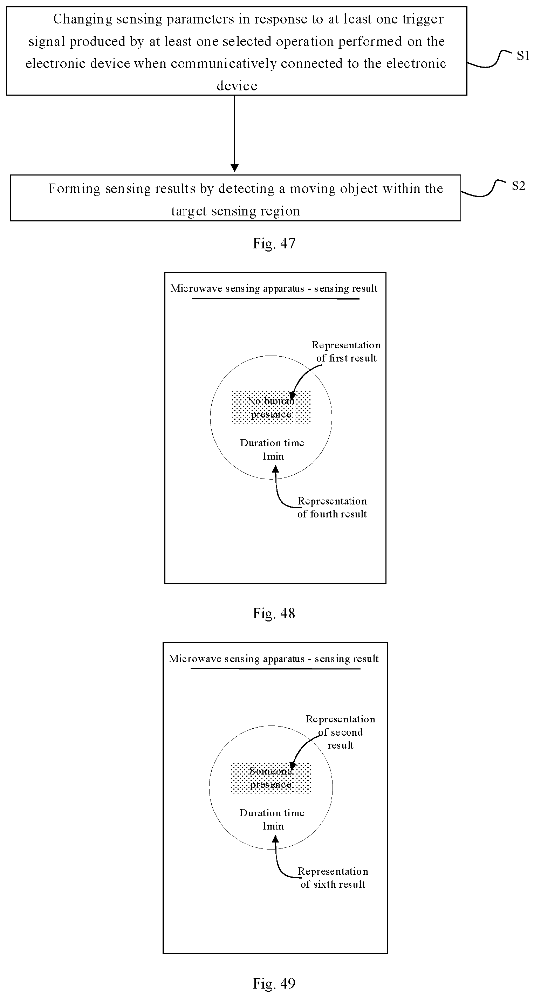

As shown in Fig. 47, a schematic flowchart of a microwave sensing method using the above microwave sensing apparatus is provided. It should be noted that the related terms, circuit components, and principles in this embodiment can be interpreted with reference to the descriptions in the related embodiments of the microwave sensing apparatus, and the same parts will not be repeated here. Specifically, the microwave sensing method provided in this embodiment includes: S1, changing sensing parameters in response to at least one trigger signal produced by at least one selected operation performed on the electronic device when communicatively connected to the electronic device; wherein the sensing parameters are used to select at least one sub-sensing region; the sub-sensing region is associated with a target sensing region, enabling the target sensing region to be flexibly divided based on different selected operations received by the electronic device; and S2, forming sensing results by detecting a moving object within the target sensing region.

Based on the above method, it can be understood that in the embodiment of the present invention, the microwave sensing apparatus can adjust its sensing parameters in response to selected operations received by an electronic device to adjust the corresponding target sensing region. This allows the target sensing region of the microwave sensing apparatus to be flexibly adjusted based on the electronic device, enabling the target sensing region to be flexibly changed according to different sensing range requirements, thereby improving the applicability of the microwave sensing apparatus. The microwave sensing apparatus changes sensing parameters based on the selected operation to flexibly set the target sensing region, which includes multiple approaches.

In an optional first approach, the sensing parameter includes a maximum sensing distance value for defining a maximum sensing distance of a sub-sensing region;

The changing sensing parameters in response to at least one trigger signal produced by at least one selected operation performed on the electronic device when communicatively connected to the electronic device specifically includes:
changing the maximum sensing distance value in response to at least one trigger signal generated by at least one selected operation performed on the electronic device when communicatively connected to the electronic device, such that a maximum sensing distance of the target sensing region including the sub-sensing region can be flexibly set.

Furthermore, in this embodiment, the microwave sensing apparatus can adjust the maximum sensing distance among the sensing parameters based on the selected operation of the electronic device, thereby enabling flexible setting of the maximum sensing distance of a target sensing region originating from the microwave sensing apparatus to accommodate different maximum sensing distance requirements.

In an optional second approach, the sensing parameter includes a minimum sensing distance value for defining a minimum sensing distance of a sub-sensing region;

The changing sensing parameters in response to at least one trigger signal produced by at least one selected operation performed on the electronic device when communicatively connected to the electronic device specifically includes:
changing the minimum sensing distance value in response to at least one trigger signal generated by at least one selected operation on an electronic device when communicatively connected to the electronic device, such that a minimum sensing distance of the target sensing region including the sub-sensing region can be flexibly set.

Furthermore, in this embodiment, the microwave sensing apparatus can adjust the minimum sensing distance among the sensing parameters based on the selected operation of the electronic device, thereby enabling flexible setting of the minimum sensing distance of the target sensing region of the microwave sensing apparatus.

In an optional third approach, the sensing parameters include at least one segment range starting from a first distance value and ending at a second distance value, for instructing the sensing module to divide a sub-sensing region having the first distance value as a minimum sensing distance value and the second distance value as a maximum sensing distance value; where the first distance value is less than the second distance value and greater than zero;

The changing sensing parameters in response to at least one trigger signal produced by at least one selected operation performed on the electronic device when communicatively connected to the electronic device specifically includes:
changing the first distance value and/or the second distance value in response to at least one trigger signal generated by at least one selected operation on an electronic device when communicatively connected to the electronic device, thereby varying a minimum sensing distance and/or maximum sensing distance of the target sensing region including the sub-sensing region.

Furthermore, in this embodiment, the communication module can adjust the minimum sensing distance and maximum sensing distance among the sensing parameters based on the selected operation of the electronic device, thereby enabling flexible setting of the minimum sensing distance and the maximum sensing distance of the target sensing region of the microwave sensing apparatus. In an optional fourth approach, the sensing parameter includes a plurality of sets of designated segment ranges, each segment range used to instruct the microwave sensing apparatus to divide a sub-sensing region with the starting point of the segment range as the minimum sensing distance value and the ending point as the maximum sensing distance value.

The changing sensing parameters in response to at least one trigger signal produced by at least one selected operation performed on the electronic device when communicatively connected to the electronic device specifically includes:
selecting one or more sets of sub-sensing regions corresponding to the segment ranges indicated by the selected instruction in response to at least one trigger signal generated by at least one selected operation on an electronic device when communicatively connected to the electronic device, thereby enabling precise setting of the target sensing region based on the selected sub-sensing regions.

Based on the above description, it can be understood that with the technical solution provided in this embodiment, the users can form a plurality of sub-sensing regions with respective segment ranges by dividing a whole region into segments. This allows users to select the sub-sensing regions corresponding to the segment ranges based on the position of the region to be sensed, thereby forming a precise target sensing region. Defining each sub-sensing region by the segment range only requires setting the minimum and maximum distance boundaries of each sub-sensing region.

Compared to dividing sub-sensing regions using coordinate values, angle values, etc., the boundary values of each sub-sensing region in the solution provided in this embodiment can be easily divided based on the distance values detected by the microwave sensing apparatus. The division of each sub-sensing region in this embodiment can be achieved by the microwave sensing apparatus with the basic distance detection function, thereby reducing implementation costs.

Based on the above optional third approach, a plurality of sets of designated segment ranges can be combined to form a complete range, where the plurality of sets of segment ranges do not completely overlap. Thus, the microwave sensing apparatus can select a plurality of non-overlapping segment ranges based on a selected operation, enabling the target sensing region to be discontinuously combined by a plurality of discontinuous sub-sensing regions.

Therefore, based on the technical solution provided in this embodiment, a discontinuous target sensing region can be formed by the users by discontinuous selection of different sub-sensing regions corresponding to a plurality of discontinuous regions to be sensed, thereby improving the accuracy of the target sensing region's coverage of each region to be sensed.

The microwave sensing apparatus can establish a communication connection with the electronic device in multiple ways.

In one specific implementation of establishing a communication connection, the changing sensing parameters in response to at least one trigger signal produced by at least one selected operation performed on the electronic device when communicatively connected to the electronic device specifically includes:
A communication connection with an electronic device having a display interface is established by a designated network in a state of being communicatively connected to the designated network, thereby changing sensing parameters according to at least one different selected operation associated with a representation of the sensing parameter with respect to a display interface of the electronic device.

It should be noted that, as described in the above embodiments, the term "representation" in this embodiment and the following refers to any user-interactive graphical display interface object optionally displayed on the display interface of the electronic device. For example, images (e.g., curves, icons), sliders, and text (e.g., words, hyperlinks) in Figs. 3-7, 9, 11, 12, and 14 of the drawings optionally each constitute corresponding representations.

Furthermore, with the technical solution provided in this embodiment, the users can connect an electronic device (e.g., a smartphone) and the microwave sensing apparatus to the same designated network to indirectly establish a communication connection between them via the designated network. This allows convenient setting of the target sensing region of the microwave sensing apparatus by the display interface on the electronic device, and the visual selected operation facilitates more accurate division of the target sensing region for specific application scenarios.

Further, the microwave sensing method further includes:
sending a first result out, in a case that the sensing result within a specified time is the first result of a plurality of sensing results, to enable the electronic device to form a representation characterizing the first result on the display interface thereof in response to the first result; wherein the specified time is set by the electronic device according to a setting operation received by the display interface thereof; and the first result characterizes that no moving object is detected within the target sensing region.

Furthermore, in this embodiment, the microwave sensing apparatus will not upload it immediately when detecting that the sensing result is the first result, but will not upload it until a specified time is delayed and the first result is continuously detected for a specified time, so as to reduce the amount of data to be uploaded.

Further, the microwave sensing method further includes:
calculating a duration time of a first result to form a fourth result sent out when the sensing result is a first result of the plurality of sensing results, such that the electronic device can form a representation characterizing the fourth result on the display interface thereof in response to the fourth result.

Furthermore, in this embodiment, when the sensing result is the first result, the display interface of the electronic device displays the first result for a duration time to form a representation of the fourth result that is convenient for a user to view.

Specifically, the microwave sensing method further includes:
executing a command from an application program to change the specified time. The application may be an application program (app) running on an intelligent terminal (such as the electronic device). In other words, a user can adjust the specified time by any intelligent terminal running a related application and establishing a communication connection with the microwave sensing apparatus, so as to change the delayed reporting time of the first result, making the update rule of the first result on the display interface of the electronic device applicable to specific application scenarios.

Further, the microwave sensing method further includes:
immediately sending a second result out when the sensing result is a second result of a plurality of sensing results, to enable the electronic device to form a representation characterizing the second result on the display interface thereof in response to the second result, wherein the second result characterizes that the moving object is detected within the target sensing region.

Furthermore, in this embodiment, when the microwave sensing apparatus detects that the sensing result is the second result, it will upload the sensing result immediately, allowing users to promptly grasp the triggering result of moving objects within the target sensing region.

Further, the microwave sensing method further includes:
calculating a duration time of a second result to form a sixth result to be sent out when the sensing result is a second result of the plurality of sensing results, such that the electronic device can form, in response to the sixth result, a representation characterizing the sixth result via the display interface thereof.

Furthermore, in this embodiment, when the sensing result is a second result, the display interface of the electronic device displaying the second result for a duration time to form a representation of the sixth result which is convenient for a user to view.

Further, the microwave sensing method further includes: when the sensing result is the second result, controlling a light-emitting module to emit an indication signal of a specified pattern to visually inform the user that the second result is triggered.

Specifically, the indication signal of the specified pattern includes flashing a light signal of a specified color at a certain periodic frequency.

Further, the microwave sensing method further includes:
periodically sending a third result of the plurality of sensing results out, to enable the electronic device to form a representation characterizing the third result on the display interface thereof in response to the third result; wherein the third result characterizes the distance between the moving object within the target sensing region and the sensing module.

Specifically, the obtaining the third result includes:
detecting the position parameters of moving objects in the target sensing region to form the third result of a plurality of sensing results.

Thus, based on this embodiment, the microwave sensing apparatus can obtain the distance value of moving objects within the target sensing region.

Further, after detecting the position parameters of moving objects in the target sensing region to form the third result of a plurality of sensing results, the method further includes:
judging the movement direction of moving objects in the target sensing region based on the change trend of the third result within a specified period, wherein the movement direction includes moving closer and away.

Based on the above embodiment, further, the microwave sensing method also includes:
setting a specified boundary and determining whether the moving object crosses the specified boundary based on the third result.

Thus, the microwave sensing method further includes:
sending a fifth result out when the sensing result is the fifth result of a plurality of sensing results, so as to enable the electronic device to form a representation characterizing the fifth result on the display interface thereof in response to the fifth result; the fifth result characterizes a moving object within the target sensing region passing through a specified boundary within the target sensing region in a manner of moving closer and away.

Thus, based on this embodiment, the microwave sensing apparatus can determine whether moving objects in the target sensing region cross the specified boundary and display corresponding information on the display interface of an electronic device, allowing the users to promptly review related triggering situations.

Further, the microwave sensing apparatus changes the specified boundary by executing commands from an application.

Further, the microwave sensing method further includes:
reporting the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; wherein the control relationship defines a mapping relationship between at least one of a plurality of sensing results and at least one control result; and the control result is an executable function of one controlled device connected to the designated network.

Thus, based on the technical solution provided by this embodiment, the microwave sensing apparatus can achieve diverse and complex intelligent linkage requirements by freely defining control relationships between various sensing results and executable functions of controlled devices connected to the designated network.

Further, the control result also includes adjusting the indication lamp signal of the microwave sensing apparatus. Thus, the microwave sensing apparatus can simultaneously link external electrical devices and its own indication lamp signals.

Further, after obtaining the sensing results, the method further includes:
controlling the power supply of an external electrical device based on the sensing results according to preset control logic.

Optionally, the controlling the power supply of an external electrical device based on the sensing results according to preset control logic specifically includes:
controlling the power supply of the electrical device by turning on or off a relay connected to the power supply circuit of the external electrical device.

Optionally, the microwave induction method further includes:
detecting illumination intensity by a light sensing module electrically connected to the communication module.

Optionally, the microwave sensing method further includes:
periodically acquiring illumination intensity data via the light sensing module and upload it, enabling the electronic device to respond to the illumination intensity data and form a representation associated with the illumination intensity data on the display interface thereof

Thus, the microwave sensing apparatus can detect current illumination intensity by the light sensing module, providing the users with reference data for setting intelligent scenarios and forming the basis for trigger condition settings in intelligent scenarios.

Optionally, the microwave sensing method further includes:
uploading acquired illumination intensity data at predetermined intervals, or uploading the acquired illumination intensity data when the change between two consecutive acquisitions exceeds a specified threshold, enabling the electronic device to respond to the illumination intensity data and form a representation associated with the illumination intensity data on the display interface thereof.

Thus, based on this solution, the illumination intensity data is only reported when changes exceed a specified threshold or at predetermined intervals, not in real-time, significantly reducing data reporting when illumination intensity data changes are minimal.

Optionally, the microwave sensing method further includes:
reporting the illumination intensity via the designated network when connected to it, enabling a gateway device and/or cloud server connected to the designated network to receive the illumination intensity data and execute a defined control result according to a target control relationship matching the illumination intensity among at least one preset control relationship, wherein the control relationship defines a mapping relationship between illumination intensity of at least one specified condition and at least one control result; and the control result is an executable function of a controlled device connected to the designated network.

The control relationship and control result in this embodiment can be understood with reference to the above embodiment and are not detailed here. The difference is that the trigger condition for intelligent scenarios in this embodiment is illumination intensity. Users can set reasonable mapping relationships based on illumination intensity values from each time period in the fitting curve, ensuring that the control results are executed more appropriately.

Further, the microwave sensing method further includes:
turning off the indication lamp when obtaining illumination intensity data by the light sensing module.

Optionally, the control result also includes adjusting the signal emitted by the indication lamp of the microwave sensing apparatus. Thus, the microwave sensing apparatus can simultaneously link external electrical devices and its own indication lamp signals.

Optionally, after obtaining the illumination intensity, the method further includes:
controlling the power supply of an external electrical device based on the illumination intensity according to preset control logic.

Optionally, the controlling the power supply of an external electrical device based on the illumination intensity according to preset control logic specifically includes:
controlling the power supply of the electrical device by turning on or off a relay connected to the power supply circuit of the external electrical device.

Optionally, the light sensing module includes a visible light photoelectric probe and an infrared light photoelectric probe. The light sensing module is configured to obtain the illumination intensity by processing the illumination data of the visible light photoelectric probe and the illumination data acquired by the infrared light photoelectric probe with a preset algorithm. The preset algorithm can be understood by reference to the relevant descriptions of the above embodiments and will not be described here.

It should be noted that the communication module can access the designated network in various ways to establish a communication connection with the electronic device. An embodiment of the present invention provides a preferred implementation. Specifically, in this embodiment, the establishing a communication connection with an electronic device having a display interface by the designated network in a state of being communicatively connected to the designated network includes:
entering a network configuration mode in response to a specified network configuration operation and sending a designated network configuration signal out, enabling a networked device receiving the designated network configuration signal to instruct the microwave sensing apparatus to connect to the designated network in response to the designated network configuration signal, thereby establishing a communication connection with at least one electronic device having a display interface by the designated network when the microwave sensing apparatus is connected to the designated network.

Herein, the network configuration mode can be entered in an unconfigured state or by resetting in a configured state. Thus, in one example, the entering the network configuration mode in response to a specified network configuration operation specifically includes: determining that the microwave sensing apparatus enters the network configuration mode in response to at least one trigger signal brought by the specified network configuration operation in an unconfigured state. In another example, the entering the network configuration mode in response to a specified network configuration operation specifically includes: determining that the microwave sensing apparatus is reset and enters the network configuration mode in response to at least one trigger signal brought by the specified network configuration operation in a configured state.

In the network configuration mode, a network configuration message is generated and sent out, so that after receiving the network configuration message, the designated device instructs the microwave sensing apparatus to join the designated network to complete the network configuration. The designated device includes an intelligent terminal device and/or a gateway device. After completing the network configuration, the microwave sensing apparatus can communicate with the gateway device by the designated network, and further communicate with the electronic device connected to the designated network by the gateway. Based on the above description, it should be understood that completing the network configuration mode should be understood as a mode in which the microwave sensing apparatus can perform data transmission with the gateway device after successfully joining the designated network. Furthermore, this embodiment provides a preferred implementation for the network configuration of the microwave sensing apparatus. Based on this implementation, the microwave sensing apparatus can be quickly discovered by intelligent terminal devices and/or gateway devices based on the network configuration message sent after entering the network configuration mode, and then instructed to join the designated network, thereby improving the network access efficiency of the microwave sensing apparatus.

Optionally, when the microwave sensing apparatus transmits the network configuration message out, it specifically includes: controlling an indication lamp connected to the communication module to emit a first prompt signal before transmitting the network configuration message. This prompts the user that the microwave sensing apparatus is about to enter the network configuration mode. Optionally, when the microwave sensing apparatus transmits the network configuration message out, it specifically includes sending the network configuration message at a specified network configuration interval.

Optionally, during the network configuration of the microwave sensing apparatus, the method further includes: controlling an indication lamp to emit a second prompt signal; and at least one of the following is different in the first prompt signal and the second prompt signal:
flashing frequency; and
color.

Thus, based on the technical solution provided in this embodiment, the user can easily distinguish the current state of the microwave sensing apparatus and confirm whether it has entered the network configuration mode based on the differences between the first prompt signal and the second prompt signal.

Optionally, the microwave sensing apparatus stops sending the network configuration message out and stops emitting the second prompt signal after successful network configuration. Furthermore, when the user observes the presence of the second prompt signal, it can be determined that the microwave sensing apparatus is currently in the network configuration mode. When the second prompt signal disappears, it can be determined that the microwave sensing apparatus has been successfully configured.

Optionally, the microwave sensing method further includes:
when operating in the network configuration mode after completing network setup, periodically send reminder messages at predetermined intervals, thereby enabling the electronic device and the gateway to verify the online status of the microwave sensing apparatus upon receiving the reminder messages.

It will be appreciated that both the microwave sensing apparatus and microwave sensing method in the above embodiments are applicable to the detection of moving objects, which may include movable organisms such as cats, dogs, humans, or non-living objects with specific mobility like robotic vacuum cleaners. Furthermore, for specific applications of human presence sensing, an embodiment of the present invention provides a microwave sensing apparatus applicable only to human presence detection, and proposes a microwave sensing method based on this device. It should be noted that relevant terms, components, and usage principles in this embodiment can be understood by referring to the descriptions of related embodiments and accompanying drawings above, and identical parts will not be repeated here.

Referring to Fig. 2, the microwave sensing apparatus in this embodiment is specifically adapted to establish a communication connection with an electronic device 200 having a display interface by a designated network in a state of being communicatively connected to the designated network. The microwave sensing apparatus includes:
a communication module 5 configured to obtain a selected instruction corresponding to different selected operations performed on at least one representation associated with sensing parameters on the display interface of the electronic device 200;
a sensing module 31 directly or indirectly communicatively connected to the communication module 5 and adapted to receive and execute the selected instructions sent by the communication module 5 to change sensing parameters; wherein the sensing parameters are used to select at least one sub-sensing region; the sub-sensing region is associated with a target sensing region, enabling the target sensing region to be flexibly formed based on different selected operations received by the electronic device 200; and the communication module 5 forms sensing results by detecting a moving human body within the target sensing region by the sensing module 31.

Based on the technical solution provided in this embodiment, it can be seen that in the embodiment of the present invention, the communication module 5 establishes a communication connection with an electronic device 200 and adjusts the sensing parameters of the sensing module 31 based on the selected operation received by the electronic device 200 to adjust the target sensing region of the microwave sensing apparatus, thereby flexibly adjusting the target sensing region of the microwave sensing apparatus based on the electronic device 200, enabling the target sensing region to be flexibly changed based on different sensing range requirements, and improving the applicability of the microwave sensing apparatus. Additionally, the electronic device 200 has a display interface. Users can connect the electronic device 200 (e.g., a smartphone) and the microwave sensing apparatus to the same designated network, and then conveniently set the target sensing region of the microwave sensing apparatus by the display interface on the electronic device 200. The visual selected operation method allows the users to make more accurate divisions of the target sensing region for specific application scenarios.

In one optional method for setting target sensing distances, the sensing parameters include a maximum sensing distance value to define the maximum sensing distance of a sub-sensing region. The sensing module 31 is further configured to change the maximum sensing distance value based on a selected instruction, so that the maximum sensing distance of a target sensing region including the sub-sensing region can be flexibly set. This enables modification of the coverage range of the target sensing region starting from the microwave sensing apparatus by adjusting the maximum sensing distance, thereby accommodating different sensing distance requirements.

In another optional method for setting target sensing distances, the sensing parameters include a minimum sensing distance value to define the minimum sensing distance of a sub-sensing region. The sensing module 31 is further configured to change the minimum sensing distance value based on a selected instruction, so that the minimum sensing distance of a target sensing region including the sub-sensing region can be flexibly set.

In yet another optional method for setting target sensing distances, the sensing parameters include at least one segment range starting from a first distance value and ending at a second distance value, for instructing the sensing module 31 to divide a sub-sensing region having the first distance value as a minimum sensing distance boundary value and the second distance value as a maximum sensing distance boundary value; where the first distance value is less than the second distance value and greater than zero; the communication module 5 is further configured to enable the sensing module 31 to vary the first distance value and/or the second distance value based on a selected instruction, thereby changing the minimum sensing distance and/or maximum sensing distance of a target sensing region including the sub-sensing region.

In still another optional method for setting target sensing distances, the sensing parameters include a plurality of sets of designated segment ranges, wherein each of the segment ranges is configured to instruct the sensing module 31 to divide a sub-sensing region having a minimum sensing distance value at a starting point of the segment range and a maximum sensing distance value at an ending point of the segment range; the communication module 5 is further configured to enable the sensing module 31 to select, based on a selected instruction, one or more sets of sub-sensing regions corresponding to the segment range to which the selected instruction is directed, so that the target sensing region can be precisely set according to the different sub-sensing regions selected. Furthermore, the plurality of sets of designated segment ranges can be combined to form a complete range without complete overlapping between each set of segment range, enabling the sensing module 31 to select at least two non-overlapping segment ranges based on a selected instruction, thereby allowing the target sensing region to be combined in a discontinuous manner by a plurality of discontinuous sub-sensing regions. For example, in some application scenarios such as an office setting, the regions where workstations are located are the regions to be sensed. After detecting moving objects at each workstation, some electrical devices (e.g., turning on lights) can be activated. The corridors between workstations are non-sensing regions. If an existing microwave sensing apparatus with only overall region sensing function is used to cover multiple workstations, the corridor regions between adjacent workstations will inevitably be covered, resulting in inaccurate coverage of the regions to be sensed. However, based on the technical solution disclosed in this embodiment, the target sensing region can be formed by discontinuous selection of the segment ranges corresponding to the sub-sensing regions where each workstation is located, thereby excluding non-sensing regions such as corridors and achieving precise coverage of each workstation region by the target sensing region.

Additionally, the sensing results should be understood as one or multiple types of results, meaning the communication module 5 can output one or multiple sensing results based on processing the detection results from the sensing module 31. Furthermore, one or more of a plurality of sensing results may also be in the sensing results sent out, and the plurality of sensing results may be sent out via one control message, or may be sent out via multiple control messages respectively.

Optionally, the communication module 5 is further configured to send the first result out when the sensing result continuously remains as the first result of a plurality of sensing results within the specified time, so that the electronic device 200 can receive the first result and display a representation characterizing the first result on the display interface thereof (refer to Fig. 23). The specified time is set by the electronic device 200 according to setting operations received by the display interface thereof. The first result indicates that no moving human body is detected within the target sensing region. Thus, in this embodiment, the communication module 5 does not immediately upload the result when detecting "no human presence" (first result), but delays upload until this result persists for the specified time and continues to be detected during the specified time, thereby reducing the data transmission volume. In addition, in some intelligent linkage scenarios, the sensing result "no human presence" is generally linked with a control result of turning off an electrical device, for example, turning off a corresponding lamp if the sensing result "no human presence" is set, or turning off an air conditioner if the sensing result "no human presence" is set, or the like. In such linkage scenarios, the accuracy of "no human presence" sensing results is crucial, as momentary detections may be erroneous. By requiring continuous "no human presence" sensing results over a specified time before upload, this approach reduces false alarm rates, preventing unintended shutdowns of electrical devices when people are actually present and thus improving user experience.

Optionally, the communication module 5 is further configured and adapted to calculate a duration time of a first result to form a fourth result sent out when the sensing result is a first result of the plurality of sensing results, such that the electronic device 200 can form a representation characterizing the fourth result on the display interface thereof in response to the fourth result (refer to Fig. 48). Thus, in this embodiment, when the sensing result is the first result, the display interface of the electronic device 200 will display the duration of the first result to form a representation of the fourth result for user viewing. Thus, the result can also be set as a trigger condition in the control relationship.

Optionally, the communication module 5 is further configured to execute a command from an application program to change the specified time.

Optionally, the communication module 5 is further configured to immediately send a second result out when the sensing result is a second result of a plurality of sensing results, to enable the electronic device 200 to form a representation characterizing the second result on the display interface thereof in response to the second result (refer to Fig. 49). The second result characterizes that the moving human body is detected within the target sensing region. Furthermore, in this embodiment, when the communication module 5 detects that the sensing result indicates human presence in the target sensing region, it immediately uploads this sensing result to the designated network. This allows the users to promptly monitor trigger results of moving objects in the target sensing region and facilitates triggering of control results corresponding to preset linkage control relationships based on the designated network settings, thereby improving linkage scenario triggering efficiency. Optionally, the communication module 5 is further configured and adapted to calculate a duration time of a second result to form a sixth result to be sent out when the sensing result is a second result of the plurality of sensing results, such that the electronic device 200 can form, in response to the sixth result, a representation characterizing the sixth result via the display interface thereof (refer to Fig. 49). Furthermore, in this embodiment, when the sensing result is "human presence", the duration time of this state ("human presence duration time") is reported to the designated network. The preset linkage control relationship can set this sixth result as a trigger condition to link corresponding control results, while the display interface of the electronic device 200 will display the duration time of the second result, forming a user-friendly representation of the sixth result. Optionally, the microwave sensing apparatus further includes a light-emitting module 33 electrically connected to the communication module 5, the communication module 5 being further configured to control the light-emitting module 33 to emit an indication signal of a specified rule when the sensing result is a second result. Thus, the user is visually informed that the second result is triggered by the indication signal conforming to the specified rule. In one example, the indication signal of the specified pattern includes flashing a light signal of a specified color at a certain periodic frequency. Thereby, the user can know that the second result is triggered when he or she sees that the flashing light signal is emitted from the microwave sensing apparatus.

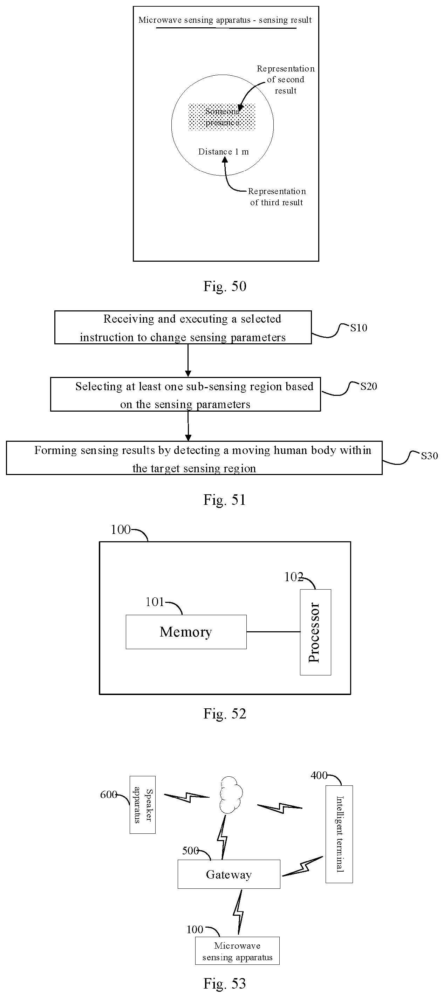

Optionally, the communication module 5 is further configured to periodically transmit a third result of a plurality of sensing results when the sensing result continuously remains as the second result, enabling the electronic device 200 to display a representation characterizing the third result on the display interface thereof in response to the third result (refer to Fig. 50). The third result characterizes the distance between the moving human body within the target sensing region and the sensing module 31. Specifically, the sensing module 31 is further configured to detect position parameters of a moving human body within the target sensing region, and the communication module 5 acquires these position parameters and processes them to form the third result of a plurality of sensing results.

Thus, based on this embodiment, the communication module 5 can obtain the distance value between the human body and the sensing module 31 when detecting a person's presence in the target sensing region, allowing the communication module 5 to derive other sensing results by correlation calculations with this distance value. For example, movement trends of the human body can be jointly determined based on the distance value, and then:
In one embodiment, the communication module 5 is further configured to judge the movement direction of a moving human body within the target sensing region based on the trend of change in the third result over a specified period. The movement direction includes both moving away and closer. In a specific example, the communication module 5 determines the movement direction of the human body by analyzing the distance value (third result) of the human body within 1 second, and determines that the human body approaches in the direction towards the microwave sensing apparatus if the distance value obtained within 1 second is gradually decreased, and otherwise determines that the human body is moved away from the microwave sensing apparatus.

Furthermore, in some embodiments, the communication module 5 is also configured to set a specified boundary and determine whether the moving human body crosses this specified boundary based on the third result. For example, if the specified boundary is set at a distance value of 5 meters, and the distance value crosses this 5-meter boundary within a specified period. It is determined that the human body has crossed the specified boundary. Thus,

In an embodiment, based on determining whether the human body crosses the specified boundary and determining the movement direction of the moving object, the communication module 5 is further configured to send a fifth result out when the sensing result is the fifth result of a plurality of sensing results, so as to enable the electronic device to form a representation characterizing the fifth result on the display interface thereof in response to the fifth result; the fifth result characterizes a moving human body within the target sensing region passing through a specified boundary within the target sensing region in a manner of moving closer and away.

When the sensing result is "someone approaching" or "someone departing", this result will be reported to a designated network. Based on the linkage control relationships set by this designated network, the fifth result can be configured as a trigger condition to initiate corresponding control actions, while the electronic device 200's display interface will show the representation of the fifth result for user viewing.

Optionally, the communication module 5 is further configured to execute a command from an application program to change the specified boundary.

Optionally, the communication module 5 is further configured to report the sensing result via the designated network in a state of being connected to the designated network, so that a gateway device and/or a cloud server 300 connected to the designated network can receive the sensing result and control a defined control result to be executed according to a target control relationship matching the sensing result in at least one pre-set control relationship; wherein the control relationship defines a mapping relationship between at least one of a plurality of sensing results and at least one control result; and the control result is an executable function of one controlled device connected to the designated network. Thus, based on the technical solution provided by this embodiment, the present invention can achieve diverse and complex intelligent linkage requirements by freely defining control relationships between various sensing results and executable functions of controlled devices connected to the designated network.

For example, a specific intelligent linkage application scenario is described as follows. The sensing module 31 of the microwave sensing apparatus is configured with a minimum sensing distance of 2 m and a maximum sensing distance of 4 m for the target sensing region, with the specified boundary set at a distance value of 2 m. Based on the designated network where the microwave sensing apparatus and electronic device 200 reside, the following control relationships are established. When the sensing result is "someone present", it links to turn on Lamp 1. When it is "someone approaching", it links to turn on Lamp 2 and turn off Lamp 1. When it is "someone departing", it links to turn off Lamp 2 and turn on Lamp 1. Furthermore, based on this control relationship, the linkage effect of the intelligent scene that can be achieved is as follows. When a person walks from a direction away from the microwave sensing apparatus to a direction close to the microwave sensing apparatus, if the walking distance is within the range of 4 m, Lamp 1 will be triggered to turn on. When it approaches and passes through the boundary of 2 m, Lamp 2 will be triggered to turn on and Lamp 1 will be triggered to turn off. When the walking distance is within the range of 2m, the person will no longer be in the target sensing region. At this time, the sensing result in the target sensing region is "no human presence", and the result of "no human presence" will be reported in a delayed manner so as to reduce the reported triggering event (if it is detected as "someone presence", it will be reported immediately). When the person leaves, crossing the 2 m boundary while departing triggers Lamp 2 to turn off. Entering the 2-4m range triggers Lamp 1 to turn on and turn off Lamp 1. This achieves intelligent linkage between lighting fixtures and the microwave sensing apparatus.

Optionally, the control result also includes changing the indication lamp signal of the microwave sensing apparatus. Thus, the microwave sensing apparatus can synchronize its own indication lamp signals while linking external electrical devices. For example, when detecting someone, it turns on corresponding lights and turns off its own indicator. When detecting no one, it turns off corresponding lights and turns on its own indication lamp, minimizing unnecessary activation of the device's indication lamp.

Optionally, referring to Fig. 15, the microwave sensing apparatus further includes at least one switch module 34 for switching on/off a power supply circuit of an external electrical device. It is electrically connected to the communication module 5 to be switched on or off under the control of the communication module 5. The communication module 5 is further configured to control the switch module 34 to switch on or off based on the sensing result according to a preset control logic, thereby controlling the power supply of the electrical device.

Optionally, the switch module 34 includes a relay electrically connected to the power supply circuit of an external electrical device to control the power supply of the electrical device to be turned on or off under the control of the communication module 5.

Optionally, referring to Fig. 16, the microwave sensing apparatus further includes a light sensing module 32 electrically connected to the communication module 5 for detecting illumination intensity.

Optionally, the communication module 5 is further configured to periodically acquire illumination intensity data via the light sensing module 32 and upload it, enabling the electronic device 200 to respond to the illumination intensity data and form a representation associated with it on the display interface thereof (refer to Fig. 17). Thus, the communication module 5 can detect current illumination intensity via the light sensing module 32 and transmit the detected illumination intensity out to form the basis for setting trigger conditions in intelligent scenarios. In a specific example, the illumination intensity data from different time periods is fitted to form a fitting curve of the illumination intensity, allowing the users to intuitively view daily illumination intensity trends and facilitating reference for setting illumination intensity conditions when configuring intelligent scenarios.

Optionally, the communication module 5 is further configured to upload acquired illumination intensity data at predetermined intervals, or upload the acquired illumination intensity data when the change between two consecutive acquisitions exceeds a specified threshold, enabling the electronic device to respond to the illumination intensity data and form a representation associated with the illumination intensity data on the display interface thereof. Thus, based on this solution, the illumination intensity data is only reported when changes exceed a specified threshold or at predetermined intervals, not in real-time, significantly reducing data reporting when illumination intensity data changes are minimal.

Optionally, the communication module 5 is further configured to report the illumination intensity via the designated network when connected to it, enabling a gateway device and/or cloud server 300 connected to the designated network to receive the illumination intensity data and execute a defined control result according to a target control relationship matching the illumination intensity among at least one preset control relationship. The control relationship defines a mapping relationship between illumination intensity of at least one specified condition and at least one control result. The control result is an executable function of a controlled device connected to the designated network. The control relationship and control result in this embodiment can be understood with reference to the above embodiment and are not detailed here. The difference is that the trigger condition for intelligent scenarios in this embodiment is illumination intensity. Users can set reasonable mapping relationships based on illumination intensity values from each time period in the fitting curve, ensuring that the control results are executed more appropriately.

Optionally, the microwave sensing apparatus further includes a light-emitting module 33 electrically connected to the communication module 5 to emit an indication signal indicating the working state of the microwave sensing apparatus under its control. The communication module 5 is further adapted to turn off the indication lamp in the light-emitting module 33 when acquiring illumination intensity data via the light sensing module 32. In this embodiment, the light sensing module 32 collects illumination intensity data and the light-emitting module 33 illuminates the indication lamp at intervals to prevent the indication lamp from affecting the accuracy of illumination intensity data during collection.

Optionally, the light-emitting module 33 includes an indication lamp, and the control result also includes changing the signal emitted by the indication lamp, allowing the microwave sensing apparatus to link its own indication lamp signal while linking external electrical devices. Optionally, the microwave sensing apparatus further includes at least one switch module 34 for switching on/off a power supply circuit of an external electrical device. It is electrically connected to the communication module 5 to be switched on or off under the control of the communication module 5. The communication module 5 is further configured to control the switch module 34 to switch on or off based on the illumination intensity according to a preset control logic, thereby controlling the power supply of the electrical device.

Optionally, the switch module 34 includes a relay electrically connected to the power supply circuit of an external electrical device to control the power supply of the electrical device to be turned on or off under the control of the communication module 5.

Optionally, the light sensing module 32 includes a visible light photoelectric probe and an infrared light photoelectric probe. The light sensing module is configured to obtain the illumination intensity by processing the illumination data of the visible light photoelectric probe and the illumination data acquired by the infrared light photoelectric probe with a preset algorithm.

Furthermore, it should be noted that the communication module 5 can access the designated network in multiple ways to establish a communication connection with the electronic device 200. An embodiment of the present invention provides a preferred implementation. Specifically, in this embodiment, the communication module 5 is further adapted to enter a network configuration mode in response to a designated network configuration operation to send out a designated network configuration signal to the outside such that a networked device receiving the designated network configuration signal instructs the communication module 5 to connect to the designated network in response to the designated network configuration signal, thereby enabling the microwave sensing apparatus to establish a communication connection with at least one electronic device 200 having a display interface by the designated network in a state in which the communication module is connected to the designated network.

Optionally, the communication module 5 is specifically adapted to determine that the communication module 5 enters a network configuration mode in response to at least one trigger signal generated by the specified network configuration operation in an unconfigured network mode, or to determine that the communication module 5 is reset to enter a network configuration mode in response to at least one trigger signal generated by the specified network configuration operation in a configured network mode.

In the network configuration mode, a network configuration message is generated and sent out, so that after receiving the network configuration message, the designated device instructs the microwave sensing apparatus to join the designated network to complete the network configuration. The designated device includes an intelligent terminal device and/or a gateway device. After completing the network configuration, the microwave sensing apparatus can communicate with the gateway device by the designated network, and further communicate with the electronic device 200 connected to the designated network by the gateway.

Based on the above description, it should be understood that completing the network configuration mode should be understood as a mode in which the microwave sensing apparatus can perform data transmission with the gateway device after successfully joining the designated network. Furthermore, this embodiment provides a preferred implementation for the network configuration of the microwave sensing apparatus. Based on this implementation, the microwave sensing apparatus can be quickly discovered by intelligent terminal devices and/or gateway devices based on the network configuration message sent after entering the network configuration mode, and then instructed to join the designated network, thereby improving the network access efficiency of the microwave sensing apparatus. The instruction should include sending the name and password of an available network to the communication module 5, so that the communication module 5 connects to the available network based on the name and password, thereby completing the relevant network configuration operations.

Optionally, the communication module 5 is also configured to control a light-emitting module 33 connected to the communication module 5 to emit a first prompt signal before sending the network configuration message, so as to prompt the user that the microwave sensing apparatus is about to enter the network configuration mode.

Optionally, during the network configuration, the communication module 5 is also configured to control a light-emitting module 33 connected to the communication module 5 to emit a second prompt signal. At least one of the following is different in the first prompt signal and the second prompt signal:
flashing frequency; and
color.

Thus, based on the technical solution provided in this embodiment, the user can easily distinguish the current state of the microwave sensing apparatus and confirm whether it has entered the network configuration mode based on the differences between the first prompt signal and the second prompt signal.

Optionally, the communication module 5 is further configured to:
periodically send reminder messages at predetermined intervals, thereby enabling the electronic device 200 to verify the online status of the microwave sensing apparatus upon receiving the reminder messages.

Optionally, the sensing module 31 specifically includes a radar module which forms an actual sensing region that can be covered by the detection wave by emitting the detection wave to the outside. The target sensing region is contained in the actual sensing region.

Optionally, the communication module 5 specifically includes a Bluetooth module, which establishes a communication relationship with the radar module via a serial port, establishes a communication relationship with the light sensing module 32 via IIC communication, and controls each indication lamp in the light-emitting module 33 via an input/output port.

Referring to Fig. 51, a schematic flowchart of a microwave sensing method provided in this embodiment is shown, applied to a microwave sensing apparatus. The microwave sensing apparatus is adapted to establish a communication connection with an electronic device having a display interface by a designated network in a state in which the microwave sensing apparatus is communicatively connected to the designated network. The microwave sensing method includes:
S10, receiving and executing a selected instruction to change a sensing parameter; wherein the selected instruction is generated by the electronic device based on different selected operations performed on at least one representation associated with the sensing parameter displayed on the display interface thereof;
S20, selecting at least one sub-sensing region based on the sensing parameters; wherein the sub-sensing region is associated with a target sensing region, enabling the target sensing region to be flexibly formed based on different selected operations received by the electronic device; and
S30, forming sensing results by detecting a moving human body within the target sensing region.

Optionally, the sensing parameter includes a maximum sensing distance value for defining a maximum sensing distance of a sub-sensing region. The selecting at least one sub-sensing region based on the sensing parameters specifically includes:
changing the maximum sensing distance value based on a selected instruction, such that a maximum sensing distance of the target sensing region including the sub-sensing region can be flexibly set.

Optionally, the sensing parameter includes a minimum sensing distance value for defining a minimum sensing distance of a sub-sensing region. The selecting at least one sub-sensing region based on the sensing parameters specifically includes:

changing the minimum sensing distance value based on a selected instruction, such that a minimum sensing distance of the target sensing region including the sub-sensing region can be flexibly set.

Optionally, the sensing parameters include at least one segment range starting from a first distance value and ending at a second distance value, for instructing the sensing module to divide a sub-sensing region having the first distance value as a minimum sensing distance value and the second distance value as a maximum sensing distance value; where the first distance value is less than the second distance value and greater than zero. The selecting at least one sub-sensing region based on the sensing parameters specifically includes:
changing the first distance value and/or the second distance value based on a selected instruction, thereby varying a minimum sensing distance and/or maximum sensing distance of the target sensing region including the sub-sensing region.

Optionally, the sensing parameters include a plurality of sets of designated segment ranges, each segment range used to divide a sub-sensing region with the starting point of the segment range as the minimum sensing distance value and the ending point as the maximum sensing distance value. The selecting at least one sub-sensing region based on the sensing parameters specifically includes: selecting one or more sets of sub-sensing regions corresponding to the segment ranges pointed to by the selected instruction, enabling the target sensing region to be precisely set based on the selected different sub-sensing regions.

Optionally, a plurality of sets of designated segment ranges can form a complete range, with the plurality of sets of segment ranges not completely overlapping. The selecting at least one sub-sensing region based on the sensing parameters specifically includes selecting a plurality of non-overlapping segment ranges based on a selected instruction, enabling the target sensing region to be discontinuously combined by a plurality of discontinuous sub-sensing regions.

Optionally, after obtaining the sensing result, it further includes:
sending a first result out, in a case that the sensing result within a specified time is the first result of a plurality of sensing results, to enable the electronic device to form a representation characterizing the first result on the display interface thereof in response to the first result; wherein the specified time is set by the electronic device according to a setting operation received by the display interface thereof; and the first result characterizes that no moving human body is detected within the target sensing region.

Optionally, when the sensing result is the first result of a plurality of sensing results, it further includes:
calculating a duration time of a first result to form a fourth result sent out, such that the electronic device can form a representation characterizing the fourth result on the display interface thereof in response to the fourth result.

Optionally, the microwave sensing method further includes changing the specified time by executing commands from an application.

Optionally, after obtaining the sensing result, it further includes:
immediately sending a second result out when the sensing result is a second result of a plurality of sensing results, to enable the electronic device to form a representation characterizing the second result on the display interface thereof in response to the second result, wherein the second result characterizes that the moving human body is detected within the target sensing region.

Optionally, when the sensing result is the second result of a plurality of sensing results, it further includes:
calculating a duration time of a second result to form a sixth result sent out, such that the electronic device can form a representation characterizing the sixth result on the display interface thereof in response to the sixth result.

Optionally, when the sensing result is the second result of a plurality of sensing results, it further includes, when the sensing result is the second result, emitting an indication signal according to specified rules.

Optionally, the indication signal of the specified pattern includes flashing a light signal of a specified color at a certain periodic frequency.

Optionally, after obtaining the second result, it further includes periodically sending a third result of the plurality of sensing results out, to enable the electronic device to form a representation characterizing the third result on the display interface thereof in response to the third result; wherein the third result characterizes the distance between the moving human body within the target sensing region and the microwave sensing apparatus.

Optionally, the obtaining the third result specifically includes:
selecting a position parameter of a moving human body in the target sensing region, and forming a third result among the plurality of sensing results after processing the detected position parameter.

Optionally, after obtaining the third result, further including:
judging the movement direction of the moving human body in the target sensing region based on the change trend of the third result within a specified time period; wherein the movement direction includes moving away and closer.

Optionally, the microwave sensing method further includes:
setting a specified boundary, and determining whether the moving human body crosses the specified boundary according to the third result.

Optionally, after obtaining the sensing result, it further includes:
sending a fifth result out when the sensing result is the fifth result of a plurality of sensing results, so as to enable the electronic device to form a representation characterizing the fifth result on the display interface thereof in response to the fifth result; the fifth result characterizes a moving human body within the target sensing region passing through a specified boundary within the target sensing region in a manner of moving closer and away.

Optionally, the microwave sensing method further includes changing the specified boundary by executing commands from an application.

Optionally, after obtaining the sensing result, further including:
reporting the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; wherein the control relationship defines a mapping relationship between at least one of a plurality of sensing results and at least one control result; and the control result is an executable function of one controlled device connected to the designated network.

Optionally, the control result also includes changing the indication lamp signal of the microwave sensing apparatus.

Optionally, after obtaining the sensing result, further including:
controlling the power supply of an external electrical device based on the sensing results according to preset control logic.

Optionally, the controlling the power supply of an external electrical device based on the sensing results according to preset control logic specifically includes:
controlling the power supply of the electrical device by turning on or off a relay connected to the power supply circuit of the external electrical device.

Optionally, the microwave sensing method further includes:
detecting illumination intensity within the target sensing region.

Optionally, after obtaining the illumination intensity, it further includes:
uploading the illumination intensity data to enable the electronic device to form a representation associated with the illumination intensity data on the display interface thereof in response to receiving the illumination intensity data.

Optionally, the uploading the illumination intensity data specifically includes:
uploading acquired illumination intensity data at predetermined intervals, or uploading the acquired illumination intensity data when the change between two consecutive acquisitions exceeds a specified threshold, enabling the electronic device to respond to the illumination intensity data and form a representation associated with the illumination intensity data on the display interface thereof.

Optionally, after obtaining the illumination intensity, the method further includes:
reporting the illumination intensity via the designated network when connected to it, enabling a gateway device and/or cloud server connected to the designated network to receive the illumination intensity data and execute a defined control result according to a target control relationship matching the illumination intensity among at least one preset control relationship, wherein the control relationship defines a mapping relationship between illumination intensity of at least one specified condition and at least one control result; and the control result is an executable function of a controlled device connected to the designated network.

Optionally, when obtaining the illumination intensity, it further includes turning off the indication lamp.

Optionally, the control result further includes changing a signal emitted by the indication lamp.

Optionally, after obtaining the illumination intensity, the method further includes:
controlling the power supply of an external electrical device based on the illumination intensity according to preset control logic.

Optionally, the controlling the power supply of an external electrical device based on the illumination intensity according to preset control logic specifically includes:
controlling the power supply of the electrical device by turning on or off a relay connected to the power supply circuit of the external electrical device.

Optionally, the obtaining the illumination intensity specifically includes:
obtaining the illumination intensity by processing illumination data acquired by a visible light photoelectric probe and illumination data acquired by an infrared light photoelectric probe with a preset algorithm.

Referring to Fig. 52, an embodiment of the present invention further provides a microwave sensing apparatus 100, including:
the memory 101 configured to store code; and
the processor 102 configured to execute the executable instructions to perform the methods mentioned above, particularly the operation process of the microwave sensing apparatus 100.

The processor 102 can communicate with the memory 101 via a bus.

An embodiment of the present invention further provides a storage medium having stored thereon a program which, when executed by a processor, implements the methods mentioned above, particularly the operation process of the microwave sensing apparatus therein.

Those skilled in the art will understand that all or part of the steps for implementing the method embodiments described above may be completed by hardware related to program instructions. The aforementioned program may be stored in a computer-readable storage medium. The program, when executed, performs steps including the various method embodiments described above. The storage medium includes various media which can store program codes, such as ROM, RAM, magnetic or optical disks.

Referring to Fig. 53, an embodiment of the present invention further provides a control system based on a microwave sensing apparatus, including the microwave sensing apparatus 100 mentioned above.

Further, in some embodiments, the control system further includes an intelligent terminal 400 and a gateway 500.

The intelligent terminal 400 may be any device or combination of devices with data processing capability and external communication capability, such as a mobile phone, a computer, a tablet, a vehicle-mounted device, etc.

The gateway 500 may be a gateway of any network, such as a WiFi network, a Zigbee network, or a Bluetooth network. In a further solution, the gateway may access the Internet to enable data exchange with other devices (e.g., intelligent terminals, speaker devices) connected to the Internet. Additionally, the gateway may be a dedicated gateway device or another device with gateway functionality (e.g., a speaker device with gateway functionality, a display device with gateway functionality, a computer with gateway functionality, a host, etc.).

The control system may further include a speaker device 600, which may be any device with sound playback capability and may also have wired or wireless communication capability. In some solutions, the speaker device may be a smart voice speaker, which may also have voice recognition capability, protocol conversion capability, etc. In some solutions, the speaker device may achieve external communication by joining the gateway's network. In some solutions, it may also join the intelligent terminal's network (e.g., the terminal's WiFi hotspot or its connected network) for external communication. In some solutions, it may also achieve external communication by other means (e.g., joining other WiFi networks).

If the speaker device is a speaker device with gateway functionality, the speaker device may serve as the gateway, and the control system may include the speaker device with gateway functionality (which is also a gateway), without needing to configure both the speaker device and the gateway. Thus, the gateway may be independent of the speaker device or may utilize the speaker device as the gateway.

The speaker device may also have Bluetooth communication capability, enabling it to communicate with terminals, gateways, etc., via Bluetooth when not with the network configuration. For example, during network configuration, it may send network configuration messages via Bluetooth, allowing the terminal or gateway to configure the network based on these messages and join it to a Bluetooth network or WiFi network.

In some solutions, the control system may further include a server. The microwave sensing apparatus, gateway, and intelligent terminal may all interact with the server, and data exchange between the gateway and intelligent terminal may be facilitated by the server. The speaker device may also interact with the server, enabling interaction with the terminal and/or gateway via the server. In some examples, the server may primarily serve as a data forwarder. In some examples, it may also handle data storage and processing.

In one implementation, if the gateway is a Bluetooth gateway and the corresponding network is a Bluetooth network (e.g., Bluetooth Mesh network), the microwave sensing apparatus may join the Bluetooth network after network configuration and communicate with the gateway (or a speaker device with gateway functionality) via Bluetooth signals. Simultaneously, the microwave sensing apparatus may also communicate with the intelligent terminal via Bluetooth signals, enabling the intelligent terminal (e.g., the aforementioned electronic device) to send messages to the microwave sensing apparatus (or the speaker device with gateway functionality) based on Bluetooth signals. In the description of this description, references to terms such as "some embodiments" "a specific implementation" "a specific implementation process" or "an example" mean that the specific features, structures, materials, or characteristics described in connection with the embodiment or example are included in at least one embodiment or example of the present invention. In this description, schematic expressions of the above terms corresponding to the described specific features, structures, materials, or characteristics may be combined in any suitable manner in any one or more embodiments or examples.

Additionally, it should be noted that the above embodiments may be combined with each other. For the same or similar concepts or processes, they may not be described in detail in some embodiments. That is, the technical solutions disclosed in subsequent embodiments (in the order of the text) should include the technical solutions described in those embodiments and all preceding embodiments. Finally, it should be noted that the above embodiments are only intended to illustrate the technical solutions of the present invention, not to limit them. Although the present invention has been described in detail with reference to the foregoing embodiments, those skilled in the art will understand that they may still modify the technical solutions described in the foregoing embodiments or equivalently replace some or all of the technical features. Such modifications or replacements will not cause the essence of the corresponding technical solutions to depart from the scope of the embodiments of the present invention.

## Claims

1. A microwave sensing apparatus, wherein the microwave sensing apparatus is adapted to establish a communication connection relationship with an electronic device having a display interface by a designated network in a state in which the microwave sensing apparatus is communicatively connected to the designated network; the microwave sensing apparatus comprises:
a communication module configured to obtain a selected instruction corresponding to different selected operations performed on at least one representation associated with sensing parameters on the display interface of the electronic device;
a sensing module directly or indirectly communicatively connected to the communication module and adapted to receive and execute the selected instructions sent by the communication module to change sensing parameters; wherein the sensing parameters are used to select at least one sub-sensing region; the sub-sensing region is associated with a target sensing region, enabling the target sensing region to be flexibly formed based on different selected operations received by the electronic device; and the communication module forms sensing results by detecting a moving human body within the target sensing region by the sensing module.

2. The microwave sensing apparatus according to claim 1, wherein the sensing parameters comprise a maximum sensing distance value to define a maximum sensing distance of a sub-sensing region; the sensing module is further configured to change the maximum sensing distance value based on a selected instruction, so that the maximum sensing distance of a target sensing region comprising the sub-sensing region can be flexibly set.

3. The microwave sensing apparatus according to claim 1 or claim 2, wherein the sensing parameter comprises a minimum sensing distance value to define the minimum sensing distance of a sub-sensing region; and the sensing module is further configured to change the minimum sensing distance value based on a selected instruction, so that the minimum sensing distance of a target sensing region comprising the sub-sensing region can be flexibly set.

4. The microwave sensing apparatus according to claim 1, wherein the sensing parameters comprise at least one segment range starting from a first distance value and ending at a second distance value, for instructing the sensing module to divide a sub-sensing region having the first distance value as a minimum sensing distance value and the second distance value as a maximum sensing distance value; wherein the first distance value is less than the second distance value and greater than zero; the communication module is further configured to enable the sensing module to vary the first distance value and/or the second distance value based on a selected instruction, thereby changing a minimum sensing distance and/or a maximum sensing distance of a target sensing region which comprises the sub-sensing region.

5. The microwave sensing apparatus according to claim 1, wherein the sensing parameters comprise a plurality of sets of designated segment ranges, wherein each of the segment ranges is configured to instruct the sensing module to divide a sub-sensing region having a minimum sensing distance value at a starting point of the segment range and a maximum sensing distance value at an ending point of the segment range; the communication module is further configured to enable the sensing module to select, based on a selected instruction, one or more sets of sub-sensing regions corresponding to the segment range to which the selected instruction is directed, so that the target sensing region can be precisely set according to the different sub-sensing regions selected.

6. The microwave sensing apparatus according to claim 5, wherein the plurality of sets of designated segment ranges can be combined to form a complete range without complete overlapping between each segment range, enabling the sensing module to select at least two non-overlapping segment ranges in accordance with a selected instruction, thereby allowing the target sensing region to be to be combined in a discontinuously manner by a plurality of discontinuous sub-sensing regions.

7. The microwave sensing apparatus according to any one of claims 1, 2 and 4-6, wherein the communication module is further configured to send a first result out, in a case that the sensing result continues to be the first result for a specified time, to enable the electronic device to receive the first result to form a representation characterizing the first result on the display interface thereof; the specified time is set by the electronic device according to a setting operation received by the display interface thereof; and the first result characterizes that no moving human body is detected within the target sensing region.

8. The microwave sensing apparatus according to claim 7, wherein the communication module is further configured and adapted to calculate a duration time of a first result to form a fourth result sent out when the sensing result is a first result of the plurality of sensing results, such that the electronic device can form a representation characterizing the fourth result on the display interface thereof in response to the fourth result.

9. The microwave sensing apparatus according to claim 7, wherein the communication module is further configured to execute a command from an application to change the specified time.

10. The microwave sensing apparatus according to any one of claims 1, 2, 4-6, 8 and 9, wherein the communication module is further configured to immediately send a second result out when the sensing result is the second result, to enable the electronic device to form a representation characterizing the second result on the display interface thereof in response to the second result; and the second result characterizes that the moving human body is detected within the target sensing region.

11. The microwave sensing apparatus according to claim 10, wherein the communication module is further configured and adapted to calculate the duration of the second result when the sensing result continues to be the second result to form a sixth result which is sent out to enable the electronic device to form a representation characterizing the sixth result on the display interface thereof in response to the sixth result.

12. The microwave sensing apparatus according to claim 11, further comprising a light-emitting module electrically connected to the communication module, the communication module being further configured to control the light-emitting module to emit an indication signal of a specified pattern when the sensing result is a second result.

13. The microwave sensing apparatus according to claim 12, wherein the indication signal of the specified pattern comprises flashing a light signal of a specified color at a certain periodic frequency.

14. The microwave sensing apparatus according to any one of claims 1, 2, 4-6, 8, 9, and 11-13, wherein the communication module is further configured and adapted to periodically send out a third result of the plurality of sensing results when the sensing result is the second result, such that the electronic device can form a representation characterizing the third result on the display interface thereof in response to the third result; and the third result characterizes the distance between the moving human body within the target sensing region and the sensing module.

15. The microwave sensing apparatus according to claim 14, wherein the sensing module is further configured to detect position parameters of the moving human body within the target sensing region, and the communication module acquires the position parameters and processes them to form the third result of the plurality of sensing results.

16. The microwave sensing apparatus according to claim 15, wherein the communication module is further configured to judge the movement direction of the moving human body within the target sensing region based on the trend of change in the third result over a specified period; and the movement direction comprises both moving away and closer.

17. The microwave sensing apparatus according to claim 16, wherein the communication module is further configured to set a specified boundary and determine whether the moving human body crosses this specified boundary based on the third result.

18. The microwave sensing apparatus according to claim 17, wherein the communication module is further configured to send a fifth result out when the sensing result is the fifth result, so as to enable the electronic device to form a representation characterizing the fifth result on the display interface thereof in response to the fifth result; the fifth result characterizes the moving human body within the target sensing region passing through a specified boundary within the target sensing region in a manner of moving closer and away.

19. The microwave sensing apparatus according to claim 17, wherein the communication module is further configured to execute a command from an application to change the specified boundary.

20. The microwave sensing apparatus according to any one of claims 1, 2, 4-6, and 18, wherein the communication module is further configured to report the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; the control relationship defines a mapping relationship between at least one of a plurality of sensing results and at least one control result; and the control result is an executable function of one controlled device connected to the designated network.

21. The microwave sensing apparatus according to claim 20, wherein the control results further comprise changing an indication lamp signal of the microwave sensing apparatus.

22. The microwave sensing apparatus according to any one of claims 1, 2 and 4-6, wherein the microwave sensing apparatus further comprises at least one switch module for switching on/off a power supply circuit of an external electrical device; the microwave sensing apparatus is electrically connected to the communication module to be switched on or off under the control of the communication module; the communication module is further configured to control the switch module to switch on or off based on the sensing result according to a preset control logic, thereby controlling the power supply of the electrical device.

23. The microwave sensing apparatus according to claim 22, wherein the switch module comprises a relay electrically connected to the power supply circuit of an external electrical device to control the power supply of the electrical device to be turned on or off under the control of the communication module.

24. The microwave sensing apparatus according to claim 1, wherein the microwave sensing apparatus further comprises:
a housing having a first wall, wherein a detection switch, the sensing module and the communication module are provided inside the housing;
an optical transceiver provided on the first wall, so that the microwave sensing apparatus can emit light in a first direction by the optical transceiver and can have light incident in a second direction;
the optical passer is configured to match the detection switch, so as to trigger the detection switch when displaced in response to a first operating force;
a light sensing module, which corresponds to the optical transceiver, electrically connected to the communication module, and configured to receive light in the second direction to perform illumination intensity detection; and
a light-emitting module corresponding to the optical transceiver and electrically connected to the communication module for emitting light in the first direction under the control of the communication module, so as to form an indication signal for indicating a working state of the microwave sensing apparatus.

25. The microwave sensing apparatus according to claim 24, wherein the communication module is further configured to periodically acquire illumination intensity data via the light sensing module and upload it, enabling the electronic device to respond to the illumination intensity data and form a representation associated with the illumination intensity data on the display interface thereof.

26. The microwave sensing apparatus according to claim 25, wherein the communication module is further configured to upload acquired illumination intensity data at predetermined intervals, or upload the acquired illumination intensity data when the change between two consecutive acquisitions exceeds a specified threshold, enabling the electronic device to respond to the illumination intensity data and form a representation associated with the illumination intensity data on the display interface thereof.

27. The microwave sensing apparatus according to claim 24, wherein the communication module is further configured to report the illumination intensity via the designated network when connected to it, enabling a gateway device and/or cloud server connected to the designated network to receive the illumination intensity data and execute a defined control result according to a target control relationship matching the illumination intensity among at least one preset control relationship; the control relationship defines a mapping relationship between illumination intensity of at least one specified condition and at least one control result; and the control result is an executable function of a controlled device connected to the designated network.

28. The microwave sensing apparatus according to claim 27, wherein the communication module is further adapted to turn off the indication lamp in the light-emitting module when acquiring the illumination intensity data via the light sensing module.

29. The microwave sensing apparatus according to claim 28, wherein the light-emitting module comprises at least one indication lamp, the control result further comprising changing a signal from the indication lamp.

30. The microwave sensing apparatus according to claim 24, the microwave sensing apparatus further comprises at least one switch module for switching on/off a power supply circuit of an external electrical device; the microwave sensing apparatus is electrically connected to the communication module to be switched on or off under the control of the communication module; the communication module is further configured to control the switch module to switch on or off based on the illumination intensity according to a preset control logic, thereby controlling the power supply of the electrical device.

31. The microwave sensing apparatus according to claim 30, wherein the switch module comprises a relay electrically connected to the power supply circuit of an external electrical device to control the power supply of the electrical device to be turned on or off under the control of the communication module.

32. The microwave sensing apparatus according to any one of claims 25-31, wherein the light sensing module comprises a visible light photoelectric probe and an infrared light photoelectric probe; and the light sensing module is configured to obtain the illumination intensity by processing the illumination data of the visible light photoelectric probe and the illumination data acquired by the infrared light photoelectric probe with a preset algorithm.

33. The microwave sensing apparatus according to claim 24, wherein the optical transceiver comprises:
a light-transmitting part comprising an indication region and a light sensing region, wherein the indication region corresponds to the light-emitting module so that light in a first direction emitted by the light-emitting module can be emitted out of the housing by the light-transmitting part; the light sensing region corresponds to the light sensing module, so that light in a second direction outside the housing can be incident into the housing by the light-transmitting part and received by the light sensing module; and
a trigger part provided at the light-transmitting part, displaced relative to the first wall in response to a first operating force and provided relative to the detection switch so as to trigger the detection switch in response to the displacement.

34. The microwave sensing apparatus according to claim 33, wherein the indication region and the light sensing region are overlapped.

35. The microwave sensing apparatus according to claim 34, wherein the light-emitting module is provided adjacent to the light sensing module.

36. The microwave sensing apparatus according to any one of claims 33-35, wherein the light-transmitting part comprises a light guide member with a first end surface and a second end surface provided on both ends of the light guide member; the first end surface is provided outwardly to form the indication region and the second end surface is provided inwardly and close to the light-emitting module; and/or the first end surface is provided outwardly to form the light sensing region and the second end surface is provided inwardly and close to the light sensing module.

37. The microwave sensing apparatus according to claim 36, wherein the indication region and the light sensing region are overlapped; the light-emitting module is provided adjacent to the light sensing module;
a first end surface of the light guide member is provided outwardly to form the indication region and the light sensing region, and a second end surface is provided inwardly and is close to the light-emitting module and the light sensing module; and
the area of the second end face is smaller than the area of the first end face, and the second end face corresponds to the light sensing module.

38. The microwave sensing apparatus according to claim 37, wherein the light guide member is successively provided with a first light guide part and a second light guide part along an inner and outer direction; the first light guide part is provided as a truncated cone; the first end surface is formed on a side surface of the first light guide part away from the second light guide part; a busbar of the first light guide part is provided as a concave arc line;
the second light guide part is provided in a cylindrical shape; the second end surface is formed on a side surface of the second light guide part away from the first light guide part; and the area of the second end surface is the same as the area of a side surface of the first light guide part close to the second light guide part.

39. The microwave sensing apparatus according to claim 33, wherein the trigger part is embodied as a trigger post which abuts against or is close to the detection switch and which can be triggered upon displacement in response to the first operating force.

40. The microwave sensing apparatus according to claim 33, wherein the first wall is provided with a mounting hole therethrough;
the light-transmitting part comprises a pressing portion and a bearing portion which are overlapped in the thickness direction thereof; the surface area of the pressing portion is smaller than the surface area of the bearing portion; the pressing portion is fitted in the mounting hole; and the bearing portion is provided inside the housing.

41. The microwave sensing apparatus according to claim 33, wherein the light-transmitting part is pivotally connected to the housing such that the light-transmitting part is rotatable relative to the housing about an axis extending in a third direction, the third direction being parallel to a horizontal direction of the light-transmitting part; and/or,
the light-transmitting part is provided with an elastic connection structure, and the elastic connection structure is connected to the housing.

42. The microwave sensing apparatus according to claim 41, wherein the light-transmitting part and the housing are provided with a rotating shaft and a pivot hole adapted therebetween, one of the rotating shaft and the pivot hole is provided in the light-transmitting part and the other of the rotating shaft and the pivot hole is provided in the housing

43. The microwave sensing apparatus according to claim 42, wherein the rotating shaft is provided on two sides of the light-transmitting part which are oppositely provided in the third direction; and the first wall is provided with two fixing seats spaced apart in the third direction, each of the fixing seats penetrating through the pivot hole, respectively.

44. The microwave sensing apparatus according to claim 43, wherein each of the fixing seats is respectively provided with two limiting bones protruding in a direction towards the other fixing seat, and the two limiting bones are respectively provided on two sides of the pivot hole which are oppositely provided in a fourth direction; and
the fourth direction and the third direction are provided perpendicular to each other in a horizontal plane.

45. The microwave sensing apparatus according to claim 42, wherein a mounting hole penetrates through the first wall; the mounting hole is tapered from an end surface thereof close to the housing interior to an end surface thereof away from the housing interior; and
at least a portion of the light-transmitting part is received in the mounting hole.

46. The microwave sensing apparatus according to claim 42, wherein the first wall is provided with a mounting hole therethrough;
the light-transmitting part comprises a pressing portion and a bearing portion which are overlapped in the thickness direction thereof; the surface area of the pressing portion is smaller than the surface area of the bearing portion; the pressing portion is fitted in the mounting hole; and the bearing portion is provided inside the housing;
the bearing portion has a first side surface connected to the pressing portion; the first side surface has a first bearing surface corresponding to an indication region and a light sensing region of the light-transmitting part, and a second bearing surface corresponding to the triggering part; the indication region corresponds to the light-emitting module; the light sensing region corresponds to the light sensing module;
the trigger part is movable between an initial position and a trigger position; and when the trigger part is in the initial position, there is a movable gap between the first bearing surface and the inner side surface of the first wall.

47. The microwave sensing apparatus according to claim 46, wherein the first bearing surface is provided closer to an interior of the housing than the second bearing surface when the trigger part is in the initial position, the second bearing surface abutting against the first wall.

48. The microwave sensing apparatus according to claim 46, wherein the rotating shaft and the pivot hole correspond to a junction of the first bearing surface and the second bearing surface or the rotating shaft and the pivot hole correspond to the first bearing surface.

49. The microwave sensing apparatus according to claim 41, wherein the light-transmitting part is provided with an elastic connection structure which comprises at least two elastic connection arms; the two elastic connection arms are provided on two sides of the light-transmitting part which are oppositely provided; and
the inner side surface of the first wall is provided with two heat-melting posts, and the two heat-melting posts are respectively heat-melted connected to the elastic connection arms corresponding thereto.

50. The microwave sensing apparatus according to claim 49, wherein each of the heat-melting posts is provided close to a central portion of the first wall; and/or
the elastic connection arm is provided in a curved line.

51. The microwave sensing apparatus according to any one of claims 1, 2 and 4-6, wherein the communication module is further adapted to enter a network configuration mode in response to a designated network configuration operation to send out a designated network configuration signal such that a networked device receiving the designated network configuration signal instructs the communication module to connect to the designated network in response to the designated network configuration signal, so that the microwave sensing apparatus establishes a communication connection with at least one electronic device having a display interface by the designated network in a state in which the communication module is connected to the designated network.

52. The microwave sensing apparatus according to claim 51, wherein the communication module is specifically adapted to determine that the communication module enters a network configuration mode in response to at least one trigger signal generated by the specified network configuration operation in an unconfigured network mode, or to determine that the communication module is reset to enter a network configuration mode in response to at least one trigger signal generated by the specified network configuration operation in a configured network mode;
in the network configuration mode, a network configuration message is generated and sent out, so that after receiving the network configuration message, the designated device instructs the microwave sensing apparatus to join the designated network to complete the network configuration; the designated device comprises an intelligent terminal device and/or a gateway device; wherein after completing the network configuration, the microwave sensing apparatus can communicate with the gateway device by the designated network, and further communicate with the electronic device connected to the designated network by the gateway.

53. The microwave sensing apparatus according to claim 52, wherein the communication module is further configured to control a light-emitting module connected to the communication module to emit a first prompt signal before sending the network configuration message.

54. The microwave sensing apparatus according to claim 53, wherein the communication module is also configured to control a light-emitting module connected to the communication module to emit a second prompt signal; at least one of the following is different in the first prompt signal and the second prompt signal:
flashing frequency; and
color.

55. The microwave sensing apparatus according to any one of claims 1, 2, and 4-6, wherein
the communication module is further configured to:
periodically send reminder messages at predetermined intervals, thereby enabling the electronic device to verify the online status of the microwave sensing apparatus upon receiving the reminder messages.

56. The microwave sensing apparatus according to claim 24, wherein the sensing module specifically comprises a radar module which forms an actual sensing region that can be covered by the detection wave by emitting the detection wave to the outside; and the target sensing region is contained in the actual sensing region.

57. The microwave sensing apparatus according to claim 56, wherein the communication module specifically comprises a Bluetooth module, which establishes a communication relationship with the radar module via a serial port, establishes a communication relationship with the light sensing module via IIC communication, and controls each indication lamp in the light-emitting module via an input/output port.

58. The microwave sensing apparatus according to claim 56, wherein a relative dielectric constant of a material of the housing is less than or equal to 3.0.

59. The microwave sensing apparatus according to claim 58, wherein the housing is made of ABS plastic.

60. The microwave sensing apparatus according to claim 56, wherein a wavelength of the probe wave of the radar module in the air is set to be λ₁; the housing has a second wall; the sensing module corresponds to the second wall; and the second wall is any one wall of the housing;
wherein the distance from the radar module to the second wall is set as H, and H ≥ n × 0.5λ₁, n being a positive integer.

61. The microwave sensing apparatus according to claim 56, wherein the housing has a second wall; the housing has a second wall; the sensing module corresponds to the second wall; the second wall is any one wall of the housing; and
the wavelength of the detection wave of the radar module in the housing is set to λ₂, and a thickness of a portion of the second wall corresponding to a sensing region of the radar module is set to D, and D < λ₂.

62. The microwave sensing apparatus according to claim 61, wherein 0.1 × λ₂ ≤ D ≤ 0.7 × λ₂.

63. The microwave sensing apparatus according to claim 56, wherein the radar module comprises a dielectric board, a radar chip, a transmitting antenna, and a receiving antenna; the radar chip, the transmitting antenna, and the receiving antenna are mounted on the signal radiation surface of the dielectric board; the radar chip is communicatively connected to the communication module; and the transmitting antenna is electrically connected to the radar chip via a first feed line, and the receiving antenna is electrically connected to the radar chip via a second feed line.

64. The microwave sensing apparatus according to claim 63, wherein the transmitting antenna and the receiving antenna are provided on two sides of the radar chip.

65. The microwave sensing apparatus according to claim 64, wherein a distance of the transmitting antenna from the radar chip is less than a distance of the receiving antenna from the radar chip.

66. The microwave sensing apparatus according to claim 65, wherein a length of the first feed line is less than a length of the second feed line.

67. The microwave sensing apparatus according to claim 66, wherein the waveguide wavelength of the first feed line is less than the waveguide wavelength of the second feed line.

68. The microwave sensing apparatus according to claim 63, wherein the transmitting antenna is connected to the first feed line by a mode of embedded feeding; and
the receiving antenna is connected to the second feed line by the mode of embedded feeding.

69. The microwave sensing apparatus according to claim 68, wherein the transmitting antenna and the receiving antenna are each a rectangular microstrip patch antenna.

70. The microwave sensing apparatus according to claim 69, wherein an area of the transmitting antenna is greater than an area of the receiving antenna.

71. The microwave sensing apparatus according to claim 63, wherein the radar module can sense at an angle in the range of 0° to 120°; and/or,
the sensible distance of the radar module is 0.75 m - 6.0 m.

72. The microwave sensing apparatus according to claim 24, wherein the microwave sensing apparatus further comprises a mounting bracket connected to the housing for fixedly mounting the housing to a mounting surface.

73. The microwave sensing apparatus according to claim 72, wherein the mounting bracket is connected to the housing and is configured to move the housing by an angle in at least one degree of freedom to change an actual sensing region of the sensing module.

74. The microwave sensing apparatus according to claim 73, wherein the mounting bracket is configured to be angularly displaced in at least two degrees of freedom and move the housing to displace the actual sensing region of the sensing module.

75. A microwave sensing method applied to a microwave sensing apparatus, wherein the microwave sensing apparatus is adapted to establish a communication connection relationship with an electronic device having a display interface by a designated network in a state in which the microwave sensing apparatus is communicatively connected to the designated network; the microwave induction method comprises:
receiving and executing a selected instruction to change a sensing parameter; wherein the selected instruction is generated by the electronic device based on different selected operations performed on at least one representation associated with the sensing parameter displayed on the display interface thereof;
selecting at least one sub-sensing region based on the sensing parameters; wherein the sub-sensing region is associated with a target sensing region, enabling the target sensing region to be flexibly formed based on different selected operations received by the electronic device; and
forming sensing results by detecting a moving human body within the target sensing region.

76. The microwave sensing method according to claim 75, wherein the sensing parameter comprises a maximum sensing distance value for defining a maximum sensing distance of a sub-sensing region; the selecting at least one sub-sensing region based on the sensing parameters specifically comprises: changing the maximum sensing distance value based on a selected instruction, such that a maximum sensing distance of the target sensing region comprising the sub-sensing region can be flexibly set.

77. The microwave sensing method according to claim 75 or claim 76, wherein the sensing parameter comprises a minimum sensing distance value for defining a minimum sensing distance of a sub-sensing region; the selecting at least one sub-sensing region based on the sensing parameters specifically comprises:
changing the minimum sensing distance value based on a selected instruction, such that a minimum sensing distance of the target sensing region comprising the sub-sensing region can be flexibly set.

78. The microwave sensing method according to claim 75, wherein the sensing parameters comprise at least one segment range starting from a first distance value and ending at a second distance value, for instructing the sensing module to divide a sub-sensing region having the first distance value as a minimum sensing distance value and the second distance value as a maximum sensing distance value; where the first distance value is less than the second distance value and greater than zero; and the selecting at least one sub-sensing region based on the sensing parameters specifically comprises: changing by the sensing module the first distance value and/or the second distance value based on a selected instruction, thereby varying a minimum sensing distance and/or maximum sensing distance of the target sensing region comprising the sub-sensing region.

79. The microwave sensing method according to claim 75, wherein the sensing parameters comprise a plurality of sets of designated segment ranges, each segment range used to divide a sub-sensing region with the starting point of the segment range as the minimum sensing distance value and the ending point as the maximum sensing distance value; and the selecting at least one sub-sensing region based on the sensing parameters specifically comprises:
selecting one or more sets of sub-sensing regions corresponding to the segment ranges pointed to by the selected instruction, enabling the target sensing region to be precisely set based on the selected different sub-sensing regions.

80. The microwave sensing method according to claim 79, wherein the plurality of sets of designated segment ranges can form a complete range, with the plurality of sets of segment ranges not completely overlapping; and the selecting at least one sub-sensing region based on the sensing parameters specifically comprises selecting a plurality of non-overlapping segment ranges based on a selected instruction, enabling the target sensing region to be discontinuously combined by a plurality of discontinuous sub-sensing regions.

81. The microwave sensing method according to any one of claims 75, 76, and 78-80, wherein after obtaining the sensing result, the microwave sensing method further comprises:
sending a first result out, in a case that the sensing result within a specified time is the first result, to enable the electronic device to form a representation characterizing the first result on the display interface thereof in response to the first result; wherein the specified time is set by the electronic device according to a setting operation received by the display interface thereof; and the first result characterizes that no moving human body is detected within the target sensing region.

82. The microwave sensing method according to claim 81, wherein when the sensing result is a first result, the microwave sensing method further comprises:
calculating a duration time of a first result to form a fourth result sent out, such that the electronic device can form a representation characterizing the fourth result on the display interface thereof in response to the fourth result.

83. The microwave sensing method according to claim 81, wherein the microwave sensing method further comprises executing a command from an application to change the specified time.

84. The microwave sensing method according to any one of claims 75, 76, and 78-80, wherein after obtaining the sensing result, the microwave sensing method further comprises:
immediately sending a second result out when the sensing result is a second result, to enable the electronic device to form a representation characterizing the second result on the display interface thereof in response to the second result, wherein the second result is indicative of the detection of the moving human body within the target sensing region.

85. The microwave sensing method according to claim 84, wherein when the sensing result is a second result, the microwave sensing method further comprises:
calculating a duration time of a second result to form a sixth result sent out, such that the electronic device can form a representation characterizing the sixth result on the display interface thereof in response to the sixth result.

86. The microwave sensing method according to claim 85, wherein when the sensing result is a second result, the microwave sensing method further comprises, when the sensing result is the second result, emitting an indication signal of a specified pattern.

87. The microwave sensing method according to claim 86, wherein the indication signal of the specified pattern comprises flashing a light signal of a specified color at a certain periodic frequency.

88. The microwave sensing method according to claim 85, after obtaining the second result, the microwave sensing method further comprises periodically sending a third result of the plurality of sensing results out, to enable the electronic device to form a representation characterizing the third result on the display interface thereof in response to the third result; wherein the third result characterizes the distance between the moving human body within the target sensing region and the microwave sensing apparatus.

89. The microwave sensing method according to claim 88, wherein the obtaining a third result specifically comprises:
selecting a position parameter of a moving human body in the target sensing region, and forming a third result among the plurality of sensing results after processing the detected position parameter.

90. The microwave sensing method according to claim 89, wherein after the obtaining a third result, the microwave sensing method further comprises:
judging the movement direction of the moving human body in the target sensing region based on the change trend of the third result within a specified time period; wherein the movement direction comprises moving away and closer.

91. The microwave sensing method according to claim 90, wherein the microwave sensing method further comprises:
setting a specified boundary, and determining whether the moving human body crosses the specified boundary according to the third result.

92. The microwave sensing method according to claim 91, wherein after the obtaining the sensing result, the microwave sensing method further comprises:
sending a fifth result out when the sensing result is the fifth result so as to enable the electronic device to form a representation characterizing the fifth result on the display interface thereof in response to the fifth result; wherein the fifth result characterizes a moving human body within the target sensing region passing through a specified boundary within the target sensing region in a manner of moving closer and away.

93. The microwave sensing method according to claim 91, wherein the microwave sensing method further comprises executing a command from an application to change the specified boundary.

94. The microwave sensing method according to any one of claims 75, 76, and 78-80, wherein after obtaining the sensing result, the microwave sensing method further comprises:
reporting the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; wherein the control relationship defines a mapping relationship between at least one of a plurality of sensing results and at least one control result; and the control result is an executable function of one controlled device connected to the designated network.

95. The microwave sensing method according to claim 94, wherein the control results further comprise changing an indication lamp signal of the microwave sensing apparatus.

96. The microwave sensing method according to any one of claims 75, 76, and 78-80, wherein after obtaining the sensing result, the microwave sensing method further comprises:
controlling the power supply of an external electrical device based on the sensing results according to preset control logic.

97. The microwave sensing method according to claim 96, the controlling the power supply of an external electrical device based on the sensing results according to preset control logic specifically comprises:
controlling the power supply of the electrical device by turning on or off a relay connected to the power supply circuit of the external electrical device.

98. The microwave sensing method according to any one of claims 75, 76, 78-80, wherein the microwave sensing method further comprises:
detecting illumination intensity within the target sensing region.

99. The microwave sensing method according to claim 98, wherein, after obtaining the illumination intensity, the microwave sensing method further comprises:
uploading the illumination intensity data to enable the electronic device to form a representation associated with the illumination intensity data on the display interface thereof in response to receiving the illumination intensity data.

100. The microwave sensing method according to claim 99, wherein the uploading the illumination intensity data specifically comprises:
uploading acquired illumination intensity data at predetermined intervals, or uploading the acquired illumination intensity data when the change between two consecutive acquisitions exceeds a specified threshold, enabling the electronic device to respond to the illumination intensity data and form a representation associated with the illumination intensity data on the display interface thereof.

101. The microwave sensing method according to claim 98, wherein, after obtaining the illumination intensity, the microwave sensing method further comprises:
reporting the illumination intensity via the designated network when connected to it, enabling a gateway device and/or cloud server connected to the designated network to receive the illumination intensity data and execute a defined control result according to a target control relationship matching the illumination intensity among at least one preset control relationship, wherein the control relationship defines a mapping relationship between illumination intensity of at least one specified condition and at least one control result; and the control result is an executable function of a controlled device connected to the designated network.

102. The microwave sensing method according to claim 101, wherein when obtaining the illumination intensity, the microwave sensing method further comprises turning off the indication lamp.

103. The microwave sensing method according to claim 102, wherein the control result further comprises changing a signal emitted by the indication lamp.

104. The microwave sensing method according to claim 98, wherein, after obtaining the illumination intensity, the microwave sensing method further comprises:
controlling the power supply of an external electrical device based on the illumination intensity according to preset control logic.

105. The microwave sensing method according to claim 104, wherein the controlling the power supply of an external electrical device based on the illumination intensity according to preset control logic specifically comprises:
controlling the power supply of the electrical device by turning on or off a relay connected to the power supply circuit of the external electrical device.

106. The microwave sensing method according to any one of claims 99-105, wherein the obtaining the illumination intensity specifically comprises:
obtaining the illumination intensity by processing illumination data acquired by a visible light photoelectric probe and illumination data acquired by an infrared light photoelectric probe with a preset algorithm.

107. A microwave sensing apparatus, comprising:
a sensing module adapted to receive and execute a selected instruction to change a sensing parameter; wherein the sensing parameter is configured to select at least one sub-sensing region; and
a communication module adapted to generate the selected instruction in response to at least one trigger signal generated for at least one selected operation of an electronic device in a state of being communicatively connected to the electronic device, wherein the communication module is directly or indirectly electrically connected to the sensing module to send the selected instruction to the sensing module; wherein the sub-sensing region is associated with a target sensing region, so that the target sensing region can be flexibly formed according to different selected operations received by the electronic device, and a moving object in the target sensing region is detectable by the sensing module so as to form a sensing result.

108. The microwave sensing apparatus according to claim 107, wherein the sensing parameters comprise a maximum sensing distance value to define a maximum sensing distance of a sub-sensing region; the sensing module is further configured to change the maximum sensing distance value based on a selected instruction, so that the maximum sensing distance of a target sensing region comprising the sub-sensing region can be flexibly set.

109. The microwave sensing apparatus according to claim 107 or claim 108, wherein the sensing parameter comprises a minimum sensing distance value to define the minimum sensing distance of a sub-sensing region; and the sensing module is further configured to change the minimum sensing distance value based on a selected instruction, so that the minimum sensing distance of a target sensing region comprising the sub-sensing region can be flexibly set.

110. The microwave sensing apparatus according to claim 107, wherein the sensing parameters comprise at least one segment range starting from a first distance value and ending at a second distance value, for instructing the sensing module to divide a sub-sensing region having the first distance value as a minimum sensing distance value and the second distance value as a maximum sensing distance value; wherein the first distance value is less than the second distance value and greater than zero; the communication module is further configured to enable the sensing module to vary the first distance value and/or the second distance value based on a selected instruction, thereby changing a minimum sensing distance and/or a maximum sensing distance of a target sensing region which comprises the sub-sensing region.

111. The microwave sensing apparatus according to claim 107, wherein the sensing parameters comprise a plurality of sets of designated segment ranges, wherein each of the segment ranges is configured to instruct the sensing module to divide a sub-sensing region having a minimum sensing distance value at a starting point of the segment range and a maximum sensing distance value at an ending point of the segment range; the communication module is further configured to enable the sensing module to select, based on a selected instruction, one or more sets of sub-sensing regions corresponding to the segment range to which the selected instruction is directed, so that the target sensing region can be precisely set according to the different sub-sensing regions selected.

112. The microwave sensing apparatus according to claim 111, wherein a plurality of specified combinations of segment ranges can form a complete range, the plurality of segment ranges being mutually non-completely overlapping, and the sensing module can select a plurality of non-overlapping segment ranges according to a selected instruction to enable the target.

113. The microwave sensing apparatus according to any one of claims 107, 108, and 110-112, wherein the communication module is adapted to establish a communication connection with an electronic device having a display interface by a designated network in a state of being communicatively connected to the designated network, thereby acquiring a selected instruction corresponding to the selected operation according to at least one different selected operation associated with a representation of the sensing parameter with respect to a display interface of the electronic device.

114. The microwave sensing apparatus according to claim 113, wherein the communication module is further adapted to, in a state of being communicatively connected to a designated network, be communicatively connected to a cloud server by the designated network, so as to be able to generate a corresponding selected instruction according to a control message issued by the cloud server; and the control messages are generated and uploaded by the electronic device based on different selected operations for which the display interface has at least one representation associated with the sensing parameter.

115. The microwave sensing apparatus according to claim 113, wherein the communication module is further configured to send a first result out, in a case that the sensing result within a specified time is the first result, to enable the electronic device to form a representation characterizing the first result on the display interface thereof in response to the first result; the specified time is set by the electronic device according to a setting operation received by the display interface thereof; the first result characterizes that no moving object is detected within the target sensing region.

116. The microwave sensing apparatus according to claim 115, wherein the communication module is further configured and adapted to calculate a duration time of a first result to form a fourth result sent out when the sensing result is a first result, such that the electronic device can form a representation characterizing the fourth result on the display interface thereof in response to the fourth result.

117. The microwave sensing apparatus according to claim 115 or 116, wherein the communication module is further configured to execute a command from an application to change the specified time.

118. The microwave sensing apparatus according to claim 113, wherein the communication module is further configured to immediately send a second result out when the sensing result is the second result, to enable the electronic device to form a representation characterizing the second result on the display interface thereof in response to the second result; and the second result characterizes that the moving object is detected within the target sensing region.

119. The microwave sensing apparatus according to claim 118, wherein the communication module is further configured and adapted to calculate the duration of the second result when the sensing result is the second result to form a sixth result which is sent out to enable the electronic device to form a representation characterizing the sixth result on the display interface thereof in response to the sixth result.

120. The microwave sensing apparatus according to claim 118 or claim 119, wherein the microwave sensing apparatus further comprises a light-emitting module electrically connected to the communication module, the communication module being further configured to control the light-emitting module to emit an indication signal of a specified pattern when the sensing result is a second result.

121. The microwave sensing apparatus according to claim 120, wherein the indication signal of the specified pattern comprises flashing a light signal of a specified color at a certain periodic frequency.

122. The microwave sensing apparatus according to claim 118, wherein the communication module is further configured and adapted to periodically send out a third result of the plurality of sensing results when the sensing result is the second result, such that the electronic device can form a representation characterizing the third result on the display interface thereof in response to the third result; and the third result characterizes the distance between the moving object within the target sensing region and the sensing module.

123. The microwave sensing apparatus according to claim 122, wherein the sensing module is further configured to detect position parameters of the moving object within the target sensing region, and the communication module acquires the position parameters and processes them to form the third result of the plurality of sensing results.

124. The microwave sensing apparatus according to claim 123, wherein the communication module is further configured to judge the movement direction of the moving object within the target sensing region based on the trend of change in the third result over a specified period; and the movement direction comprises both moving away and closer.

125. The microwave sensing apparatus according to claim 124, wherein the communication module is further configured to set a specified boundary and determine whether the moving object crosses this specified boundary based on the third result.

126. The microwave sensing apparatus according to claim 125, wherein the communication module is further configured to send a fifth result out when the sensing result is the fifth result, so as to enable the electronic device to form a representation characterizing the fifth result on the display interface thereof in response to the fifth result; the fifth result characterizes the moving object within the target sensing region passing through a specified boundary within the target sensing region in a manner of moving closer and away.

127. The microwave sensing apparatus according to claim 125, wherein the communication module is further configured to execute a command from an application to change the specified boundary.

128. The microwave sensing apparatus according to any one of claims 115, 116, 118, 119, and 121-127, wherein the communication module is further configured to report the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; the control relationship defines a mapping relationship between at least one of a plurality of sensing results and at least one control result; and the control result is an executable function of one controlled device connected to the designated network.

129. The microwave sensing apparatus according to claim 128, wherein the control results further comprise changing an indication lamp signal of the microwave sensing apparatus.

130. The microwave sensing apparatus according to any one of claims 115, 116, 118, 119, and 121-127, wherein the microwave sensing apparatus further comprises at least one switch module for switching on/off a power supply circuit of an external electrical device; the microwave sensing apparatus is electrically connected to the communication module to be switched on or off under the control of the communication module; the communication module is further configured to control the switch module to switch on or off based on the sensing result according to a preset control logic, thereby controlling the power supply of the electrical device.

131. The microwave sensing apparatus according to claim 130, wherein the switch module comprises a relay electrically connected to the power supply circuit of an external electrical device to control the power supply of the electrical device to be turned on or off under the control of the communication module.

132. The microwave sensing apparatus according to claim 113, wherein the microwave sensing apparatus further comprises:
a housing having a first wall, wherein a detection switch, the sensing module and the communication module are provided inside the housing;
an optical transceiver provided on the first wall, so as to allow the microwave sensing apparatus to emit light in a first direction by the optical transceiver and to receive light incident in a second direction; the optical transceiver is configured to match the detection switch, so as to trigger the detection switch when displaced in response to a first operating force;
a light sensing module, which corresponds to the optical transceiver, electrically connected to the communication module, and configured to receive light in the second direction to perform illumination intensity detection; and
a light-emitting module corresponding to the optical transceiver and electrically connected to the communication module for emitting light in the first direction under the control of the communication module, so as to form an indication signal for indicating a working state of the microwave sensing apparatus.

133. The microwave sensing apparatus according to claim 132, wherein the communication module is further configured to periodically acquire illumination intensity data via the light sensing module and upload it, enabling the electronic device to respond to the illumination intensity data and form a representation associated with the illumination intensity data on the display interface thereof.

134. The microwave sensing apparatus according to claim 132, wherein the communication module is further configured to upload acquired illumination intensity data at predetermined intervals, or upload the acquired illumination intensity data when the change between two consecutive acquisitions exceeds a specified threshold, enabling the electronic device to respond to the illumination intensity data and form a representation associated with the illumination intensity data on the display interface thereof.

135. The microwave sensing apparatus according to claim 132, wherein the communication module is further configured to report the illumination intensity via the designated network when connected to it, enabling a gateway device and/or cloud server connected to the designated network to receive the illumination intensity data and execute a defined control result according to a target control relationship matching the illumination intensity among at least one preset control relationship; the control relationship defines a mapping relationship between illumination intensity of at least one specified condition and at least one control result; and the control result is an executable function of a controlled device connected to the designated network.

136. The microwave sensing apparatus according to claim 132, wherein the communication module is further adapted to turn off the indication lamp in the light-emitting module when acquiring the illumination intensity data via the light sensing module.

137. The microwave sensing apparatus according to claim 136, wherein the light-emitting module comprises at least one indication lamp, the control result further comprising changing a signal from the indication lamp.

138. The microwave sensing apparatus according to claim 132, the microwave sensing apparatus further comprises at least one switch module for switching on/off a power supply circuit of an external electrical device; the microwave sensing apparatus is electrically connected to the communication module to be switched on or off under the control of the communication module; the communication module is further configured to control the switch module to switch on or off based on the illumination intensity according to a preset control logic, thereby controlling the power supply of the electrical device.

139. The microwave sensing apparatus according to claim 138, wherein the switch module comprises a relay electrically connected to the power supply circuit of an external electrical device to control the power supply of the electrical device to be turned on or off under the control of the communication module.

140. The microwave sensing apparatus according to any one of claims 133-139, wherein the light sensing module comprises a visible light photoelectric probe and an infrared light photoelectric probe; and the light sensing module is configured to obtain the illumination intensity by processing the illumination data of the visible light photoelectric probe and the illumination data acquired by the infrared light photoelectric probe with a preset algorithm.

141. The microwave sensing apparatus according to claim 132, wherein the optical transceiver comprises:
a light-transmitting part comprising an indication region and a light sensing region, wherein the indication region corresponds to the light-emitting module so that light in a first direction emitted by the light-emitting module can be emitted out of the housing by the light-transmitting part; the light sensing region corresponds to the light sensing module, so that light in a second direction outside the housing can be incident into the housing by the light-transmitting part and received by the light sensing module; and
a trigger part provided at the light-transmitting part, displaced relative to the first wall in response to a first operating force and provided relative to the detection switch so as to trigger the detection switch in response to the displacement.

142. The microwave sensing apparatus according to claim 141, wherein the indication region and the light sensing region are overlapped.

143. The microwave sensing apparatus according to claim 142, wherein the light-emitting module is provided adjacent to the light sensing module.

144. The microwave sensing apparatus according to any one of claims 141-143, wherein the light-transmitting part comprises a light guide member with a first end surface and a second end surface provided on both ends of the light guide member; the first end surface is provided outwardly to form the indication region and the second end surface is provided inwardly and close to the light-emitting module; and/or the first end surface is provided outwardly to form the light sensing region and the second end surface is provided inwardly and close to the light sensing module.

145. The microwave sensing apparatus according to claim 144, wherein the indication region and the light sensing region are overlapped; the light-emitting module is provided adjacent to the light sensing module;
a first end surface of the light guide member is provided outwardly to form the indication region and the light sensing region, and a second end surface is provided inwardly and is close to the light-emitting module and the light sensing module; and
the area of the second end face is smaller than the area of the first end face, and the second end face corresponds to the light sensing module.

146. The microwave sensing apparatus according to claim 145, wherein the light guide member is successively provided with a first light guide part and a second light guide part along an inner and outer direction; the first light guide part is provided as a truncated cone; the first end surface is formed on a side surface of the first light guide part away from the second light guide part; a busbar of the first light guide part is provided as a concave arc line;
the second light guide part is provided in a cylindrical shape; the second end surface is formed on a side surface of the second light guide part away from the first light guide part; and the area of the second end surface is the same as the area of a side surface of the first light guide part close to the second light guide part.

147. The microwave sensing apparatus according to claim 141, wherein the trigger part is embodied as a trigger post which abuts against or is close to the detection switch and which can be triggered upon displacement in response to the first operating force.

148. The microwave sensing apparatus according to claim 141, wherein the first wall is provided with a mounting hole therethrough;
the light-transmitting part comprises a pressing portion and a bearing portion which are overlapped in the thickness direction thereof; the surface area of the pressing portion is smaller than the surface area of the bearing portion; the pressing portion is fitted in the mounting hole; and the bearing portion is provided inside the housing.

149. The microwave sensing apparatus according to claim 141, wherein the light-transmitting part is pivotally connected to the housing such that the light-transmitting part is rotatable relative to the housing about an axis extending in a third direction, the third direction being parallel to a horizontal direction of the light-transmitting part; and/or,
the light-transmitting part is provided with an elastic connection structure, and the elastic connection structure is connected to the housing.

150. The microwave sensing apparatus according to claim 149, wherein the light-transmitting part and the housing are provided with a rotating shaft and a pivot hole adapted therebetween, one of the rotating shaft and the pivot hole is provided in the light-transmitting part and the other of the rotating shaft and the pivot hole is provided in the housing

151. The microwave sensing apparatus according to claim 150, wherein the rotating shaft is provided on two sides of the light-transmitting part which are oppositely provided in the third direction; and the first wall is provided with two fixing seats spaced apart in the third direction, each of the fixing seats penetrating through the pivot hole, respectively.

152. The microwave sensing apparatus according to claim 151, wherein each of the fixing seats is respectively provided with two limiting bones protruding in a direction towards the other fixing seat, and the two limiting bones are respectively provided on two sides of the pivot hole which are oppositely provided in a fourth direction; and
the fourth direction and the third direction are provided perpendicular to each other in a horizontal plane.

153. The microwave sensing apparatus according to claim 150, wherein a mounting hole penetrates through the first wall; the mounting hole is tapered from an end surface thereof close to the housing interior to an end surface thereof away from the housing interior; and
at least a portion of the light-transmitting part is received in the mounting hole.

154. The microwave sensing apparatus according to claim 150, wherein the first wall is provided with a mounting hole therethrough;
the light-transmitting part comprises a pressing portion and a bearing portion which are overlapped in the thickness direction thereof; the surface area of the pressing portion is smaller than the surface area of the bearing portion; the pressing portion is fitted in the mounting hole; and the bearing portion is provided inside the housing;
the bearing portion has a first side surface connected to the pressing portion; the first side surface has a first bearing surface corresponding to an indication region and a light sensing region of the light-transmitting part, and a second bearing surface corresponding to the triggering part; the indication region corresponds to the light-emitting module; the light sensing region corresponds to the light sensing module;
the trigger part is movable between an initial position and a trigger position; and when the trigger part is in the initial position, there is a movable gap between the first bearing surface and the inner side surface of the first wall.

155. The microwave sensing apparatus according to claim 154, wherein the first bearing surface is provided closer to an interior of the housing than the second bearing surface when the trigger part is in the initial position, the second bearing surface abutting against the first wall.

156. The microwave sensing apparatus according to claim 154, wherein the rotating shaft and the pivot hole correspond to a junction of the first bearing surface and the second bearing surface or the rotating shaft and the pivot hole correspond to the first bearing surface.

157. The microwave sensing apparatus according to claim 149, wherein the light-transmitting part is provided with an elastic connection structure which comprises at least two elastic connection arms; the two elastic connection arms are provided on two sides of the light-transmitting part which are oppositely provided; and
the inner side surface of the first wall is provided with two heat-melting posts, and the two heat-melting posts are respectively heat-melted connected to the elastic connection arms corresponding thereto.

158. The microwave sensing apparatus according to claim 157, wherein each of the heat-melting posts is provided close to a central portion of the first wall; and/or
the elastic connection arm is provided in a curved line.

159. The microwave sensing apparatus according to claim 141, wherein the material of the light-transmitting part is a transparent material.

160. The microwave sensing apparatus according to claim 159, wherein the optical transceiver further comprises a decorative member, which is provided on a side of the light-transmitting part away from an interior of the housing and comprises a shielding region and a light-transmitting region; wherein the shielding region corresponds to the trigger part, and the light-transmitting region corresponds to the light sensing region and the indication region.

161. The microwave sensing apparatus according to claim 160, wherein the first wall is provided with a mounting hole therethrough;
the light-transmitting part comprises a pressing portion and a bearing portion which are overlapped in the thickness direction thereof; the surface area of the pressing portion is smaller than the surface area of the bearing portion; the pressing portion is fitted in the mounting hole; the bearing portion is provided inside the housing; and
the decorative member corresponds to the pressing portion and is adapted to the mounting hole.

162. The microwave sensing apparatus according to claim 160, wherein the decorative member is an acrylic sheet, and the shielding region is formed by screen printing.

163. The microwave sensing apparatus according to claim 132, wherein the microwave sensing apparatus further comprises a PCB board; and the communication module, the detection switch, the sensing module, the light-emitting module and the light sensing module are provided on the PCB board.

164. The microwave sensing apparatus according to claim 163, wherein the PCB board is provided with an avoidance hole corresponding to the antenna of the communication module.

165. The microwave sensing apparatus according to claim 163, wherein the microwave sensing apparatus further comprises a power supply unit electrically connected to the PCB board for supplying power to the communication module, the detection switch, the sensing module, the light-emitting module and the light sensing module.

166. The microwave sensing apparatus according to claim 165, wherein the power supply unit comprises a power cord; one end of the power cord is electrically connected to a PCB board; and the other end of the power cord extends out of the housing by a first through hole formed in the housing and is electrically connected to an external power source by an adapter.

167. The microwave sensing apparatus according to claim 166, wherein an anti-drop post is provided inside the housing for winding part of the power cord.

168. The microwave sensing apparatus according to claim 165, wherein the power supply unit comprises a power board, which is electrically connected to the PCB board via PIN pins; the power board is provided with a wiring port, which is electrically connected to an external wire by a second through hole opened in the housing.

169. The microwave sensing apparatus according to claim 168, wherein the wiring port is configured to be electrically connected to an external power supply line; or
the wiring port is configured to be electrically connected with the external power supply line and a controlled device; or
the wiring port is configured to be electrically connected with the power line carrier communication gateway and the controlled device.

170. The microwave sensing apparatus according to claim 165, wherein the power supply unit comprises a USB module provided on the PCB board; and
the housing is provided with a USB socket corresponding to the USB module for a USB charging cable to be inserted into and electrically connected to the USB module.

171. The microwave sensing apparatus according to claim 163, wherein the housing is convexly provided with at least one limiting post corresponding to a side wall of the PCB plate; the PCB plate is provided with a limiting hole corresponding to the limiting post; and the limiting hole is adapted to the limiting post for insertion of the limiting post; and/or,
at least one first threaded post is protruded on a side wall of the housing corresponding to the PCB board; and the PCB plate is provided with a first screw adapted to correspond to the first threaded post, so that the PCB plate is threadedly connected to the housing via the first threaded post and the first screw.

172. The microwave sensing apparatus according to claim 171, wherein the microwave sensing apparatus further comprises a power supply unit which comprises a USB module provided on the PCB board; and the housing is provided with a USB socket corresponding to the USB module for inserting a USB charging cable into and being electrically connected with the USB module;
the housing is at least convexly provided with two limiting posts corresponding to a side wall of the PCB plate; two of the limiting posts correspond to two edge parts of the PCB plate which are provided opposite to each other; one of the two limiting posts is provided adjacent to the USB socket, and the other one is provided opposite to the USB socket; and the PCB plate is provided with a limiting hole corresponding to the limiting post, and the limiting hole is adapted to the limiting post for inserting the limiting post.

173. The microwave sensing apparatus according to claim 163, wherein the first wall and the PCB plate are each provided with a mounting mark; and/or,
the opposite end surfaces of the PCB board are partially recessed to form gripping grooves.

174. The microwave sensing apparatus according to claim 163, wherein the housing has a second wall; the sensing module corresponds to and parallel to the second wall; and
the second wall is any of the walls of the housing.

175. The microwave sensing apparatus according to claim 174, wherein one of the opposite ends of the sensing module is provided with a PIN pin electrically connected to the PCB board, and a support member is provided between the other end and the PCB board corresponding to the PIN pin, so that the sensing module is parallel to the second wall of the housing corresponding thereto.

176. The microwave sensing apparatus according to claim 175, wherein the support members are bonded to the sensing module and the PCB board, respectively.

177. The microwave sensing apparatus according to claim 163, wherein the sensing module is a radar module.

178. The microwave sensing apparatus according to claim 177, wherein a relative dielectric constant of a material of the housing is less than or equal to 3.0.

179. The microwave sensing apparatus according to claim 178, wherein the housing is made of ABS plastic.

180. The microwave sensing apparatus according to claim 177, wherein the housing has a second wall; the radar module corresponds to the second wall; the second wall being any wall of the housing; and the wavelength of the detection wave of the radar module in air is set as λ₁, the distance from the radar module to the second wall is set as H, and H ≥ n × 0.5λ₁, n being a positive integer.

181. The microwave sensing apparatus according to claim 177, wherein the housing has a second wall, the radar module corresponding to the second wall, the second wall being any wall of the housing; and
the wavelength of the detection wave of the radar module in the housing is set to λ₂ and a thickness of a portion of the second wall corresponding to a sensing region of the radar module is set to D, and D ≤ λ₂.

182. The microwave sensing apparatus according to claim 181, wherein 0.1 × λ₂ ≤ D ≤ 0.7 × λ₂.

183. The microwave sensing apparatus according to claim 177, wherein the radar module comprises a dielectric board, a radar chip, a transmitting antenna, and a receiving antenna; the radar chip, the transmitting antenna, and the receiving antenna are mounted on the signal radiation surface of the dielectric board; the radar chip is communicatively connected to the communication module; and the transmitting antenna is electrically connected to the radar chip via a first feed line, and the receiving antenna is electrically connected to the radar chip via a second feed line.

184. The microwave sensing apparatus according to claim 183, wherein the transmitting antenna and the receiving antenna are provided on two sides of the radar chip.

185. The microwave sensing apparatus according to claim 184, wherein a distance of the transmitting antenna from the radar chip is less than a distance of the receiving antenna from the radar chip.

186. The microwave sensing apparatus according to claim 185, wherein a length of the first feed line is less than a length of the second feed line.

187. The microwave sensing apparatus according to claim 186, wherein the waveguide wavelength of the first feed line is less than the waveguide wavelength of the second feed line.

188. The microwave sensing apparatus according to claim 183, wherein the transmitting antenna is connected to the first feed line by a mode of embedded feeding; and
the receiving antenna is connected to the second feed line by the mode of embedded feeding.

189. The microwave sensing apparatus according to claim 183, wherein the transmitting antenna and the receiving antenna are each a rectangular microstrip patch antenna.

190. The microwave sensing apparatus according to claim 189, wherein an area of the transmitting antenna is greater than an area of the receiving antenna.

191. The microwave sensing apparatus according to claim 183, wherein the radar module can sense at an angle in the range of 0° to 120°; and/or,
the sensible distance of the radar module is 0.75 m - 6.0 m.

192. The microwave sensing apparatus according to claim 132, wherein the microwave sensing apparatus further comprises a mounting bracket connected to the housing for fixedly mounting the housing to a mounting surface.

193. The microwave sensing apparatus according to claim 192, wherein the mounting bracket is connected to the housing and is configured to move the housing by an angle in at least one degree of freedom to change an actual sensing region of the sensing module.

194. The microwave sensing apparatus according to claim 193, wherein the mounting bracket is configured to be angularly displaced in at least two degrees of freedom and move the housing to displace the actual sensing region of the sensing module.

195. The microwave sensing apparatus according to claim 194, wherein the mounting bracket comprises:
a base configured to be fixedly mounted on the mounting surface;
a first movable member rotatably connected to the base; and
a second movable member rotatably connected to the first movable member and rotatably connected to the base by the first movable member, so that the second movable member can change angles in at least two degrees of freedom relative to the base;
wherein the second movable member is connected to the housing and is configured to support the housing, move the housing under a second operating force, and fixedly support the housing when the second operating force is removed.

196. The microwave sensing apparatus according to claim 195, wherein the first movable member and the second movable member are pivotally connected by a first rotation shaft extending in a direction parallel to the base, so that the second movable member is angularly displaceable relative to the base in a first degree of freedom; the first rotation shaft extends in a direction parallel to the base;
the first movable member has a first abutting surface, and the second movable member has a second abutting surface;
the mounting bracket has a first state and a second state; and in the first state, the first abutting surface and the second abutting surface at least partially abut or at least partially overlap; and in the second state, an included angle is formed between the first abutting surface and the second abutting surface.

197. The microwave sensing apparatus according to claim 196, wherein the first rotation shaft is located at an edge of the first movable member.

198. The microwave sensing apparatus according to claim 197, wherein a first connecting portion and a second connecting portion are provided between the first movable member and the second movable member; the first connecting portion is formed at an edge portion of one of the first movable member and the second movable member and is concavely formed with a mounting groove; the mounting groove has opposite side walls each penetratingly provided with a first rotation hole; the second connecting portion protrudes from the other of the first movable member and the second movable member, is adapted to the mounting groove, and is penetratingly provided with a second rotation hole corresponding to the first rotation hole; and the first rotation shaft is inserted through the first rotation hole and the second rotation hole.

199. The microwave sensing apparatus according to claim 198, wherein the peripheral portion of the hole side wall where the first rotation hole is formed on the first connecting portion is curved, enabling the second movable member to change angles relative to the base in the first degree of freedom within a range of 0° to 90°

200. The microwave sensing apparatus according to claim 199, wherein the first movable member or the second movable member provided with the second connecting portion is concavely provided with an avoidance portion corresponding to the first connecting portion to avoid the first connecting portion during rotation, enabling the second movable member to change angles relative to the base in the first degree of freedom within a range of 0° to 180°.

201. The microwave sensing apparatus according to claim 199, wherein a limiting member is provided between two ends of the second connecting portion and side walls of the mounting groove respectively corresponding thereto; and the limiting member provides a limiting force between the first connecting portion and the second connecting portion to fixedly support the housing after the second movable member moves the housing in response to the operating force.

202. The microwave sensing apparatus according to claim 198 or 201, wherein the first rotation shaft is a bolt which is fixedly inserted into the first connecting portion and the second connecting portion by a nut.

203. The microwave sensing apparatus according to claim 195, wherein the first movable member is sleeved or magnetically connected to the base and can rotate relative to the base about a second rotation shaft, the second rotation shaft extending in a direction perpendicular to the base.

204. The microwave sensing apparatus according to claim 203, wherein the first movable member can rotate relative to the base about the second rotation shaft by an angle in the range of from 0° to 360°.

205. The microwave sensing apparatus according to claim 203 or 204, wherein the first movable member comprises:
a bottom cover having an accommodation hole therethrough; and
a surface cover detachably provided on the bottom cover to form an accommodating cavity;
wherein the base is inserted into the bottom cover from the accommodating hole so as to be sleeved in the first movable member, and can rotate relative to the bottom cover about the second rotation shaft.

206. The microwave sensing apparatus according to claim 205, wherein at least one resistance rib protrudes from the end face of the base facing towards the first movable member; and when the surface cover is mounted on the bottom cover, the resistance rib abuts against the surface cover

207. The microwave sensing apparatus according to claim 205, wherein the bottom cover is threadingly connected to the surface cover; and/or
a silicone pad is provided on a side of the bottom cover away from the surface cover, and the silicone pad is provided with an avoidance through hole corresponding to the base.

208. The microwave sensing apparatus according to claim 205, wherein the housing has an opening; and
the second movable member covers the opening end.

209. The microwave sensing apparatus according to claim 208, wherein the microwave sensing apparatus further comprises a plurality of screws provided at spaced intervals along a circumference of the housing and sequentially penetrating the housing and the second movable member, respectively, to threadably connect the housing to the second movable member.

210. The microwave sensing apparatus according to claim 209, wherein a distance from each of the screws to an antenna of the communication module is selected to be L₁, L₁ ≥ 2.3 mm.

211. The microwave sensing apparatus according to claim 195, wherein the housing has a third wall, the third wall being a side wall connected to or opposite from the first wall; and
the second movable member is detachably connected to the third wall.

212. The microwave sensing apparatus according to claim 211, wherein the second movable member fits or at least partially overlaps with the third wall .

213. The microwave sensing apparatus according to claim 211, wherein the center of the second movable member correspondd to the center of the third wall.

214. The microwave sensing apparatus according to claim 211, wherein the area of the second movable member is smaller than that of the third wall, and part of the edge of the second movable member corresponds to the edge of the third wall.

215. The microwave sensing apparatus according to claim 211, wherein the second movable member is magnetically connected to the third wall.

216. The microwave sensing apparatus according to claim 195, wherein the base has a first magnetic member for magnetic attraction with a second magnetic member on the mounting surface,.

217. The microwave sensing apparatus according to claim 216, wherein
when the first movable member is in contact or overlapped with the second movable member, a distance from the first magnetic member to the antenna of the communication module is set to L₂, L₂≥ 3.6 mm.

218. The microwave sensing apparatus according to claim 195, wherein the side of the base 91 opposite to the housing has an adhesive member for bonding to the mounting surface.

219. The microwave sensing apparatus according to claim 193, wherein the mounting bracket is rotatably connected to the housing, so that the housing can be rotated in one degree of freedom relative to the mounting bracket by a third operating force.

220. The microwave sensing apparatus according to claim 219, wherein the mounting bracket comprises a movable sleeve mounted about an outer periphery of the housing and rotatably connected to the housing by a third rotation shaft, the movable sleeve having a movable gap between an inner side wall of the movable sleeve and the housing for rotation thereof.

221. The microwave sensing apparatus according to claim 220, wherein an angular range of rotation of the housing relative to the movable sleeve is set to 0° to 60°.

222. The microwave sensing apparatus according to claim 220, wherein the movable sleeve has at least two spring clips on its outer periphery which are arranged opposite to each other along the circumference of the movable sleeve; and the spring clips can be forced closer to or farther from the movable sleeve to engage with mounting holes on the mounting surface.

223. The microwave sensing apparatus according to claim 219, wherein the housing has a second wall; the sensing module is provided relative to the second wall;
the mounting bracket comprises a mounting box with an opening, fixed to the mounting surface; the housing is installed at the opening of the mounting box via a buckle and an engaging annular wall, with the second wall spaced from the bottom wall of the mounting box; one of the buckle and the engaging annular wall is provided on the housing, and the other is provided on the side wall of the mounting box; the buckle and the engaging annular wall engage with each other, and the buckle can slide along the engaging annular wall, allowing the housing to rotate relative to the mounting box.

224. The microwave sensing apparatus according to claim 113, wherein the communication module is further adapted to enter a network configuration mode in response to a designated network configuration operation to send out a designated network configuration signal such that a networked device receiving the designated network configuration signal instructs the communication module to connect to the designated network in response to the designated network configuration signal, so as to establish a communication connection with at least one electronic device having a display interface by the designated network in a state in which the communication module is connected to the designated network.

225. The microwave sensing apparatus according to claim 224, wherein the communication module is specifically adapted to determine that the communication module enters a network configuration mode in response to at least one trigger signal generated by the specified network configuration operation in an unconfigured network mode, or to determine that the communication module is reset to enter a network configuration mode in response to at least one trigger signal generated by the specified network configuration operation in a configured network mode;
in the network configuration mode, a network configuration message is generated and sent out, so that after receiving the network configuration message, the designated device instructs the microwave sensing apparatus to join the designated network to complete the network configuration; the designated device comprises an intelligent terminal device and/or a gateway device; wherein after completing the network configuration, the microwave sensing apparatus can communicate with the gateway device by the designated network, and further communicate with the electronic device connected to the designated network by the gateway.

226. The microwave sensing apparatus according to claim 225, wherein the communication module is further configured to control a light-emitting module connected to the communication module to emit a first prompt signal before sending the network configuration message.

227. The microwave sensing apparatus according to claim 226, wherein the communication module, when sending out a network configuration message, is specifically configured to send the network configuration message at a specified network configuration interval.

228. The microwave sensing apparatus according to claim 226, wherein the communication module is also configured to control a light-emitting module connected to the communication module to emit a second prompt signal; at least one of the following is different in the first prompt signal and the second prompt signal:
flashing frequency; and
color.

229. The microwave sensing apparatus according to claim 227, wherein the communication module is further configured to stop sending the network configuration message out and stop emitting the second prompt signal after successful network configuration.

230. The microwave sensing apparatus according to any one of claims 225-229, wherein
the communication module is further configured to:
when operating in the network configuration mode after completing network setup, periodically send reminder messages at predetermined intervals, thereby enabling the electronic device and the gateway to verify the online status of the microwave sensing apparatus upon receiving the reminder messages.

231. The microwave sensing apparatus according to any one of claims 107, 108 and 110-112, wherein the communication module is adapted to establish a communication connection relationship with the electronic device by means of peer-to-peer communication for generating selected instructions corresponding to the selected operations according to at least one different selected operation associated with a representation of the sensing parameter with respect to a display interface of the electronic device.

232. The microwave sensing apparatus according to any one of claims 107, 108 and 110-112, wherein the electronic device is integrated with the microwave sensing apparatus and the communication module is directly or indirectly electrically connected to the electronic device.

233. The microwave sensing apparatus according to claim 232, wherein the electronic device comprises a screen for displaying an interface, whereby the communication module can generate selected instructions corresponding to different selected operations associated with at least one representation of the sensing parameter on the display interface of the screen.

234. The microwave sensing apparatus according to claim 232, wherein the electronic device comprises at least one actuator integrated into the microwave sensing apparatus, the actuator being electrically connected to the communication module to enable the communication module to generate the selected instruction based on at least one trigger signal produced by the actuator in response to a selected operation.

235. The microwave sensing apparatus according to any one of claims 107, 108 and 110-112, wherein the communication module controls the power-on/power-off of the sensing module by a power management module and is further configured to perform a power-off restart on the sensing module via the power management module when a specified condition indicating an abnormal working state of the sensing module is triggered.

236. The microwave sensing apparatus according to claim 235, wherein the specified condition comprises not receiving a sensing result from the sensing module within a specified time, that is, when the communication module does not receive the sensing result sent by the sensing module within a specified time, the sensing module is powered off and powered on successively by the power management module and the sensing module is restarted.

237. The microwave sensing apparatus according to claim 236, wherein the power management module comprises a switching device connected between a power supply and the power terminal of the sensing module, with a control terminal linked to the communication module, enabling the communication module to control the switching device to turn the power supply circuit of the sensing module on or off.

238. The microwave sensing apparatus according to claim 235, wherein the sensing module communicates with the communication module via a serial port, and the communication module is further configured to pull the level of related pins low during power-off of the sensing module to ensure complete shutdown of the sensing module.

239. The microwave sensing apparatus according to claim 132, wherein the sensing module specifically comprises a radar module which forms an actual sensing region that can be covered by the detection wave by emitting the detection wave to the outside; and the target sensing region is contained in the actual sensing region.

240. The microwave sensing apparatus according to claim 239, wherein the communication module specifically comprises a Bluetooth module, wherein the Bluetooth module establishes a communication relationship with the radar module via a serial port, establishes a communication relationship with the light sensing module via IIC communication, controls each indication lamp in the light-emitting module to emit light via an input/output port, and establishes a communication connection with the electronic device by joining a designated network composed of a gateway.

241. A microwave sensing method applied to a microwave sensing apparatus, wherein the microwave sensing method comprises:
changing sensing parameters in response to at least one trigger signal produced by at least one selected operation performed on the electronic device in a state of being communicatively connected to the electronic device; wherein the sensing parameters are used to select at least one sub-sensing region; the sub-sensing region is associated with a target sensing region, enabling the target sensing region to be flexibly divided based on different selected operations received by the electronic device; and
forming sensing results by detecting a moving object within the target sensing region.

242. The microwave sensing method according to claim 241, wherein the sensing parameter comprises a maximum sensing distance value for defining a maximum sensing distance of a sub-sensing region;
the changing sensing parameters in response to at least one trigger signal produced by at least one selected operation performed on the electronic device in a state of being communicatively connected to the electronic device specifically comprises:
changing the maximum sensing distance value in response to at least one trigger signal generated by at least one selected operation performed on the electronic device in a state of being communicatively connected to the electronic device, such that a maximum sensing distance of the target sensing region comprising the sub-sensing region can be flexibly set.

243. The microwave sensing method according to claim 241 or 242, wherein the sensing parameter comprises a minimum sensing distance value for defining a minimum sensing distance for a sub-sensing region;
the changing sensing parameters in response to at least one trigger signal produced by at least one selected operation performed on the electronic device in a state of being communicatively connected to the electronic device specifically comprises:
changing the minimum sensing distance value in response to at least one trigger signal generated by at least one selected operation on an electronic device in a state of being communicatively connected to the electronic device, such that a minimum sensing distance of the target sensing region comprising the sub-sensing region can be flexibly set.

244. The microwave sensing method according to claim 241, wherein the sensing parameters comprise at least one segment range starting from a first distance value and ending at a second distance value, for instructing the sensing module to divide a sub-sensing region having the first distance value as a minimum sensing distance value and the second distance value as a maximum sensing distance value; wherein the first distance value is less than the second distance value and greater than zero;
the changing sensing parameters in response to at least one trigger signal produced by at least one selected operation performed on the electronic device in a state of being communicatively connected to the electronic device specifically comprises:
changing the first distance value and/or the second distance value in response to at least one trigger signal generated by at least one selected operation on an electronic device in a state of being communicatively connected to the electronic device, thereby varying a minimum sensing distance and/or maximum sensing distance of the target sensing region comprising the sub-sensing region.

245. The microwave sensing method according to claim 241, wherein the sensing parameters comprise a plurality of sets of designated segment ranges, wherein each of the segment ranges is configured to instruct the microwave sensing apparatus to divide a sub-sensing region having a minimum sensing distance value at a starting point of the segment range and a maximum sensing distance value at an ending point of the segment range;
the changing sensing parameters in response to at least one trigger signal produced by at least one selected operation performed on the electronic device in a state of being communicatively connected to the electronic device specifically comprises:
selecting one or more sets of sub-sensing regions corresponding to the segment ranges indicated by the selected instruction in response to at least one trigger signal generated by at least one selected operation on an electronic device in a state of being communicatively connected to the electronic device, thereby enabling precise setting of the target sensing region based on the selected sub-sensing regions.

246. The microwave sensing method according to claim 245, wherein the plurality of sets of designated segment ranges are combined to form a complete range, the sets of segment ranges being mutually non-completely overlapping; and the microwave sensing apparatus can select a plurality of non-overlapping segment ranges based on a selected operation, enabling the target sensing region to be discontinuously combined by a plurality of discontinuous sub-sensing regions.

247. The microwave sensing method according to any one of claims 241, 242, 244-246, wherein the changing sensing parameters in response to at least one trigger signal produced by at least one selected operation performed on the electronic device in a state of being communicatively connected to the electronic device specifically comprises:
a communication connection with an electronic device having a display interface is established by a designated network in a state of being communicatively connected to the designated network, thereby changing sensing parameters according to at least one different selected operation associated with a representation of the sensing parameter with respect to a display interface of the electronic device.

248. The microwave sensing method according to claim 247, wherein the microwave sensing method further comprises:
sending a first result out, in a case that the sensing result within a specified time is the first result, to enable the electronic device to form a representation characterizing the first result on the display interface thereof in response to the first result; wherein the specified time is set by the electronic device according to a setting operation received by the display interface thereof; and the first result characterizes that no moving object is detected within the target sensing region.

249. The microwave sensing method according to claim 248, wherein the microwave sensing method further comprises:
calculating a duration time of a first result to form a fourth result sent out when the sensing result lasts for a first result, such that the electronic device can form a representation characterizing the fourth result on the display interface thereof in response to the fourth result.

250. The microwave sensing method according to claim 248 or claim 249, wherein the microwave sensing method further comprises:
executing a command from an application program to change the specified time.

251. The microwave sensing method according to claim 247, wherein the microwave sensing method further comprises:
immediately sending a second result out when the sensing result is a second result, to enable the electronic device to form a representation characterizing the second result on the display interface thereof in response to the second result, wherein the second result is indicative of the detection of the moving object within the target sensing region.

252. The microwave sensing method according to claim 251, wherein the microwave sensing method further comprises:
calculating a duration time of a second result to form a sixth result to be sent out when the sensing result is a second result such that the electronic device can form, in response to the sixth result, a representation characterizing the sixth result via the display interface thereof.

253. The microwave sensing method according to claim 251 or 252, wherein the microwave sensing method further comprises, when the sensing result is the second result, controlling a light-emitting module to emit an indication signal of a specified pattern..

254. The microwave sensing method according to claim 253, wherein the indication signal of the specified pattern comprises flashing a light signal of a specified color at a certain periodic frequency.

255. The microwave sensing method according to claim 251, wherein the microwave sensing method further comprises:
periodically sending a third result of the plurality of sensing results out, to enable the electronic device to form a representation characterizing the third result on the display interface thereof in response to the third result; wherein the third result characterizes the distance between the moving object within the target sensing region and the sensing module.

256. The microwave sensing method according to claim 255, wherein the obtaining a third result specifically comprises:
detecting the position parameters of moving objects in the target sensing region to form the third result of a plurality of sensing results.

257. The microwave sensing method according to claim 256, wherein after detecting the position parameters of moving objects in the target sensing region to form the third result, the method further comprises:
judging the movement direction of moving objects in the target sensing region based on the change trend of the third result within a specified period, wherein the movement direction comprises moving closer and away.

258. The microwave sensing method according to claim 257, wherein the microwave sensing method further comprises:
setting a specified boundary and determining whether the moving object crosses the specified boundary based on the third result.

259. The microwave sensing method according to claim 258, wherein the microwave sensing method further comprises:
sending a fifth result out when the sensing result is the fifth result so as to enable the electronic device to form a representation characterizing the fifth result on the display interface thereof in response to the fifth result; wherein the fifth result characterizes a moving object within the target sensing region passing through a specified boundary within the target sensing region in a manner of moving closer and away.

260. The microwave sensing method according to claim 258, wherein the microwave sensing apparatus executes a command from an application to change the specified boundary.

261. The microwave sensing method according to any one of claims 248, 249, 251, 252, 254 and 260, wherein the microwave sensing method further comprises:
reporting the sensing result via the designated network in a state of being connected to the designated network, so that a gateway device and/or a cloud server connected to the designated network can receive the sensing result and control a defined control result to be executed according to a target control relationship matching the sensing result in at least one pre-set control relationship; wherein the control relationship defines a mapping relationship between at least one of a plurality of sensing results and at least one control result; and the control result is an executable function of one controlled device connected to the designated network.

262. The microwave sensing method according to claim 261, wherein the control results further comprise changing an indication lamp signal of the microwave sensing apparatus.

263. The microwave sensing method according to any one of claims 248, 249, 251, 252, 254 and 260, wherein after obtaining the sensing result, the microwave sensing method further comprises: controlling the power supply of an external electrical device based on the sensing results according to preset control logic.

264. The microwave sensing method according to claim 263, the controlling the power supply of an external electrical device based on the sensing results according to preset control logic specifically comprises:
controlling the power supply of the electrical device by turning on or off a relay connected to the power supply circuit of the external electrical device.

265. The microwave sensing method according to claim 247, wherein the microwave sensing method further comprises:
detecting illumination intensity by a light sensing module electrically connected to the communication module.

266. The microwave sensing method according to claim 265, wherein the microwave sensing method further comprises:
periodically acquiring illumination intensity data via the light sensing module and upload it, enabling the electronic device to respond to the illumination intensity data and form a representation associated with it on the display interface thereof.

267. The microwave sensing method according to claim 265, wherein the microwave sensing method further comprises:
uploading acquired illumination intensity data at predetermined intervals, or uploading the acquired illumination intensity data when the change between two consecutive acquisitions exceeds a specified threshold, enabling the electronic device to respond to the illumination intensity data and form a representation associated with the illumination intensity data on the display interface thereof.

268. The microwave sensing method according to claim 265, wherein the microwave sensing method further comprises:
reporting the illumination intensity via the designated network when connected to it, enabling a gateway device and/or cloud server connected to the designated network to receive the illumination intensity data and execute a defined control result according to a target control relationship matching the illumination intensity among at least one preset control relationship, wherein the control relationship defines a mapping relationship between illumination intensity of at least one specified condition and at least one control result; and the control result is an executable function of a controlled device connected to the designated network.

269. The microwave sensing method according to claim 268, wherein the microwave sensing method further comprises:
turning off the indication lamp when obtaining illumination intensity data by the light sensing module.

270. The microwave sensing method according to claim 269, wherein the controlling further comprises adjusting the signal emitted by the indication lamp of the microwave sensing apparatus.

271. The microwave sensing method according to claim 265, wherein, after obtaining the illumination intensity, the microwave sensing method further comprises:
controlling the power supply of an external electrical device based on the illumination intensity according to preset control logic.

272. The microwave sensing method according to claim 271, wherein the controlling the power supply of an external electrical device based on the illumination intensity according to preset control logic specifically comprises:
controlling the power supply of the electrical device by turning on or off a relay connected to the power supply circuit of the external electrical device.

273. The microwave sensing method according to any one of claims 265- 272, wherein the light sensing module comprises a visible light photoelectric probe and an infrared light photoelectric probe; and the light sensing module is configured to obtain the illumination intensity by processing the illumination data of the visible light photoelectric probe and the illumination data acquired by the infrared light photoelectric probe with a preset algorithm.

274. The microwave sensing method according to claim 273, wherein the establishing a communication connection with an electronic device having a display interface by the designated network in a state of being communicatively connected to the designated network comprises:
entering a network configuration mode in response to a specified network configuration operation and sending a designated network configuration signal out, enabling a networked device receiving the designated network configuration signal to instruct the microwave sensing apparatus to connect to the designated network in response to the designated network configuration signal, thereby establishing a communication connection with at least one electronic device having a display interface by the designated network when the microwave sensing apparatus is connected to the designated network.

275. The microwave sensing method according to claim 274, wherein the entering the network configuration mode in response to a specified network configuration operation specifically comprises:
determining that the microwave sensing apparatus enters the network configuration mode in response to at least one trigger signal brought by the specified network configuration operation in an unconfigured state; or determining that the microwave sensing apparatus is reset and enters the network configuration mode in response to at least one trigger signal brought by the specified network configuration operation in a configured state;
in the network configuration mode, a network configuration message is generated and sent out, so that after receiving the network configuration message, the designated device instructs the microwave sensing apparatus to join the designated network to complete the network configuration; the designated device comprises an intelligent terminal device and/or a gateway device; wherein after completing the network configuration, the microwave sensing apparatus can communicate with the gateway device by the designated network, and further communicate with the electronic device connected to the designated network by the gateway.

276. The microwave sensing method according to claim 275, wherein, when the microwave sensing apparatus transmits the network configuration message out, the microwave sensing method specifically comprises: controlling an indication lamp connected to the communication module to emit a first prompt signal before transmitting the network configuration message.

277. The microwave sensing method according to claim 276, wherein when the microwave sensing apparatus transmits the network configuration message out, the microwave sensing method specifically comprises sending the network configuration message at a specified network configuration interval.

278. The microwave sensing method according to claim 276, wherein, during the network configuration of the microwave sensing apparatus, the method further comprises: controlling an indication lamp to emit a second prompt signal; and at least one of the following is different in the first prompt signal and the second prompt signal:
flashing frequency; and
color.

279. The microwave sensing method according to claim 278, wherein the microwave sensing apparatus stops sending the network configuration message out and stops emitting the second prompt signal after successful network configuration.

280. The microwave sensing method according to any one of claims 274-279, wherein the microwave sensing method further comprises:
when operating in the network configuration mode after completing network setup, periodically send reminder messages at predetermined intervals, thereby enabling the electronic device and the gateway to verify the online status of the microwave sensing apparatus upon receiving the reminder messages.

281. An optical transceiver suitable for use with the microwave sensing apparatus according to claim 1 or claim 107, wherein the optical transceiver comprises:
a light-transmitting part configured to allow light to pass through, enabling light emitted by the microwave sensing apparatus in a first direction to pass from inside the microwave sensing apparatus to outside through the light-transmitting part, and light incident from outside the microwave sensing apparatus in a second direction to enter inside the microwave sensing apparatus through the light-transmitting part; and
a trigger part provided on the light-transmitting part and configured to trigger the microwave sensing apparatus in response to a first operating force.

282. The optical transceiver according to claim 281, wherein the light-transmitting part comprises an indication region for transmitting light in the first direction and a light sensing region for transmitting light in the second direction.

283. The optical transceiver according to claim 282, wherein the indication region and the light sensing region are overlapped.

284. The optical transceiver according to claim 282 or 283, wherein the light-transmitting part comprises a light guide member, and a first end surface and a second end surface provided at both ends of the light guide member; the first end surface faces towards the exterior of the microwave sensing apparatus to form the indication zone, while the second end surface faces towards the interior of the microwave sensing apparatus and is close to the light-emitting module of the microwave sensing apparatus; and/or the first end surface faces towards the exterior of the microwave sensing apparatus to form the light sensing zone, and the second end surface faces towards the interior of the microwave sensing apparatus and is close to the light sensing module of the microwave sensing apparatus.

285. The optical transceiver according to claim 284, wherein the indication region and the light sensing region are overlapped;
the first end surface faces towards the exterior of the microwave sensing apparatus to form the indication region and the light sensing region, and the second end surface faces towards the interior of the microwave sensing apparatus and is close to the light-emitting module and the light sensing module of the microwave sensing apparatus; and
the area of the first end surface is greater than the area of the second end surface, and the second end surface corresponds to the light-emitting module and the light-sensing module of the microwave sensing apparatus.

286. The optical transceiver according to claim 285, wherein the light guide member is successively provided with a first light guide part and a second light guide part along an inner and outer direction of the microwave sensing apparatus; the first light guide part is provided as a truncated cone; the first end surface is formed on a side surface of the first light guide part away from the second light guide part; a busbar of the first light guide part is provided as a concave arc line;
the second light guide part is provided in a cylindrical shape; the second end surface is formed on a side surface of the second light guide part away from the first light guide part; and the area of the second end surface is the same as the area of a side surface of the first light guide part close to the second light guide part.

287. The optical transceiver according to claim 281, wherein the trigger part is implemented as a trigger post for abutting against or approaching the detection switch inside the microwave sensing apparatus, acting on the detection switch in response to the first operating force to trigger the microwave sensing apparatus

288. The optical transceiver according to claim 281, wherein the light-transmitting part comprises a pressing portion and a bearing portion stacked along the thickness direction of the light-transmitting part; and the pressing portion has a smaller surface area than that of the bearing portion and is adapted to fit into the mounting hole on the microwave sensing apparatus, while the bearing portion is provided inside the microwave sensing apparatus.

289. The optical transceiver according to claim 281, wherein the light-transmitting part is pivotally connected to the microwave sensing apparatus, enabling the light-transmitting part to rotate relative to the microwave sensing apparatus about an axis extending along the third direction; the third direction is parallel to the horizontal direction of the light-transmitting part 21; and/or the light-transmitting part is provided with an elastic connection structure for thermal fusion connection with the microwave sensing apparatus.

290. The optical transceiver according to claim 289, wherein the light-transmitting part is provided with a rotating shaft for pivotally connecting with the pivot hole of the microwave sensing apparatus; or
the light-transmitting part is provided with a pivot hole for pivotally connecting with the rotating shaft of the microwave sensing apparatus.

291. The optical transceiver according to claim 290, wherein the light-transmitting part comprises a pressing portion and a bearing portion stacked along the thickness direction of the light-transmitting part; the pressing portion has a smaller surface area than that of the bearing portion and is configured to fit into the mounting hole on the microwave sensing apparatus, while the bearing portion is provided inside the microwave sensing apparatus;
the bearing portion has a first side surface connected to the pressing portion; the first side surface has a first bearing surface corresponding to an indication region and a light sensing region of the light-transmitting part, and a second bearing surface corresponding to the triggering part; the indication region is configured to transmit light in the first direction, and the light sensing region is configured to transmit light in the second direction;
the trigger part is movable between an initial position and a trigger position; and when the trigger part is in the initial position, there is a movable gap between the first bearing surface and the inner side surface of the microwave sensitive device.

292. The optical transceiver according to claim 291, wherein the first bearing surface is provided closer to the interior of the microwave sensitive device than the second bearing surface when the trigger part is in the initial position, the second bearing surface is configured to abut against an inner side wall of the microwave sensitive device.

293. The optical transceiver according to claim 291, wherein the rotating shaft or the pivot hole on the light-transmitting part corresponds to the connection between the first bearing surface and the second bearing surface, or the rotating shaft or the pivot hole on the light-transmitting part corresponds to the first bearing surface.

294. The optical transceiver according to claim 289, wherein the light-transmitting part is provided with an elastic connection structure which comprises at least two elastic connection arms; the two elastic connection arms are provided on two sides of the light-transmitting part which are oppositely provided for thermal fusion connection with the heat-melting post of the microwave sensing apparatus.

295. The optical transceiver according to claim 294, wherein the elastic connection arm is provided in a curved line.

296. The optical transceiver according to claim 281, wherein the material of the light-transmitting part is a transparent material.

297. The optical transceiver according to claim 296, wherein the light-transmitting part comprises an indication region for transmitting light in the first direction and a light sensing region for transmitting light in the second direction;
the optical transceiver further comprises a decorative member; the decorative member is provided on a side of the light-transmitting part away from the interior of the microwave sensing apparatus and comprises a shielding region and a light-transmitting region; and the shielding region corresponds to the trigger part, and the light-transmitting region corresponds to the indication region and the light sensing region.

298. The optical transceiver according to claim 297, wherein the light-transmitting part comprises a pressing portion and a bearing portion stacked along the thickness direction of the light-transmitting part; the pressing portion has a smaller surface area than that of the bearing portion and is configured to fit into the mounting hole on the microwave sensing apparatus, while the bearing portion is provided inside the microwave sensing apparatus;
the decorative member corresponds to the pressing portion and is configured to fit into the mounting hole.

299. The optical transceiver according to claim 297, wherein the decorative member is an acrylic sheet, and the shielding region is formed by screen printing.

300. A microwave sensing apparatus, comprising a memory and a processor;
the memory is configured to store code; and
the processor is configured to execute code in the memory to implement the microwave sensing method of any one of claims 75-106.

301. A microwave sensing apparatus, comprising a memory and a processor;
the memory is configured to store code; and
the processor is configured to execute code in the memory to implement the microwave sensing method of any one of claims 241-280.

302. A control system based on microwave sensing apparatus, comprising:
at least one microwave sensing apparatus according to any one of claims 1-74; and
at least one controlled device, wherein the controlled device is electrically connected to the microwave sensing apparatus corresponding thereto; and the working state of the controlled device is switched according to a sensing result transmitted by the microwave sensing apparatus.

303. A control system based on a microwave sensing apparatus, comprising the microwave sensing apparatus according to any one of claims 107-240; and
at least one controlled device, wherein the controlled device is electrically connected to the microwave sensing apparatus corresponding thereto; and the working state of the controlled device is switched according to a sensing result transmitted by the microwave sensing apparatus.

304. A storage medium having a program stored thereon, wherein the program, when executed by a processor, implements the microwave sensing method according to any one of claims 75-106.

305. A storage medium having a program stored thereon, wherein the program, when executed by a processor, implements the microwave sensing method according to any one of claims 241-280.
